(19) Europäisches Patentamt
European Patent Office
Office européen des brevets

(11) EP 4 769 128 A2

(12) EUROPEAN PATENT APPLICATION

(43) Date of publication:
**01.07.2026 Bulletin 2026/27**

(21) Application number: **25216219.3**

(22) Date of filing: **17.11.2025**

(51) International Patent Classification (IPC):
***G06F 9/30*** *(2018.01)* ***G06F 9/38*** *(2018.01)*

(52) Cooperative Patent Classification (CPC):
**G06F 9/3001; G06F 9/30036; G06F 9/30109; G06F 9/3851**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.12.2024 US 202419003539**

(71) Applicant: **Intel Corporation**
**Santa Clara, CA 95054 (US)**

(72) Inventors:
- **Golder, Anupam**
**Hillsboro, 97124 (US)**
- **Kim, Duhyeong**
**Hillsboro, 97124 (US)**
- **Taneja, Sachin**
**Hillsboro, 97124 (US)**
- **Kumar, Raghavan**
**Hillsboro, 97124 (US)**
- **Mathew, Sanu K.**
**Portland, 97229 (US)**

(74) Representative: **Goddar, Heinz J.**
**Boehmert & Boehmert**
**Anwaltspartnerschaft mbB**
**Pettenkoferstrasse 22**
**80336 München (DE)**

# (54) FULLY HOMOMORPHIC ENCRYPTION (FHE) OPERATIONS ON A UNIFIED FHE ACCELERATOR

(57) Techniques for fully homomorphic encryption are described. In some examples, a fully homomorphic encryption includes a butterfly compute circuitry to support a polynomial integer multiplication in response to an instance of a single instruction of a first type, wherein the instance of the single instruction is at least to include one or more fields for a register file address for a first source operand of the integer multiplication, one or more fields for a register file address for a second source operand of the integer multiplication, and one more fields for a register file address for a result of the integer multiplication, wherein the butterfly compute circuitry is to additionally support modular arithmetic operations.

EP 4 769 128 A2

## Description

BACKGROUND

Emerging accelerator architectures such as fully homomorphic encryption (FHE) and artificial intelligence (AI) strain the limits of modern silicon. Designers must maximize the number of math units to provide sufficient compute throughput while enabling the flow of operands and other program data into compute resources. Program operands and other data must flow from dynamic random access memory (DRAM) such as high bandwidth memory (HBM) to large cache like scratch pad buffers (SPAD) and from there into compute elements before they are required for execution. The movement of this data must not only be timely but, given severe bandwidth constraints, must avoid generating requests for unused data.

BRIEF DESCRIPTION OF DRAWINGS

Various examples in accordance with the present disclosure will be described with reference to the drawings, in which:

FIG. 1 illustrates examples of conventional encryption.

FIG. 2 illustrates examples of homomorphic encryption.

FIG. 3 illustrates examples acts for fully homomorphic encryption (FHE) using ring learning with errors.

FIG. 4 illustrates examples of an FHE accelerator.

FIG. 5 illustrates examples of public key generation.

FIG. 6 illustrates examples of an FHE compute engine.

FIG. 7 illustrates examples of a FHE compute engine tile.

FIG. 8 illustrates examples of register file bank to butterfly unit interconnection.

FIG. 9(A) illustrates examples of an 8x8 compute tile array.

FIG. 9(B) illustrates examples of a 6x7 compute tile array.

FIGS. 10(A)-(B) illustrate examples of a reconfigurable decimation-in-time (DIT)/ decimation-in-frequency (DIF) butterfly circuit.

FIGS. 11(A)-(D) illustrate examples of the butterfly circuit configured to perform a specific operation.

FIG. 12 illustrates examples of a butterfly datapath with carry save adder (CSA) and Montgomery reduction.

FIG. 13 illustrates examples of hardware support for multiple, distinct threads that use different resources.

FIG. 14 illustrates examples of an instruction format used by the instructions of the threads.

FIG. 15 illustrates examples of a format for a Cfetch ISA (or extension) instruction.

FIG. 16 illustrates examples of Cfetch ISA (or extension) instructions and their descriptions.

FIG. 17 illustrates examples of encodings of Cfetch ISA (or extension) instructions.

FIG. 18 illustrates examples of a format for a Mfetch ISA (or extension) instruction.

FIG. 19 illustrates examples of Mfetch ISA (or extension) instructions and their descriptions.

FIG. 20 illustrates examples of encodings of Mfetch ISA (or extension) instructions.

FIG. 21 illustrates examples of a current program for an FHE accelerator.

FIG. 22 illustrates examples of the program of FIG. 21 but optimized for SID.

FIG. 23 illustrates examples of a method for SID usage.

FIG. 24 illustrates examples of one or more supported memory instructions and their operands.

FIGS. 25-34 illustrate examples of polynomial instructions.

FIG. 35 illustrates examples of instruction queue usage.

FIG. 36 illustrates examples of Xinst dispatch.

FIG. 37 illustrates examples of a FHE program having multiple epochs.

FIG. 38 illustrates examples of a CE block.

FIG. 39 illustrates examples of a typical flow of TFHE client-side operations.

FIG. 40 illustrates the non-client side of TFHE operations.

FIGS. 41(A)-(B) illustrate examples of polynomial gadget decomposition.

FIG. 42 illustrates examples of a pconstruct instruction.

FIG. 43 illustrates examples of pconstruct logic.

FIG. 44 illustrates examples of a butterfly compute element.

FIG. 45 illustrates examples of a butterfly compute element for some modular arithmetic operations.

FIG. 46 illustrates examples of a butterfly compute element for an integer multiplication operation.

FIG. 47 illustrates examples of a pintmul instruction.

FIG. 48 illustrates examples of a butterfly compute element for right shift and masking.

FIG. 49 illustrates examples of a prshiftbitmask instruction.

FIG. 50 illustrates examples of a mstorecapture instruction.

FIG. 51 illustrates examples of a pconstgen instruction.

FIG. 52 illustrates instruction formats for pconstruct, prshiftbitmask, pintmul, mstorecapture, and pconstgen.

FIG. 53 illustrates examples of a method for performing an iteration of a blind rotation.

FIG. 54 illustrates an example computing system.

FIG. 55 illustrates a block diagram of an example processor and/or System on a Chip (SoC) that may have one or more cores and an integrated memory controller.

FIG. 56 is a block diagram illustrating a computing system 5600 configured to implement one or more aspects of the examples described herein.

FIG. 57 shows a parallel compute system according to some examples.

FIGS. 58A-58B illustrate a hybrid logical/physical view of a disaggregated parallel processor, according to examples described herein.

FIG. 59 is a block diagram illustrating the use of a software instruction converter to convert binary instructions in a source ISA to binary instructions in a target ISA according to examples.

FIG. 60 is a block diagram illustrating an IP core development system that may be used to manufacture an integrated circuit to perform operations according to some examples.

## DETAILED DESCRIPTION

The present disclosure relates to methods, apparatus, systems, and non-transitory computer-readable storage media for fully homomorphic encryption.

In previous architectures prefetching has been utilized to address bandwidth issues. Prefetching data and/or instructions can address memory latency issues, but often wastes memory bandwidth. Prefetch instructions must be inserted much earlier in a program and as a result are difficult to time relative to their subsequent use. Inserting prefetches too late in a program flow will cause the execution of the program to stall while waiting for data but inserting prefetches too early may cause the removal of other critical data from the scratchpad or cache. DRAM latency, which is intrinsically variable, makes the timing of DRAM requests particularly difficult since the compiler has no a priori knowledge of the request latency.

Another approach for FHE, AI, etc. is to use threading. Threading, including helper threads and multithreaded workload implementations provide more dynamic scheduling flexibility to respond to variable latencies but are general solutions that come with significant overhead including significant synchronization overhead and contention for shared resources.

Examples detailed herein describe the use of static instruction decomposition (SID). SID takes a monolithic program consisting of both data movement and compute instructions and has a compiler to separate the program into multiple threads with each thread responsible for a particular data movement or compute task. Each of these threads, data movement and compute, require different pipeline resources and as a result will be able to proceed simultaneously if dependencies between the threads can be decoupled. In some examples, low overhead synchronization primitives are described to enable this decoupling between these threads. SID provides the benefits of advanced compilers and dynamic execution (out of order) in a mechanism with very low hardware complexity/power. This will provide substantial performance benefits, especially in FHE workloads.

Prior to describing SID, this description will discuss FHE in general and some FHE approaches in particular. This description is not meant to be limiting (that is the principles of SID can be applied to AI, etc.), but will provide examples of different types of memory, etc. where data and/or instructions can be independently moved and/or executed.

FIG. 1 illustrates examples of conventional encryption. As shown, plaintext 101 (e.g., "126") is encrypted and then transported as ciphertext 103 (e.g., "E7L"). To perform a computation on the encrypted text, it first has to be decrypted back to plaintext 105. A computation 107 (such as multiply by 2) is performed on that plaintext 105 and the result is in plaintext 109 (e.g., "252"). This result is encrypted into ciphertext 111 to be transported and finally decrypted into plaintext 113. Unfortunately, during the computation portion the data is in plaintext (105 and 109) and is vulnerable.

Quantum computing may break this conventional encryption scheme. Improved schemes are being developed to replace the conventional scheme and allow for FHE where the data is encrypted even during a compute operation. Some improved encryption schemes use lattice-based cryptography. A benefit of lattice-based cryptography is that lattice problem hardness enables cryptographic schemes to be resistant to quantum attacks. Additionally, lattice-based cryptosystem algorithms are relatively simple and able to be run in parallel due to their dependency on operations on rings of integers for certain cryptosystems.

FHE may be paired with lattice based cryptographic systems. FHE enables arbitrary calculations on encrypted data while maintaining correct intermediate results without decrypting the data to plaintext. FIG. 2 illustrates examples of homomorphic encryption. FHE solves the problem of protecting data at all times including against an honest-but-curious attacker. FHE allows for the protection of input data, intermediate data, and output data. Hence, data is not vulnerable when it is used. As shown, plaintext 201 (e.g., "126") is encrypted and then transported as ciphertext 203 (e.g., "E7L"). Unlike the conventional encryption scheme, the ciphertext 203 does not need to be decrypted to be operated on. Rather, a compute function 207 is applied to the ciphertext 203 directly and the result of the compute function 207 is ciphertext 209. This ciphertext 209 can be transported and decrypted into plaintext 211.

A bottleneck in FHE and/or lattice-based cryptography is efficient modular polynomial multiplication. Lattice-based cryptography algorithms rely on a significant amount polynomial multiplications to encode and decode polynomial plaintext/ciphertext using key values. These keys then rely on a large number of Gaussian samples because they are required to be random polynomials.

In some examples, detailed herein a Residue Number System-based (RNS) Number Theoretic Transform (NTT) polynomial multiplier for application in lattice-based cryptography, FHE, etc. In some examples, the data comes into the system in a double CRT format described in detail below.

A lattice $L \subset \mathbb{R}^n$ is the set of all integer linear combination of basis vectors $b_1, \dots b_n \in \mathbb{R}^n$ such that $L = \{\sum a_i b_i : a_i \in \mathbb{Z}\}$. *L* is a subgroup of $\mathbb{R}^n$ that is isomorphic to $\mathbb{Z}^n$. Cryptography based on lattices exploits the hardness of two problems: Short Integer Solution (SIS) and Learning With Errors (LWE). LWE requires large keys which may be impractical in current architectures. A derivation of LWE called Ring-LWE (RLWE or ring-LWE) is used in some examples detailed herein.

Cryptosystems based on the LWE problem, the most used one, have their foundation in the difficulty of finding the secret key *sk* given (*A, pk*), where $pk = A * sk + e \bmod q$ with *pk* being a public key, e an error vector with Gaussian distribution, and *A* a matrix of constants in $\mathbb{Z}_w^{r \times n}$ chosen randomly from a uniform distribution. LWE requires large keys that in general are impractical for current designs. In RWLE *A* is implicitly defined as a vector *a* in a ring $\mathcal{R} \equiv \mathbb{Z}_q[x]/(x^n + 1)$. For a ciphertext modulus *q,* the ciphertext space is defined as $\mathcal{R}_q = \mathcal{R}/q\mathcal{R}$. The plaintext space is $\mathcal{R}_q$ meaning plaintexts are represented as length *n* vectors of integers modulus *p*.

The RLWE distribution on $\mathcal{R}_q \times \mathcal{R}_q$ consists of pairs (*a*, *t*) with $a \in \mathcal{R}_q$ chosen uniformly random and $t = a \times s + e \in \mathcal{R}_q$ where s is a secret element and e is sampled from a discrete Gaussian distribution $\mathcal{D}_\sigma$ with a standard deviation $\sigma$.

Generically, RWLE utilizes three acts - key generation, encryption, and decryption. FIG. 3 illustrates examples acts for FHE using RWLE. In some examples, at 301, RWLE key generation is performed. Key generation generates a private key and a public key. In some examples, a polynomial *a* is chosen uniformly and two polynomials $r_1$ and $r_2$ are sampled from the Gaussian distribution $\mathcal{D}_\sigma$. Polynomial $r_2$ is the private key and the two polynomials participate in the public key generation process $p \leftarrow r_1 - a \times r_2$.

In some examples, at 303, RWLE encryption is performed. Encryption encrypts an input message *m* to cipher text ($c_1$, $c_2$). In some examples, the input message is encoded into a polynomial $m_e$ using an encoder. In some examples, the cipher text *($c_1$, $c_2$)* is calculated based on the public key, the encoded message, and sampled error polynomials (e.g., ($e_1$, $e_2$, and $e_3$).

$$c_1 \leftarrow a \times e_1 + e_2$$

$$c_2 \leftarrow p \times e_1 + e_3 + m_e$$

In some examples, at 305, an encrypted message is transmitted to a recipient. In some examples, one or more operations are performed on the encrypted message such as performing a mathematical operation on the message at 307. Note that the performance could be done by the sender before transmission, by an intermediate third party (not the final recipient), or by the recipient itself.

In some examples, at 309, the encrypted message or a response thereto is received. The received message or response message is decrypted, in some examples, at 311. Decryption recovers an original message m from the cipher text ($c_1$, $c_2$). In some examples, decryption starts with the calculation of a pre-decoded polynomial $m_d$

$$m_d \leftarrow c_1 \mathrm{x}\, r_2 + c_2$$

The original message is recovered from the pre-decoded polynomial $m_d$ using a decoder. In some examples, relinearization is required during decryption.

One or more of the above acts utilizes instructions for performing the multiplication, addition, etc. using an FHE accelerator.

FIG. 4 illustrates examples of an FHE accelerator. As shown, the FHE accelerator 403 couples to one or more host processors 401 such as one or more central processing unit (CPU) cores via one or more interconnects 413.

The one or more interconnects 413 coupled to scratchpad memory 410 which handles load/stores of data and provides data for execution by the compute engine (CE) 407 comprising a plurality of CE blocks 409. In some examples, the CE blocks 409 are coupled to memory, the interconnect 413, and/or a CE control block 415. In some examples, the CE 407 can be viewed as a network-on-chip (NOC).

The scratchpad memory 410 is coupled to HBM 411 which stores a larger amount of data. In some examples, the data is distributed across HBM 411 and banks of SPAD 410. In some examples, HBM is external to the FHE accelerator 403. In some examples, some HBM is external to the FHE accelerator 403 and some HBM is internal to the FHE accelerator 403.

In some examples, a CE control block (CCB) 415 dispatches instructions and handles synchronization of data from the HBM 411 and scratchpad memory 410 for the CE 407. In some examples, memory loads and stores are tracked in the CCB 415 and dispatched across SPAD 410 for coordinated data fetch. These loads and stares are handled locally in the SPAD 410 and written into the SPAD 410 and/or HBM 411. In some examples, the CCB 415 includes an instruction decoder to decode the instructions detailed herein. In some examples, a decoder of a host processor 401 decodes the instructions to be executed by the CE 407.

In some examples, the basic organization of the FHE compute engine (CE) 407 is a wide and flexible array of functional units organized in a butterfly configuration. The array of butterfly units is tightly coupled with a register file capable of storing one or more of HE operands (e.g., entire input and output ciphertexts), twiddle factor constants, relevant public key material, etc. In some examples, the HE operands, twiddle factors, key information, etc. are stored as polynomial coefficients.

The CE 407 performs polynomial multiplication, addition, modulo reduction, etc. Given $a_i$ and $b_i$ in $\mathcal{R}_q$ , two polynomials $a(x)$ and $b(x)$ over the ring can be expressed as

$$a(x) = a_0 + a_1 \mathrm{x} + a_2 x^2 + \cdots a_{\mathrm{n}-1} x^{n-1}$$

$$b(x) = b_0 + b_1 \mathrm{x} + b_2 x^2 + \cdots b_{\mathrm{n}-1} x^{n-1}$$

In some examples, an initial configuration of the array with respect to the register file allows full reuse of the register file while processing Ring-LWE polynomials with degree up to $N$ = 16,384 and log $q$ = 512-bit long coefficients; and partial reuse beyond such parameters, for which processing ciphertexts will require data movement from and to the upper levels in the memory hierarchy.

In some examples, the compute engine is composed of 512-bit Large Arithmetic Word Size (LAWS) units organized as vectored butterfly datapaths. The butterfly units (LAWS or not) are designed to natively support operations on operands in either their positional form or leveraging Chinese Remainder Theorem (CRT) representation. In some examples, a double-CRT representation is used. The first CRT layer uses the Residue Number System (RNS) to decompose a polynomial into a tuple of polynomials with smaller moduli. The second layer converts each small polynomial into a vector of modulo integers via NTT. In the double-CRT representation, an arbitrary polynomial is identified with a matrix consisting of small integers, and this enables an efficient polynomial arithmetic by performing component-wise modulo operations. The RNS decomposition offers the dual promise of increased performance using SIMD operations along with a quadratic reduction in area with decreasing operand widths.

FIG. 5 illustrates examples of public key generation. Pseudo-random number generator (PRNG) circuitry 500 generates a pseudo-random number. In some examples, the PRNG circuitry 500 utilizes KECCAK circuitry 501 which uses a Keccak-f[] permutation (e.g., f [1600]) performed by Keccak core 505 to generate a value from seed values stored in seed register(s) 503 and Keccak state information 507. The Keccak core 505 can be configured in different SHA-3 modes. PRNG values output X bits (e.g., 32 bits) at a time as required by sampler 509 (e.g., one or more of a uniform sampler, a binomial sampler, a Gaussian sampler, a trinary sampler, and/or a rejection sampler). The sampler may AND the input bits with a mask. The sampled value(s) (mod q) are stored in key memory 513. The key memory 513 and scratchpad 410 are muxed to provide input for the CE 407.

For encryption, a public key A is sampled randomly from $\mathbb{Z}_q[x]/(x^n+1)$. The ciphertext is [$C_0$, $C_1$] = [$A * s + p * e + m, -A$]. Decryption is performed by computing $C_0 + C_1 * s$ and reduced to *modulo p*. Note that half of the ciphertext is a random sample in $\mathbb{Z}_q$.

FIG. 6 illustrates examples of an FHE compute engine. In some examples, this illustrates CE 407. The CE 407 includes a plurality of butterfly compute elements 603 and a register file 601. For example, the butterfly compute elements 603 may be in one or more arrays of butterfly elements (e.g., 8,192 elements) each implementing a DIT circuit (e.g., a 32-bit DIT circuit) that is to be used to execute vector polynomial add/multiply/multiply accumulate (MAC) operations on a polynomial ring using residue coefficient (e.g., a 32-bit reside coefficient). Note that butterfly compute elements of different sizes (e.g., 512-bit) may be used.

The polynomial is stored in the local register file (RF) 601. The RF 601 is capable, in some examples, of single cycle read/write latency to the butterfly compute elements 603 to enable high throughput operations for polynomial instructions. In some examples, a separate read/write port is also provisioned to enable communications with higher levels of the memory hierarchy such as the SPAD 410 and/or HBM 411. The RF 601 serves as the local storage polynomials including operands (a, b, c, and d), keys (e.g., sk or pk), relinearization keys, NTT twiddle-factor constants ($\omega$), etc.

To efficiently move data between the RF 601 and the butterfly compute elements 603, in some examples, a tiled CE architecture is used where an array of smaller RFs is coupled with a proper subset of BF elements. FIG. 7 illustrates examples of a FHE compute engine tile. In some examples, this is an illustration of tile 409.

As illustrated, where each compute tile is composed of a subset of the register file (shown as a plurality of register file banks 701) are coupled with butterfly compute elements 703 (e.g. 64 such elements in this illustration allow different numbers of register file banks and compute elements may be used in some examples). In some examples, each butterfly unit consumes up to 3 input operands and produces 2 output operands each cycle.

In some examples, the RF subset is organized into 4 banks of 18KB each with each memory bank comprising 16 physical memory modules of 72 words depth with 128-bit 1-read/1-write ports. The 1-read/1-write ported RF banks 701 feed each butterfly unit with 'a', 'b,' 'c,' and/or 'ω' inputs. With the two butterfly outputs (a+ω*b and a-ω*b) written to any of the four RF banks simultaneously for NTT or INTT. FIG. 8 illustrates examples of register file bank to butterfly unit interconnection showing inputs of 32-bit values of a, b, and ω from RF[1] and writes of a+ω*b and a-w*b to RF[0] and RF[3]. In some examples, SPAD 410 can read/write to any of the RF banks that are not servicing a butterfly.

For ciphertexts represented in the double-Chinese Remainder Transform (CRT) format, multiplication, addition, and/or multiply-accumulate operations are performed coefficientwise and do not require interaction between coefficients. NTT/iNTT operations require a coefficient order to be permuted after each stage and thus require data movement across the tiles in the CE 407. As a result, distribution of residue polynomials across compute tiles is important in the performance of NTT/iNTT operations. In a distributed computation, coefficients from each residue are distributed across a plurality (e.g., all) tiles and operations are performed on one residue at a time before moving on to subsequent residues. As a result, the latency of homomorphic operations decreases as the ciphertext modulus is scaled in the leveled HE schemes, due to fewer RNS residues. Further, corresponding coefficients of all residues are available in the same compute tile for operations such as fast base conversion, where coefficients from different residues interact with each other.

The modularity of the tile-based design allows for the scaling of the CE 407 based on the compute requirements of the workload. FIGS. 9(A)-(B) illustrate examples of scaling. FIG. 9(A) illustrates an 8x8 array which can be scaled down to the 6x7 array of FIG. 9(B). An extra column of tiles can be added or removed from a tile array without significantly modifying the compute element tile design. Similarly, extra rows of tiles can be added or removed from the tile array to scale the array dimension vertically. Since the inter-tile communication network is designed to connect by abutment, scaling tile array dimensions provides an elastic connectivity of tiles to neighboring tiles, while also providing an input/output path to connect to higher levels of memory.

As noted above, the compute elements use a butterfly datapath. In particular, the butterfly datapath is reconfigurable to perform polynomial arithmetic operations including decimation-in-time (DIT) and decimation-in-frequency (DIF) computations for NTT operations in FHE workloads. The butterfly datapath executes a SIMD polynomial instruction set architecture (or extension thereof) which includes instructions for polynomial addition, polynomial multiplication, polynomial multiply and accumulate, polynomial NTT, and polynomial INTT that cause a reconfiguration and polynomial operation. Note that polynomial load and store instructions may not need to use the butterfly datapath.

In some examples, a polynomial load (pload) instruction includes an opcode for loading a polynomial and one or more fields to indicate a memory source location and one or more fields to indicate a destination for the load (e.g., scratchpad, HBM, register file, etc.).

In some examples, a polynomial store (pstore) instruction includes an opcode for storing a polynomial and one or more fields to indicate a memory destination location and one or more fields to indicate a source for the store (e.g., scratchpad, HBM, register file, etc.).

In some examples, a polynomial add (padd) instruction includes an opcode for adding to source polynomials and storing the result in a destination and one or more fields to indicate the source locations and one or more fields to indicate a destination for the result (e.g., scratchpad, HBM, register file, etc.). Note that the source polynomials are usually loaded before the operation. Note that the addition is of polynomial coefficients in some examples.

In some examples, a polynomial multiplication (pmul) instruction includes an opcode for multiplying to source polynomials and storing the result in a destination and one or more fields to indicate the source locations and one or more fields to indicate a destination for the result (e.g., scratchpad, HBM, register file, etc.). Note that the source polynomials are usually loaded before the operation. Note that multiplication is of polynomial coefficients in some examples.

In some examples, a polynomial multiply and accumulation (pmac) instruction includes an opcode for multiplying to source polynomials and accumulating the result with the existing value inf the destination and storing the result in the destination and one or more fields to indicate the source locations and one or more fields to indicate the source/destination for the result (e.g., scratchpad, HBM, register file, etc.). Note that the source polynomials are usually loaded before the operation. Note that multiply-accumulate is of polynomial coefficients in some examples.

In some examples, a polynomial NTT (pNTT) instruction includes an opcode for performing a NTT operation on a polynomial (already loaded) using twiddle factors and storing the result in a destination and one or more fields to indicate the source location of one or more polynomials and an indication of the twiddle factors (or a location storing the twiddle factors) and one or more fields to indicate a destination for the result (e.g., scratchpad, HBM, register file, etc.). Note that the source polynomial(s) are usually loaded before the operation. Note that NTT is of polynomial coefficients in some examples.

In some examples, a polynomial INTT (pINTT) instruction includes an opcode for performing an INTT operation on a polynomial (already loaded) using twiddle factors and storing the result in a destination and one or more fields to indicate the source location of one or more polynomials and an indication of the twiddle factors (or a location storing the twiddle factors) and one or more fields to indicate a destination for the result (e.g., scratchpad, HBM, register file, etc.). Note that the source polynomial(s) are usually loaded before the operation. Note that NTT is of polynomial coefficients in some examples.

FIGS. 10(A)-(B) illustrate examples of a reconfigurable DIT/DIF butterfly circuit. This circuit natively computes only the DIT butterfly. A modular multiplier 1001 is coupled to an adder 1005 and subtractor 1007. Multiplexers (e.g., mux 1003 and mux 1009) are used to channel data appropriately during add, multiply, multiply-accumulate, NTT, and inverse-NTT operations. Sequential computations of DIF are supported by calculating a+b and a-b outputs followed by w*(a-b) in a subsequent cycle. Simplifying the datapath to compute only DIT natively results in a compact implementation by enabling the entire datapath to remain in carry-save format with carry-propagation relegated to the very end of the logic. FIGS. 10(A) and 10(B) differ in how data gets to the subtractor 1007.

FIGS. 11(A)-(D) illustrate examples of the butterfly circuit configured to perform a specific operation. Note that these examples are based off of FIG. 10(A) but the changes to be based on FIG. 10(B) are minimal and really only factor into FIG. 11(D) and both paths ae shown using dotted lines. In these illustrations aspects that are dashed are configured to not be used. In some examples, the subtractor is performed with using 2's complement addition.

FIG. 11(A) illustrates examples of the butterfly circuit configured to perform a modular addition of a + b. The values of a and b may be of any size such as 32-bit, 512-bit, etc. Typically, the values of a and b are integers.

FIG. 11(B) illustrates examples of the butterfly circuit configured to perform a modular multiplication of a x b. The values of a and b may be of any size such as 32-bit, 512-bit, etc. Typically, the values of a and b are integers.

FIG. 11(C) illustrates examples of the butterfly circuit configured to perform a modular multiply-accumulate of (a x b) + c. The values of a, b, and c may be of any size such as 32-bit, 512-bit, etc. Typically, the values of a, b, and c are integers.

FIG. 11(D) illustrates examples of the butterfly circuit configured to perform NTT or iNTT to generate a+ω*b and a-ω*b. The values of a, b, and ω may be of any size such as 32-bit, 512-bit, etc. Typically, the values of a, b, and ω are integers.

Both NTT and iNTT operations are important computations in FHE workloads. For this reason, previously published works use multiplexers to reconfigure a datapath to support both DIF and DIT operations. Unfortunately, this results in a substantial increase in delay and area overheads.

Using the butterfly circuit of FIG. 11(D), for a DIT operation, inputs ω and b are multiplied to obtain ω*b and then added to or subtracted from input a to produce outputs a+ωb and a-ωb. A multiplexor routes inputs directly to the adder during a polynomial add operation (note that a mux is not used in the subtraction).

Using the butterfly circuit of FIG. 11(D) a DIF operation is a two-step process. In the first step, the output a+b and a-b are computed using the adder and subtractor respectively. In the second step, the subtractor output is fed back into the multiplier to generate ω*(a-b).

In some examples, the DIT butterfly is implemented by first computing the multiplier output ($\omega$*b) in a carry-save format. This output is then reduced using Montgomery reduction, again in carry-save format. The adder input 'a' is then added into the reduced product in carry-save format using a carry-save adder (CSA) and then the carry-propagation is completed in the final output adder to generate a+ w*b.

NTT and iNTT are critical operations for accelerating FHE workloads. NTTs convert polynomial ring operands into their CRT equivalents, thereby speeding up polynomial multiplication operations from $O(n^2)$ to O(n).

FIG. 12 illustrates examples of a butterfly datapath with CSA and Montgomery reduction. The native DIT butterfly is implemented by first computing the multiplier output ($\omega$*b) in carry-save format (using carry-save adders or a carry-save multiplier). This output is then reduced using Montgomery reduction (in carry-save format). The adder input 'a' is then added into the reduced product in carry-save format using a carry-save adder (CSA) and then finally, the carry-propagation is completed in the final output adder to generate a+ w*b.

FIG. 13 illustrates examples of hardware support for multiple, distinct threads that use different resources. In some examples, the hardware support is provided in CE control block 415. As shown, each of the threads is associated with its own instruction queue of instructions to execute (memory instruction (MINST) queue 1311 for the local memory 411, cache instruction (CINST) queue 1313 for the SPAD memory 410, and execution instruction (XINST) queue 1315.

In some examples, each queue has its own engine (state machine) to maintain the queue. In some examples, such as what is illustrated, the local memory has its own engine (MFETCH engine 1301), and an engine (CFETCH engine 1303) is shared by the CINST queue 1313 and XINST queue 1315. An instruction pointer is maintained for the MFETCH engine as MQ pointer 1321, and an instruction pointer is maintained for the CFETCH engine 1303 as CQ pointer 1327.

Supporting SID architectures requires support throughout a compiler, debugger, and an instruction set architecture (ISA). Architectures that support SID may require multiple distinct ISAs or ISA extensions with one for each thread type. These ISAs (or extensions) support cross thread synchronization between these thread types to enforce cross thread data dependencies.

FIG. 14 illustrates examples of an instruction format used by the instructions of the threads. In particular, each instruction has an opcode 1403 used to at least partially define the operation to be performed upon a decoding of the instruction. In some examples, a function field (not shown) is used when the opcode 1403 is shared for a class of instructions.

An instruction may also include operand information 1405 (note that some instructions may not have operands). In this illustration there are fields for operand 1 1411, operand 2 1413, and operand N 1415. In some examples, each operand is an immediate value. For example, an operand may be a memory address, a counter value, etc. In some examples, one or more of the operands are immediates and one or more of the operands are register or memory information.

The Cfetch (cache fetch) ISA (or extension) provides loads and stores to move data between the compute element and the scratch pad. FIG. 15 illustrates examples of a format for a Cfetch ISA (or extension) instruction. The format includes a field for an opcode 1521 and one or more fields for operand information 1523 which may include or more of: 1) a local memory address field 1501, 2) a XINSTQ address field 1503, 3) a scratchpad address field 1505, 4) a write enable field 1507 to indicate if the instruction is to write to memory, 5) an instruction type field 1509, 6) an input data type field 1511 (e.g., data, instruction, metadata, routing mapping data, key generation mater, key generation seed material, etc.), 7) an index into a block field 1513, and/or 8) a register file address field 1517. FIG. 16 illustrates examples of Cfetch ISA (or extension) instructions and their descriptions. FIG. 17 illustrates examples of encodings of Cfetch ISA (or extension) instructions.

The lm_addr field provides an address to HBM 411. The ps_addr field provides an address to SPAD 410. The xq_addr field provides an address into the XinstQ 1315.

The wr_en field indicates if the instruction involves a write tom memory.

The din_mode field indicates an input data type for cfetch instructions. For example, data, instruction, metadata, routing mapping data, key generation material, key generation seed material.

The din_index field indicates an index into a data block.

The cinst_type field helps encode the cfetch instruction identifier.

The rf_addr field provides a register file address.

The Mfetch (memory fetch) ISA (or extension) provides loads and stores to move data between the scratchpad and local memory. FIG. 18 illustrates examples of a format for a Mfetch ISA (or extension) instruction. The format includes a field for an opcode 1813 and one or more fields for operand information 1815 which may include or more of: 1) a local memory address field 1801, 2) a scratchpad address field 1803, and/or 3) an op_code (function) field 1805 indicating if the instruction is an mload, mstore, or msync instruction. FIG. 19 illustrates examples of Mfetch ISA (or extension) instructions and their descriptions. FIG. 20 illustrates examples of encodings of Mfetch ISA (or extension) instructions.

The timing of short thread launches provides natural synchronization points. In some examples, SID ISAs include synchronization instructions to allow for instruction queues to be in sync. Synchronization instructions reference a memory instruction counter (MI counter 1323) and/or a cache instruction counter (CI counter 1329) and stall until the counter it is relying on hits a particular value. A CsyncM instruction has the CINST queue 1313 waiting for an Mfetch instruction to reach a particular instruction counter value. For example, CsycnM 1032 will stall the CQ pointer 1327 until the MI counter 1323 is greater than 1032. A MsyncC instruction has the MINST queue 1311 waiting for a Cfetch instruction to reach a particular instruction counter value. Note that the instruction pointers and counters are typically stored in registers.

In some examples, the CE control block 415 includes an interface unit 1350 to generate pconstruct instructions and xinst bundles. The interface unit 1350 may have one or more shadow registers, a buffer (e.g., a 4 kb buffer), etc.

An execution ISA (or extension) provides various math operations (such as the polynomial, NTT, and iNTT instructions detailed earlier) and the movement of data within the compute register file.

Programs include instructions to move data in and out of memory as well math or logic instructions for compute. In current architectures, instructions co-exist in a single monolithic instruction stream and scheduled accordingly. FIG. 21 illustrates examples of a current program for an FHE accelerator such as FHE accelerator 403. As illustrated, this program includes data movement instructions such loads to from local memory 411 to scratchpad memory 410 (MLOAD), loads from scratchpad memory 410 to a register file 601 (CLOAD), and stores from a register file 601 to scratchpad memory 410 (CSTORE) and math instructions (shown as math) that are performed in tiles 409 of the CE 407. As shown, the program is not efficient as there is a delay for data to move.

FIG. 22 illustrates examples of the program of FIG. 21 but optimized for SID. SID enables/requires the traditional program to be decomposed into different tasks with each task corresponding to system resource. In the case of the FHE accelerator 403 those resources are local memory 411, scratchpad memory 410, and compute (CE407 broken down into tiles 409 which use a register file 601 and butterfly compute units 603). The program is therefore decomposed into three threads: 1) an Mfetch thread for moving data from the local memory 411 to the scratchpad memory 410, 2) a Cfetch thread for moving data from the scratchpad memory 410 to compute 407, and 3) an execute thread for performing the compute operations. These three threads are essentially different programs with each thread being loaded separately and exclusively operating on a set of private resources. In contrast with other threading approaches the SID threads are executed in different physical regions with access to different physical resources.

Three instruction streams shown are execute (xinst) on the right, Cfetch (cinst) in the middle, and the mfetch instruction on the left. Mload instructions in the Mfetch thread are used to load data from the local memory 411 to the scratchpad 410. Note that these instructions include a source address and destination location. When those instructions are done, the CsyncM instruction can execute in the Cfetch thread. The Cfetch thread loads the data that was just loaded to the scratchpad 410 to particular register file locations in the execute thread. When those loads are done, an Ifetch instruction is used to pull math instructions from the XINST queue 1315 to the execution tiles where those math instructions are executed.

Upon the completion of the math instructions, Cstore instructions are performed to store the results of the math operations back to the scratchpad 410. Note that the Cfetch thread has the same instructions for synchronization.

FIG. 23 illustrates examples of a method for SID usage. A program having a plurality of threads is generated at 2301. The plurality of threads includes one or more threads to be executed in different physical regions with access to different resources. For example, Mfetch, Cfetch, and Execute threads are generated. The plurality of threads may be generated statically (e.g., by a compiler or by software re-configuring existing threads) or dynamically (e.g., by a just-in-time (JIT) compilation).

Instructions of the plurality of threads are decoded at 2303. In some examples, this decoding is performed on a core. In other examples, this decoding is performed on an accelerator that will execute the threads.

Each decoded instruction is placed into a queue associated with its thread's physical region and resources at 2305.

The decoded instruction using the thread's resources at 2307.

In some examples, the FHE accelerator 403 supports memory instructions and compute instructions. FIG. 24 illustrates examples of one or more supported memory instructions and their operands. A first instruction is an "xtore" instruction stores a polynomial residue from the register file 601 to a data buffer (e.g., SPAD 410).

A "move" instruction copies data from one register file back to a different register file bank in a compute tile as addressed by the source and destination fields.

A "rshuffle" instruction is a router move instruction. Rshuffle takes two register file locations from a source tile and causes the data to be sent to a destination tile's register tile. The "src" and "dest" represent particular register files. In some examples, a number of NOPs after the rshuffle are indicated in the wait_cycle operand. The data_type operand defines the data type of NTT, iNTT, or miscellaneous.

FIGS. 25-34 illustrate examples of polynomial instructions. FIG. 25 illustrates examples of a polynomial add instruction. The execution of this instruction causes two polynomials in the register file to be added together and stored in a particular memory address.

FIG. 26 illustrates examples of a polynomial subtract instruction. The execution of this instruction causes the subtraction of a polynomial in the register file from another polynomial in the register file and the result stored in a particular memory address.

FIG. 27 illustrates examples of a polynomial multiplication instruction. The execution of this instruction causes an entry-wise multiplication of two polynomials in the register file (as addressed) and the result stored in a particular memory address.

FIG. 28 illustrates examples of a polynomial multiplication instruction. The execution of this instruction causes a scaling of a polynomial in the register file by an immediate and the result stored in a particular memory address.

FIG. 29 illustrates examples of a polynomial multiplication and accumulation (MAC) instruction. The execution of this instruction causes two polynomials of the register file to be multiplied entry-wise and added to an accumulator polynomial and the result stored in a particular memory address.

FIG. 30 illustrates examples of a polynomial multiplication and accumulation (MAC) instruction. The execution of this instruction causes a scaling of a polynomial in the register file by an immediate and the result added to an accumulator polynomial stored in a particular memory address.

FIG. 31 illustrates examples of an NTT instruction. The execution of this instruction causes one state of an NTT operation to be performed on an input polynomial.

FIG. 32 illustrates examples of an iNTT instruction. The execution of this instruction causes one state of an iNTT operation to be performed on an input polynomial.

FIG. 33 illustrates examples of a twiddle factor generation instruction. The execution of this instruction causes a computation of twiddle factors for an NTT stage.

FIG. 34 illustrates examples of a twiddle factor generation instruction. The execution of this instruction causes a computation of twiddle factors for an iNTT stage.

In some examples, the FHE 405 supports multiple mechanisms to reduce code size when executing streamed FHE workloads. A first mechanism is to use Ifetch instructions with a XinstQ pointer to specify a bundle to be dispatched. The use of indirection in the Ifetch instruction allows bundles stored in the XinstQ to be reused and reduces total Xinst size. A second mechanism is the use of epochs. An epoch is a large program segment (e.g., ~1 billion instructions) that can exit without the loss of any register file/SPAD/ or memory state, but resets instruction fetch structures like the CinstQ and MinstQ pointers. This allows large programs to be divided into multiple epochs and even allows the implementation of loop-like idioms through the re-execution of a single epoch multiple times.

FIG. 35 illustrates examples of instruction queue usage. As shown earlier, within the CCB 415 are three memory structures that store instructions for the CE 407, the MinstQ 1311, CinstQ 1313, and XinstQ 1315. The CCB 415 fetches instructions from these queues and dispatches those instructions to the memory system (e.g., HMB 411 or SPAD 409) or the CE 407 as appropriate. As the CCB 415 executes instructions in the memory and/or cache instruction queues (e.g., MinstQ 1311 and/or CinstQ 1313) new cache instructions (Cinsts) and/or memory instructions (Minsts) must be fetched. These are streamed into the MinstQ 1311 and CinstQ 131 under the control of the CCB 415.

In contrast, in some examples, core instructions (Xinsts - e.g., math, etc. instructions) can be reused within the XinstQ 1315 through the use of an Ifetch instruction. The Ifetch instruction can refer to specific bundles in the XinstQ 1315 that need to be dispatched. In this example, Ifetch 3 specifies that Xinst bundle 3 should get dispatched into the CE 407.

As an Ifetch instruction can specify Xinst bundles (e.g., using xq_addr), the movement of Xinsts into the XinstQ 1315 are explicitly controlled rather than streamed through an additional instruction (Xinstfetch) which specifies a memory location (src) and a region of the XinstQ 1315 (dst) to specify the transfer of instructions from memory 411 into the XinstQ 1315. A bundle in the XinsQ 1315 can be re-referenced. In this example, the CinstQ 1313 includes two Ifetch instructions that reference bundle three.

In some examples, each instruction (or bundle) has an associated valid bit 3501. An instruction fetch clears an associated valid bit until instructions have been successfully fetched. The dispatching of pointers stall when the valid bit is cleared.

In some examples, the streaming from MinstQ 1311 and CInstQ 1315 "ping-pong." The MinstQ 1311 and CInstQ 1315 are streamed sequentially. When a progress pointer, MCptr or CCptr crosses a region boundary (e.g., a watermark) 3503 (delineating regions (shown as regions 0 and 1) the other region is fetched. For example, when the MCptr or the CCptr points to region 1, then instructions are fetched for region 0.

FIG. 36 illustrates examples of Xinst dispatch. An Ifetch instruction is dispatched for a bundle in the Xinstq at 3601. As noted above, an Ifetch instruction can address a bundle of instructions in the Xinstq.

The bundle is fetched according to the Ifetch instruction at 3603.

The fetched bundle is dispatched to the CE at 3605 and buffered in the CE to allow synchronized dispatch across the CE at 3607.

The bundle is executed in the CE at 3609.

The use of indirection in the Ifetch instruction allows bundles stored in the XinstQ 1315 to be reused and reduces total XinstQ 1315 size. This allows large programs to be divided into multiple epochs and even allows the implementation of loop-like idioms through the re-execution of a single epoch multiple times.

In some examples, Cinsts and Minsts use sync instructions (e.g., CsyncM, MsyncC, etc.) to explicitly encode dependencies and locations in memory 410 and the SPAD 411. This may make supporting the reuse of Cinst and Minst for small groups of instructions difficult. In some examples, the FHE accelerator 403 supports the reuse of these instructions at an epoch (e.g., on the order of hundreds of thousands or a million instructions level. An epoch is a large segment of an FHE program. In some examples, a program includes multiple epochs.

FIG. 37 illustrates examples of a FHE program having multiple epochs. As illustrated, the FHE program 3701 comprises four epochs 3703 with each epoch has an exit. In some examples, the exit instruction clears the CinstQ(s) 1313/MinstQ(s) 1311 and resets their respective pointers (CQ pointer 1327 and MQ pointer 1321). The exit instruction leaves the overall RF 601, SPAD 411, and memory 411 state intact. This allows the reset of the sync pointers (e.g., instruction pointers Clptr, MIptr, and/or counter pointers MCptr and CCptr for MsynC and CsyncM comparisons), which would otherwise prevent the assembly of very large programs, but retains memory state to ensure that the program can continue to make forward progress (e.g., allowing a next epoch to continue execution).

In some examples, an epoch has a minimum number of cycles to execute (e.g., 64 cycles). The exit instruction can help to maximize the efficiency of short and/or incomplete epochs. In some examples, the exit instruction has an opcode and a minor opcode (function) when it is shared for a class of instructions. For example, there may be an exit instruction for bundles and an exit instruction for epochs that have the same opcode, but different minor opcodes. In some examples, the same exit instruction may be used for both cases.

Cinsts and Minsts can be reused at the epoch level, since a single epoch could be executed several times to complete a much larger program, providing some of the functionality convention programs get from loops. Xinsts can be reused by providing a level of indirection.

Compute intensive workloads such as deep learning (DL) has motivated a structured compute model offered by GPUs. Compute tasks like matrix math are decomposed into independent threads, largely isolated during execution on one of many compute units. As DL algorithms scale, data movement across the NOC (Network On Chip) from memory and between compute units, limit future performance. Workloads like fast Fourier transforms (FFT) such as used in image and signal processing, emerging DL algorithms based on Clifford algebras, or state space models are already constrained by NOC data movement.

Prescient computing relies on the regular structure of compute workloads to separate data movement from math or logic (e.g., Boolean) instructions. Isolated from the variable latency of memory, latencies within the compute units can be carefully analyzed exposing the exact timing of data movement requests. Together these allow data movement routing solutions to be analyzed and constructed at compile time. Using this analysis, a pre-plan of data movement in the network can be made which mitigates a mesh's Achilles heel of high latency and contention. For example, performing the large data shuffles required for FFTs can be pre-planned (e.g., planned at compilation).

To enable compile time planning of data movement the NOC data routes available, unpredictable latencies should be minimized to avoid timing disruptions there should be a low latency path (from memory) into the network routers to allow different network routing solutions to be loaded when executing different algorithms. The single largest source of latency variability is the DRAM data access due to design features like refresh. The architecture detailed, for example with respect to FIG. 4 decouples data movement to and from memory (e.g., scratchpad 410 and/or HBM 411) and operations within the compute engine 407 NOC can dramatically improve the predictability of NOC data movement timing.

FIG. 22 illustrates how a compiler might partition a traditional program into separate threads for controlling data movement (minst, cinst) and another thread for controlling math and shuffling operations that use the NOC (note that no shuffling operations are shown in the figure).

With predictable execution latencies in the CE blocks 409 (or tiles), the tiles in the compute engine 407 can be programmed to be self-synchronizing. To support self-synchronization, each CE block 409 may include support that has not been previously discussed. FIG. 38 illustrates examples of a CE block.

As shown in FIG. 38, a CE block 409 includes register file banks 701 (as shown earlier) and execution unit(s) 3803. In some examples, the execution unit(s) 3803 include butterfly units 703. The execution unit(s) 3803 may also include non-butterfly units such as data movement units. In some examples, the butterfly units 703 can be used to move data.

A CE block 409 may also include routing table storage 3805 to store one or more routing tables 3807. A routing table 3807 stores one or more pre-planned routes for data movement. In some examples, a CE block 409 includes one or more configurable timers (e.g., registers) to allow for self-synchronization.

Several FHE schemes based on Lattice-based Cryptography (LBC) have been proposed, such as, Brakerski-Gentry-Vaikunthanathan (BGV), Cheon-Kim-Kim-Song (CKKS), Chillotti-Gama-Georgieva-Izabachène (CGGI, also known as Torus FHE or TFHE), etc. Among these schemes, TFHE is a cryptosystem based on the hardness assumptions of standard/ring learning with errors (LWE/RLWE) problems with binary secret key distribution with a focus on bootstrapping performance. Prior to TFHE, FHEW (Fastest Homomorphic Encryption in the West) cryptosystem held the record for the fastest bootstrapping performance on a CPU (0.5 s per gate compared to 6 min for BGV at that time on a CPU) which was achieved by providing a new homomorphic operation for the simplest form of bootstrappable computation (i.e., computation of a universal binary gate) and a new refresh operation (i.e., decryption and decoding) for ciphertexts via a homomorphic accumulator. TFHE was initially proposed as an improvement to this FHEW scheme by further optimizing the homomorphic accumulator and leveraging properties of binary secret keys to provide the fastest bootstrapping performance on a CPU (10 ms per gate).

TFHE can evaluate arbitrary-depth Boolean circuits on encrypted data by performing bootstrapping after each gate evaluation to limit error growth and are typically referred to as bit-wise schemes. Compared to the word-wise schemes (which encrypt and operate on word-sized integers, e.g., BGV and CKKS), TFHE benefits include:

- faster bootstrapping allowing the bootstrapping operation to be ubiquitous, leading to easy composability for arbitrary number of computations. Word-wise schemes on the other hand require explicit computation depth management and careful placement of expensive bootstrapping.

- the ability to evaluate non-linear functions while performing bootstrapping. Word-wise schemes employ polynomial approximations of such functions, leading to precision loss while incurring performance overheads.

- smaller (MB vs. GB) public keys compared to BGV, CKKS leading to lower IO latency overheads.

- Highly efficient encrypted comparison operations enabling efficient encrypted database lookups.

TFHE cryptosystem requires three types of ciphertexts, namely, LWE (a vector of word-sized elements which encrypt the encoded cleartext bits or the binary RLWE secret key bits under a binary LWE secret key), RLWE (two ring polynomials which encrypt the blindly rotated look-up table (LUT) containing the output of the decryption operation), and RGSW (ring variant of Gentry-Sahai-Waters scheme - a matrix of ring polynomials which encrypt the binary LWE secret key bits under the binary RLWE secret key). The differences among these ciphertexts are based on the defined ciphertext operations (LWE×LWE or RLWE×RLWE is not defined, but RLWE×RGSW is defined).

In some examples, there are two sides of operations in a TFHE cryptosystem - a client side and a non-client side. FIG. 39 illustrates examples of a typical flow of TFHE client-side operations. On the client side, there is a setup phase that performs a parameter setup 3901 for a security level. The parameters are used for secret key generation 3903 to generate an LWE secret key 3905 and a RLWE secret key 3907 (used for LWE and RLWE encryptions, respectively).

The LWE secret key 3905 and RLWE secret key 3907 are used to generate public keys. RGSW encryption 3909 is used to generate a bootstrapping key 3913 and LWE encryption 3911 is used to generate a key switching key 3915. The uses of these keys will be detailed below. The key switching key 3915 is generated by encrypting the RLWE secret key 3907 using the LWE secret key 3905 and the bootstrapping key 3913 is generated by encrypting the LWE secret key 3905 using the RLWE secret key 3907.

A data encryption phase (used to encrypt all user data and done frequently) includes LWE encryption 3911 of all cleartext bits 3921 using the LWE secret key 3905 to generate LWE ciphertext 3923.

FIG. 40 illustrates the non-client side of TFHE operations. The non-client side can be divided into three parts: gate evaluation, bootstrapping, and key switching. Bootstrapping consumes most of the latency for this side. In some examples, the FHE accelerator 430 enables at least the non-client side of TFHE operations.

Gate evaluation performs a variety of LWE ciphertext operations based on the binary gate being evaluated and involves element-wise integer addition (intadd), subtraction (intsub), or scalar multiplication (intmul) of LWE ciphertexts (typically modulo a power-of-two modulus, hence using integer arithmetic). For example, LWE ciphertext 1 4003 and LWE ciphertext 2 4005 have an encrypted gate evaluation 4007 performed on them to generate a resultant LWE ciphertext 4009.

Bootstrapping homomorphically decrypts the resultant LWE ciphertext 4009 obtained from gate evaluation and produces an LWE ciphertext encrypted 4019 under the RLWE secret key 3907. Bootstrapping uses a blind rotation 4013 and a RLWE-to-LWE sample extraction 4017. Blind rotation 4013 performs encrypted rotation of a gate-dependent lookup table (LUT) 4011 using the resultant LWE ciphertext 4009 and the bootstrapping key 3913 provided by the client to generate a blindly rotated gate LUT 4015. This operation involves: (a) ciphertext-dependent scalar-to-polynomial conversions of LWE ciphertext elements, (b) coefficient-wise gadget decompositions of polynomials, (c) coefficient-wise polynomial addition (modadd)/subtract(modsub)/multiplication(modmul)/multiply-accumulate(modmac) using modular arithmetic and is the most compute-intensive portion of the non-client side.

RLWE-to-LWE sample extraction 4017 performs extraction of an LWE ciphertext 4019 from an RLWE ciphertext (to extract out a specific coefficient of the underlying plaintext polynomial) encrypted under the RLWE secret key 3907 and can be merged with a key switching operation by interchanging the steps and/or generating key switching key 3915 in the appropriate order.

Lastly, LWE key switching 4021 converts the extracted LWE ciphertext 4019 encrypted under the RLWE secret key 3907 to an LWE ciphertext 4023 under the original LWE secret key 3905 using the key switching key 3915 provided by the client. This operation involves: (a) element-wise gadget decomposition of the extracted LWE ciphertext elements, (b) scalar-to-vector conversion of decomposed elements, and (c) elementwise integer multiply-accumulate (combination of intadd and intmul) of two vectors (one with small scalar elements), and (d) elementwise integer subtraction (intsub).

While an NTT-based FHE accelerator designed for BGV/CKKS schemes can support some of the TFHE micro-operations mentioned above due to existence of similar operations, such as, polynomial modadd/modsub/modmul/modmac, features for some of the crucial operations are typically non-existent, such as: (1) intadd/intsub/intmul, (2) polynomial gadget decomposition, and (3) scalar-to-polynomial conversion.

FIGS. 41(A)-(B) illustrate examples of polynomial gadget decomposition. FIG. 41(A) shows polynomial gadget decomposition to create two polynomials of half the bit widths by decomposing each coefficient and extracting the appropriate bits. As shown, the example polynomial has 4 coefficients. These coefficients are converted into an 8-bit binary representation (note this is unsigned). Each of these 8-bit representations are split into two levels of four bits each (a high and low). The high bits of each coefficient are stored in one polynomial and the low bits of each coefficient are stored in a different polynomial.

FIG. 41(B) illustrates how a scalar element from the LWE ciphertext is used to construct a polynomial (note that the sign change occurs due to the polynomial being reduced by the polynomial modulus).

In some examples, the FHE accelerator 403 supports a polynomial construction instruction (pconstruct). The execution of this instruction causes the construction of a monomial (a polynomial with only one non-zero coefficient) based on one or more instruction fields that specify whether a chunk of the polynomial should have a non-zero value (based on is_chunk), whether the current tile is specified (based on dst_tile_num), whether the current butterfly is specified (based on dst_bf_num), and whether the value of the non-zero coefficient should be +1 or -1 (based on sign) and storing it at a new address (based on dest_top). Each polynomial is constructed on a chunk-by-chunk basis. FIG. 42 illustrates examples of a pconstruct instruction. In some examples, the monomial is of the form $X^a$, $a \in \mathbb{Z}_{2N}$ in the coefficient-domain representation, while accounting for negative wrapping around the polynomial modulus of the form $X^N + 1$ for $a \geq N$, where $N$ is the degree of the polynomial modulus.

In some examples, to enable operation of the pconstruct instruction, at the compute engine level, additional logic is placed at the input of each butterfly compute element. FIG. 43 illustrates examples of pconstruct logic. As shown, there is a logical AND that takes in information is_chunk, dst_tile_num, dst_bf_num, sign, etc. to determine which tile and butterfly should generate the non-zero coefficient and outputs the result by selecting between 32-bit data elements to serve as a and b inputs to the butterfly compute element.

To enable TFHE support on the FHE accelerator 403, in some examples, the butterfly compute element is modified to support: (1) integer multiplication by bypassing the modular reduction stages, and (2) bit shifting and bit masking through additional multiplexer stages, which supports the gate evaluation, gadget decomposition, and key switching operations detailed above. In some examples, one or more instructions are provided such as a polynomial integer multiplication (pintmul) instruction and a polynomial right shift bitmask (prshiftbitmask) instruction.

In some examples, a polynomial construct (pconstruct) instruction may be used to construct a polynomial based on an LWE ciphertext element (which enables scalar-to-polynomial conversion) utilizing a low-level modular subtraction (modsub) operation in the butterfly compute element. In some examples, pconstruct instructions are generated on-die which enables both the gate evaluation and bootstrapping operations without any off-chip data transfer.

FIG. 44 illustrates examples of a butterfly compute element. This butterfly compute element can take in input data such a b, a, w, and q and is one of the butterfly compute elements 603, 703, etc. in some examples. The butterfly circuitry can compute at least a (a + wb) mod q, (a - wb) mod q, and a right shifting and bit masking and the appropriate operations can be selected through the op_code. Note that by changing values of a, b, w, or q, the butterfly compute element supports modular addition, modular subtraction, modular multiply accumulate, butterfly, etc. The "op_code" corresponds to certain instructions such as an integer multiplication, etc.

FIG. 45 illustrates examples of a butterfly compute element for some modular arithmetic operations. This butterfly compute element has modular arithmetic operations and carry-save datapath abstracted out for clarity. While performing modular arithmetic operations (e.g., modadd/modsub/modmac/butterfly), the outputs of the modular reduction stages, i.e., (a + wb) mod q and (a - wb) mod q constitute the outputs of the butterfly compute element, i.e., top output (out_top) and bottom output (out_bot). Integer add (intadd) and integer sub (intsub) which perform addition and subtraction modulo $2^{32}$ can be supported by *modadd* and *modsub* by setting $q = 0$. For example, setting w to 1 and q to 0, (a + wb) mod q would perform an integer add.

FIG. 46 illustrates examples of a butterfly compute element for an integer multiplication operation. For integer multiplication, the 64-bit output of the first multiplier (result of multiplication of up to two 32-bit inputs) *int_wb* is truncated to the lower 32-bits (e.g., *int_wb [31:0]*) and sent to the output out_top. This enables integer multiplications (*intmul*) of small integers (on typically 10-bit to 14-bit operands required in TFHE operations).

In some examples, a polynomial integer multiplication (pintmul) instruction is used to cause the butterfly compute element to perform the operation. FIG. 47 illustrates examples of a pintmul instruction. The execution of a pintmul instruction causes an entry-wise integer multiplication of two polynomials in the register file (e.g., register file 601 or register file banks 701) and stores the result in a new address of the register file. In some examples, the pintmul instruction uses the format of FIG. 14. In some examples, the *intmul* operation of the butterfly compute element performs integer multiplications preserving the lower 32 bits of the operation.

FIG. 48 illustrates examples of a butterfly compute element for bit shifting and masking. For bit shifting and masking, the lower 5 bits of *w* are used to select the shift amount (by any amount from 0 to 31 bits) and *b* is used as the mask. This enables gadget decomposition by using appropriate bit shifts and masks.

FIG. 49 illustrates examples of a prshiftbitmask instruction. The execution of a prshiftbitmask instruction causes an entry-wise right shifting and then bitmasking of a polynomial in the register file and stores the result at a new address. The shift amount is provided by an operand. The mask is encoded using an immediate in some examples. In some examples, prshiftbitmask can be used to appropriately right shift and bitmask (with arbitrary 32-bit masks) polynomial coefficients based on the gadget parameters (i.e., decomposition base and number of decomposition levels).

In some examples, to perform both TFHE gate evaluation and bootstrapping operations while avoiding the bottleneck of off-chip data transfer xinst bundles for polynomial construction are generated on chip. In some examples, two instructions are provided to help with this task - an instruction to store a polynomial chunk in a shadow register (mstorecapture) and an instruction to generate pconstruct instructions (pconstgen).

An execution of the mstorecapture instruction stores a polynomial chunk from a buffer to a register (e.g., stores 1K-bit polynomial chunk from mstore register). FIG. 50 illustrates examples of a mstorecapture instruction.

An execution of the pconstgen instruction creates a xinst bundle containing two polynomial construction instructions. The xinst bundle may also have NOPs. FIG. 51 illustrates examples of a pconstgen instruction.

FIG. 52 illustrates instruction formats for pconstruct, prshiftbitmask, pintmul, mstorecapture, and pconstgen.

An example of an execution sequence to enable a transition between TFHE operations is as follows:

(1) LWE ciphertexts are scanned into and captured by an interface unit, and then mload instructions for the interface unit (e.g., interface unit 1350) that include one or more shadow registers are issued to load the data into a SPAD RF.

(2) cload instructions are sent via a *cinst* bundle (SPAD instructions) to SPAD units to load the data into the CE RF from the SPAD RF.

(3) Appropriate compute instructions for gate evaluation (e.g., padd, psub, pintmul, based on the Boolean gate) are then sent via *xinst* bundles (CE instructions) to CE tile pairs to perform the gate evaluation operations.

(4) cstore instructions are sent via *xinst* bundle to CE tile pairs to store the resultant LWE ciphertext to SPAD units.

(5) mstore instructions are sent via *cinst* bundle to SPAD units to store the resultant LWE ciphertext chunks into the interface buffer.

(6) mstorecapture instruction is sent to interface to capture the specified chunk of the interface buffer content into a shadow register.

(7) pconstgen instruction is sent to interface to grab a single 32b coefficient and generate two polynomial construction instructions (*pconstruct_instruction_0* and *pconstruct_instruction_1*) and the associated *xinst* bundle by determining the destination tile number and destination butterfly where a non-zero coefficient needs to be generated based on:

a. either the normal order or bit-reversed order permutation of coefficient-domain polynomials, and

b. a tile pair index (tileid) and a butterfly index (bfid) assignment in the CE subsystem implementation.

(8) The generated instruction bundle is then sent to the CE tile pairs as an *xinst* bundle with two pconstruct instructions (to generate two chunks of a 1K-dimensional polynomial) and 14 single-cycle nop instructions. From that point, an iteration of blind rotation starts. Also, in the next cycle, the shadow register shifts in the next 32b coefficient for the next iteration.

FIG. 53 illustrates examples of a method for performing an iteration of a blind rotation. In some examples, a kernel composed of compute instructions for a single iteration of blind rotation (note that bootstrapping is composed of *n* sequential iterations of blind rotation, where $n \geq 500$ is the dimension of mask vector in LWE ciphertexts) performs the method. A LWE element is subjected to a scalar-to-polynomial conversion at 5301. For example, pconstruct is called for the conversion. The polynomial is then subjected to a NTT conversion at 5303 (e.g., at least using an NTT instruction). Pointwise polynomial multiplication is performed on the converted polynomial with a RLWE ciphertext from a previous iteration of blind rotation at 5305. The result of the multiplication is converted using an INTT conversion at 5307. Gadget decomposition is then performed at 5309. For example, one or more prshiftbitmask operations are performed.

A round of NTT conversion is performed on the decomposed data at 5311. Finally, a polynomial multiplication and accumulation operation is used to perform matrix-vector multiplication of polynomials in the NTT domain representation. The MAC uses the bootstrapping key for the current iteration and a RLWE ciphertext from a previous iteration.

RF read conflicts (e.g., when two operands of an instruction need to come from the same RF bank) and conversion to and from Montgomery representation are explicitly managed by appropriately issuing move and pmuli instructions in between other instructions, respectively.

Some examples are implemented in one or more computer architectures, cores, accelerators, etc. Some examples are generated or are IP cores. Some examples utilize emulation and/or translation.

Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

Example Systems

FIG. 54 illustrates an example computing system. Multiprocessor system 5400 is an interfaced system and includes a plurality of processors or cores including a first processor 5470 and a second processor 5480 coupled via an interface 5450 such as a point-to-point (P-P) interconnect, a fabric, and/or bus. In some examples, the first processor 5470 and the second processor 5480 are homogeneous. In some examples, first processor 5470 and the second processor 5480 are heterogenous. Though the example multiprocessor system 5400 is shown to have two processors, the system may have three or more processors, or may be a single processor system. In some examples, the computing system is a system on a chip (SoC).

Processors 5470 and 5480 are shown including integrated memory controller (IMC) circuitry 5472 and 5482, respectively. Processor 5470 also includes interface circuits 5476 and 5478; similarly, second processor 5480 includes interface circuits 5486 and 5488. Processors 5470, 5480 may exchange information via the interface 5450 using interface circuits 5478, 5488. IMCs 5472 and 5482 couple the processors 5470, 5480 to respective memories, namely a memory 5432 and a memory 5434, which may be portions of main memory locally attached to the respective processors.

Processors 5470, 5480 may each exchange information with a network interface (NW I/F) 5490 via individual interfaces 5452, 5454 using interface circuits 5476, 5494, 5486, 5498. The network interface 5490 (e.g., one or more of an interconnect, bus, and/or fabric, and in some examples is a chipset) may optionally exchange information with a co-processor 5438 via an interface circuit 5492. In some examples, the co-processor 5438 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 5470, 5480 or outside of both processors, yet connected with the processors via an interface such as P-P interconnect, such that either or both processors' local cache information may be stored in the shared cache if a processor is placed into a low power mode.

Network interface 5490 may be coupled to a first interface 5416 via interface circuit 5496. In some examples, first interface 5416 may be an interface such as a Peripheral Component Interconnect (PCI) interconnect, a PCI Express interconnect or another I/O interconnect. In some examples, first interface 5416 is coupled to a power control unit (PCU) 5417, which may include circuitry, software, and/or firmware to perform power management operations with regard to the processors 5470, 5480 and/or co-processor 5438. PCU 5417 provides control information to a voltage regulator (not shown) to cause the voltage regulator to generate the appropriate regulated voltage. PCU 5417 also provides control information to control the operating voltage generated. In various examples, PCU 5417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 5417 is illustrated as being present as logic separate from the processor 5470 and/or processor 5480. In other cases, PCU 5417 may execute on a given one or more of cores (not shown) of processor 5470 or 5480. In some cases, PCU 5417 may be implemented as a microcontroller (dedicated or general-purpose) or other control logic configured to execute its own dedicated power management code, sometimes referred to as P-code. In yet other examples, power management operations to be performed by PCU 5417 may be implemented externally to a processor, such as by way of a separate power management integrated circuit (PMIC) or another component external to the processor. In yet other examples, power management operations to be performed by PCU 5417 may be implemented within BIOS or other system software.

Various I/O devices 5414 may be coupled to first interface 5416, along with a bus bridge 5418 which couples first interface 5416 to a second interface 5420. In some examples, one or more additional processor(s) 5415, such as co-processors, high throughput many integrated core (MIC) processors, GPGPUs, accelerators (such as graphics accelerators or digital signal processing (DSP) units), field programmable gate arrays (FPGAs), or any other processor, are coupled to first interface 5416. In some examples, second interface 5420 may be a low pin count (LPC) interface. Various devices may be coupled to second interface 5420 including, for example, a keyboard and/or mouse 5422, communication devices 5427 and storage circuitry 5428. Storage circuitry 5428 may be one or more non-transitory machine-readable storage media as described below, such as a disk drive or other mass storage device which may include instructions/code and data 5430 and may implement the storage 5403 in some examples. Further, an audio I/O 5424 may be coupled to second interface 5420. Note that other architectures than the point-to-point architecture described above are possible. For example, instead of the point-to-point architecture, a system such as multiprocessor system 5400 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

FIG. 55 illustrates a block diagram of an example processor and/or SoC 5500 that may have one or more cores and an integrated memory controller. The solid lined boxes illustrate a processor and/or SoC 5500 with a single core 5502(A), system agent unit circuitry 5510, and a set of one or more interface controller unit(s) circuitry 5516, while the optional addition of the dashed lined boxes illustrates an alternative processor and/or SoC 5500 with multiple cores 5502(A)-(N), a set of one or more integrated memory controller unit(s) circuitry 5514 in the system agent unit circuitry 5510, and special purpose logic 5508, as well as a set of one or more interface controller unit(s) circuitry 5516. Note that the processor and/or SoC 5500 may be one of the processors 5470 or 5480, or co-processor 5438 or 5415 of FIG. 54.

Thus, different implementations of the processor and/or SoC 5500 may include: 1) a CPU with the special purpose logic 5508 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like (which may include one or more cores, not shown), and the cores 5502(A)-(N) being one or more general purpose cores (e.g., general purpose in-order cores, general purpose out-of-order cores, or a combination of the two); 2) a co-processor with the cores 5502(A)-(N) being a large number of special purpose cores intended primarily for graphics and/or scientific (throughput); and 3) a co-processor with the cores 5502(A)-(N) being a large number of general purpose in-order cores. Thus, the processor and/or SoC 5500 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 5500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 5504(A)-(N) within the cores 5502(A)-(N), a set of one or more shared cache unit(s) circuitry 5506, and external memory (not shown) coupled to the set of integrated memory controller unit(s) circuitry 5514. The set of one or more shared cache unit(s) circuitry 5506 may include one or more mid-level caches, such as level 2 (L2), level 3 (L3), level 4 (L4), or other levels of cache, such as a last level cache (LLC), and/or combinations thereof. While in some examples interface network circuitry 5512 (e.g., a ring interconnect) interfaces the special purpose logic 5508 (e.g., integrated graphics logic), the set of shared cache unit(s) circuitry 5506, and the system agent unit circuitry 5510, alternative examples use any number of well-known techniques for interfacing such units. In some examples, coherency is maintained between one or more of the shared cache unit(s) circuitry 5506 and cores 5502(A)-(N). In some examples, interface controller unit(s) circuitry 5516 couple the cores 5502(A)-(N) to one or more other devices 5518 such as one or more I/O devices, storage, one or more communication devices (e.g., wireless networking, wired networking, etc.), etc.

In some examples, one or more of the cores 5502(A)-(N) are capable of multi-threading. The system agent unit circuitry 5510 includes those components coordinating and operating cores 5502(A)-(N). The system agent unit circuitry 5510 may include, for example, power control unit (PCU) circuitry and/or display unit circuitry (not shown). The PCU may be or may include logic and components needed for regulating the power state of the cores 5502(A)-(N) and/or the special purpose logic 5508 (e.g., integrated graphics logic). The display unit circuitry is for driving one or more externally connected displays.

The cores 5502(A)-(N) may be homogenous in terms of instruction set architecture (ISA). Alternatively, the cores 5502(A)-(N) may be heterogeneous in terms of ISA; that is, a subset of the cores 5502(A)-(N) may be capable of executing an ISA, while other cores may be capable of executing only a subset of that ISA or another ISA.

FIG. 56 is a block diagram illustrating a computing system 5600 configured to implement one or more aspects of the examples described herein. The computing system 5600 includes a processing subsystem 5601 having one or more processor(s) 5602 and a system memory 5604 communicating via an interconnection path that may include a memory hub 5605. The memory hub 5605 may be a separate component within a chipset component or may be integrated within the one or more processor(s) 5602. The memory hub 5605 couples with an I/O subsystem 5611 via a communication link 5606. The I/O subsystem 5611 includes an I/O hub 5607 that can enable the computing system 5600 to receive input from one or more input device(s) 5608. Additionally, the I/O hub 5607 can enable a display controller, which may be included in the one or more processor(s) 5602, to provide outputs to one or more display device(s) 5610A. In some examples the one or more display device(s) 5610A coupled with the I/O hub 5607 can include a local, internal, or embedded display device.

The processing subsystem 5601, for example, includes one or more parallel processor(s) 5612 coupled to memory hub 5605 via a bus or communication link 5613. The communication link 5613 may be one of any number of standards-based communication link technologies or protocols, such as, but not limited to PCI Express, or may be a vendor specific communications interface or communications fabric. The one or more parallel processor(s) 5612 may form a computationally focused parallel or vector processing system that can include a large number of processing cores and/or processing clusters, such as a many integrated core (MIC) processor. For example, the one or more parallel processor(s) 5612 form a graphics processing subsystem that can output pixels to one of the one or more display device(s) 5610A coupled via the I/O hub 5607. The one or more parallel processor(s) 5612 can also include a display controller and display interface (not shown) to enable a direct connection to one or more display device(s) 5610B.

Within the I/O subsystem 5611, a system storage unit 5614 can connect to the I/O hub 5607 to provide a storage mechanism for the computing system 5600. An I/O switch 5616 can be used to provide an interface mechanism to enable connections between the I/O hub 5607 and other components, such as a network adapter 5618 and/or wireless network adapter 5619 that may be integrated into the platform, and various other devices that can be added via one or more add-in device(s) 5620. The add-in device(s) 5620 may also include, for example, one or more external graphics processor devices, graphics cards, and/or compute accelerators. The network adapter 5618 can be an Ethernet adapter or another wired network adapter. The wireless network adapter 5619 can include one or more of a Wi-Fi, Bluetooth, near field communication (NFC), or other network device that includes one or more wireless radios.

The computing system 5600 can include other components not explicitly shown, including USB or other port connections, optical storage drives, video capture devices, and the like, which may also be connected to the I/O hub 5607. Communication paths interconnecting the various components in FIG. 56 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link™ (CXL™) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 5612 may incorporate circuitry optimized for graphics and video processing, including, for example, video output circuitry, and constitutes a graphics processing unit (GPU). Alternatively or additionally, the one or more parallel processor(s) 5612 can incorporate circuitry optimized for general purpose processing, while preserving the underlying computational architecture, described in greater detail herein. Components of the computing system 5600 may be integrated with one or more other system elements on a single integrated circuit. For example, the one or more parallel processor(s) 5612, memory hub 5605, processor(s) 5602, and I/O hub 5607 can be integrated into a system on chip (SoC) integrated circuit. Alternatively, the components of the computing system 5600 can be integrated into a single package to form a system in package (SIP) configuration. In some examples at least a portion of the components of the computing system 5600 can be integrated into a multichip module (MCM), which can be interconnected with other multi-chip modules into a modular computing system.

It will be appreciated that the computing system 5600 shown herein is illustrative and that variations and modifications are possible. The connection topology, including the number and arrangement of bridges, the number of processor(s) 5602, and the number of parallel processor(s) 5612, may be modified as desired. For instance, system memory 5604 can be connected to the processor(s) 5602 directly rather than through a bridge, while other devices communicate with system memory 5604 via the memory hub 5605 and the processor(s) 5602. In other alternative topologies, the parallel processor(s) 5612 are connected to the I/O hub 5607 or directly to one of the one or more processor(s) 5602, rather than to the memory hub 5605. In other examples, the I/O hub 5607 and memory hub 5605 may be integrated into a single chip. It is also possible that two or more sets of processor(s) 5602 are attached via multiple sockets, which can couple with two or more instances of the parallel processor(s) 5612.

Some of the particular components shown herein are optional and may not be included in all implementations of the computing system 5600. For example, any number of add-in cards or peripherals may be supported, or some components may be eliminated. Furthermore, some architectures may use different terminology for components similar to those illustrated in FIG. 56. For example, the memory hub 5605 may be referred to as a Northbridge in some architectures, while the I/O hub 5607 may be referred to as a Southbridge.

FIG. 57 shows a parallel compute system 5700, according to some examples. In some examples the parallel compute system 5700 includes a parallel processor 5720, which can be a graphics processor or compute accelerator as described herein. The parallel processor 5720 includes a global logic unit 5701, an interface 5702, a thread dispatcher 5703, a media unit 5704, a set of compute units 5705A-5705H, and a cache/memory units 5706. The global logic unit 5701, in some examples, includes global functionality for the parallel processor 5720, including device configuration registers, global schedulers, power management logic, and the like. The interface 5702 can include a front-end interface for the parallel processor 5720. The thread dispatcher 5703 can receive workloads from the interface 5702 and dispatch threads for the workload to the compute units 5705A-5705H. If the workload includes any media operations, at least a portion of those operations can be performed by the media unit 5704. The media unit can also offload some operations to the compute units 5705A-5705H. The cache/memory units 5706 can include cache memory (e.g., L3 cache) and local memory (e.g., HBM, GDDR) for the parallel processor 5720. Compute units 5705 may include units for one or more of a network or communication processor, a core, a graphics processor, a general purpose graphics processing unit (GPGPU), a neural-network processing unit (NPU), an embedded processor, a security processor, a cryptographic accelerator, a matrix accelerator, an in-memory analytics accelerator, a compression accelerator, a data streaming accelerator, or the like.

FIGS. 58A-58B illustrate a hybrid logical/physical view of a disaggregated parallel processor, according to examples described herein. FIG. 58A illustrates a disaggregated parallel compute system 5800. FIG. 58B illustrates a chiplet 5830 of the disaggregated parallel compute system 5800.

As shown in FIG. 58A, a disaggregated parallel compute system 5800 can include a parallel processor 5820 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 5805, a media chiplet 5804, and memory chiplets 5806. Each chiplet can be separately manufactured using different process technologies. For example, compute chiplets 5805 may be manufactured using the smallest or most advanced process technology available at the time of fabrication, while memory chiplets 5806 or other chiplets (e.g., I/O, networking, etc.) may be manufactured using a larger or less advanced process technologies.

The various chiplets can be bonded to a base die 5810 and configured to communicate with each other and logic within the base die 5810 via an interconnect layer 5812. In some examples, the base die 5810 can include global logic 5801, which can include scheduler 5811 and power management 5821 logic units, an interface 5802, a dispatch unit 5803, and an interconnect fabric 5808 coupled with or integrated with one or more L3 cache banks 5809A-5809N. The interconnect fabric 5808 can be an inter-chiplet fabric that is integrated into the base die 5810. Logic chiplets can use the fabric 5808 to relay messages between the various chiplets. Additionally, L3 cache banks 5809A-5809N in the base die and/or L3 cache banks within the memory chiplets 5806 can cache data read from and transmitted to DRAM chiplets within the memory chiplets 5806 and to system memory of a host.

In some examples the global logic 5801 is a microcontroller that can execute firmware to perform scheduler 5811 and power management 5821 functionality for the parallel processor 5820. The microcontroller that executes the global logic can be tailored for the target use case of the parallel processor 5820. The scheduler 5811 can perform global scheduling operations for the parallel processor 5820. The power management 5821 functionality can be used to enable or disable individual chiplets within the parallel processor when those chiplets are not in use.

The various chiplets of the parallel processor 5820 can be designed to perform specific functionality that, in existing designs, would be integrated into a single die. A set of compute chiplets 5805 can include clusters of compute units (e.g., execution units, streaming multiprocessors, etc.) that include programmable logic to execute compute or graphics shader instructions. A media chiplet 5804 can include hardware logic to accelerate media encode and decode operations. Memory chiplets 5806 can include volatile memory (e.g., DRAM) and one or more SRAM cache memory banks (e.g., L3 banks).

As shown in FIG. 58B, each chiplet 5830 can include common components and application specific components. Chiplet logic 5836 within the chiplet 5830 can include the specific components of the chiplet, such as an array of streaming multiprocessors, compute units, or execution units described herein. The chiplet logic 5836 can couple with an optional cache or shared local memory 5838 or can include a cache or shared local memory within the chiplet logic 5836. The chiplet 5830 can include a fabric interconnect node 5842 that receives commands via the inter-chiplet fabric. Commands and data received via the fabric interconnect node 5842 can be stored temporarily within an interconnect buffer 5839. Data transmitted to and received from the fabric interconnect node 5842 can be stored in an interconnect cache 5840. Power control 5832 and clock control 5834 logic can also be included within the chiplet. The power control 5832 and clock control 5834 logic can receive configuration commands via the fabric can configure dynamic voltage and frequency scaling for the chiplet 5830. In some examples, each chiplet can have an independent clock domain and power domain and can be clock gated and power gated independently of other chiplets.

At least a portion of the components within the illustrated chiplet 5830 can also be included within logic embedded within the base die 5810 of FIG. 58A. For example, logic within the base die that communicates with the fabric can include a version of the fabric interconnect node 5842. Base die logic that can be independently clock or power gated can include a version of the power control 5832 and/or clock control 5834 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 59 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 59 shows a program in a high-level language 5902 may be compiled using a first ISA compiler 5904 to generate first ISA binary code 5906 that may be natively executed by a processor with at least one first ISA core 5916. The processor with at least one first ISA core 5916 represents any processor that can perform substantially the same functions as an Intel® processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 5904 represents a compiler that is operable to generate first ISA binary code 5906 (e.g., object code) that can, with or without additional linkage processing, be executed on the processor with at least one first ISA core 5916. Similarly, FIG. 59 shows the program in the high-level language 5902 may be compiled using an alternative ISA compiler 5908 to generate alternative ISA binary code 5910 that may be natively executed by a processor without a first ISA core 5914. The instruction converter 5912 is used to convert the first ISA binary code 5906 into code that may be natively executed by the processor without a first ISA core 5914. This converted code is not necessarily to be the same as the alternative ISA binary code 5910; however, the converted code will accomplish the general operation and be made up of instructions from the alternative ISA. Thus, the instruction converter 5912 represents software, firmware, hardware, or a combination thereof that, through emulation, simulation or any other process, allows a processor or other electronic device that does not have a first ISA processor or core to execute the first ISA binary code 5906.

**IP** Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

FIG. 60 is a block diagram illustrating an IP core development system 6000 that may be used to manufacture an integrated circuit to perform operations according to some examples. The IP core development system 6000 may be used to generate modular, reusable designs that can be incorporated into a larger design or used to construct an entire integrated circuit (e.g., an SOC integrated circuit). A design facility 6030 can generate a software simulation 6010 of an IP core design in a high-level programming language (e.g., C/C++). The software simulation 6010 can be used to design, test, and verify the behavior of the IP core using a simulation model 6012. The simulation model 6012 may include functional, behavioral, and/or timing simulations. A register transfer level (RTL) design 6015 can then be created or synthesized from the simulation model 6012. The RTL design 6015 is an abstraction of the behavior of the integrated circuit that models the flow of digital signals between hardware registers, including the associated logic performed using the modeled digital signals. In addition to an RTL design 6015, lower-level designs at the logic level or transistor level may also be created, designed, or synthesized. Thus, the particular details of the initial design and simulation may vary.

The RTL design 6015 or equivalent may be further synthesized by the design facility into a hardware model 6020, which may be in a hardware description language (HDL), or some other representation of physical design data. The HDL may be further simulated or tested to verify the IP core design. The IP core design can be stored for delivery to a fabrication facility 6065 using non-volatile memory 6040 (e.g., hard disk, flash memory, or any non-volatile storage medium). Alternatively, the IP core design may be transmitted (e.g., via the Internet) over a wired connection 6050 or wireless connection 6060. The fabrication facility 6065 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Examples include, but are not limited to:

1. An apparatus comprising:

a register file to store polynomial data; and butterfly compute circuitry coupled to the register file, the butterfly compute circuitry to support a polynomial integer multiplication in response to an instance of a single instruction of a first type, wherein the instance of the single instruction is at least to include one or more fields for a register file address for a first source operand of the integer multiplication, one or more fields for a register file address for a second source operand of the integer multiplication, and one more fields for a register file address for a result of the integer multiplication, wherein the butterfly compute circuitry is to additionally support modular arithmetic operations.

2. The apparatus of example 1, wherein the butterfly compute circuitry is further to support elementwise shifting right a polynomial and elementwise bit masking the shifted right polynomial in response to an instance of a single instruction of a second type.

3. The apparatus of example 2, wherein the instance of a single instruction of a second type is to at least include one or more fields to indicate an operand that is to store shift amount, one or more fields to indicate a source address of a polynomial to shift and bit mask, one or more fields to indicate a destination address, and one or more fields for an operand for a bit mask.

4. The apparatus of example 3, wherein the bit mask is encoded in an immediate.

5. The apparatus of example 3, wherein the source address of a polynomial to shift and bit mask is in the register file.

6. The apparatus of any of examples 1-5, wherein the butterfly compute circuitry is further to support a construction of a monomial from a polynomial in response to an instance of a single instruction of a third type.

7. The apparatus of any of examples 1-6, wherein the modular arithmetic operations at least include modular addition, modular subtraction, and modular multiplication.

8. The apparatus of any of examples 1-7, further comprising:
execution control resources to dispatch instructions and handle synchronization of data from local memory and scratchpad memory for execution blocks, wherein the execution control resources at least include a plurality of instruction queues to store instructions, the plurality of instruction queues to at least include:

a first instruction queue to store instructions for memory movement operations involving at least the local memory,
a second instruction queue to store instructions for memory movement operations involving at least the scratchpad memory, and
a third instruction queue to store mathematic, data movement, and/or logical instructions, wherein instructions of the first, second, and third instruction queues are to be dispatched as streams.

9. A system comprising:

a local memory to store instructions and/or data for a program;
a scratchpad memory, coupled to the local memory, to store instructions and/or data for the program; and
execution blocks, coupled to the scratchpad memory, to execute one or more mathematic and/or logical instructions of the program, wherein each execution block is to include a register file to store polynomial data and butterfly compute circuitry coupled to the register file, the butterfly compute circuitry to support a polynomial integer multiplication in response to an instance of a single instruction of a first type, wherein the instance of the single instruction is at least to include one or more fields for a register file address for a first source operand of the integer multiplication, one or more fields for a register file address for a second source operand of the integer multiplication, and one more fields for a register file address for a result of the integer multiplication, wherein the butterfly compute circuitry is to additionally support modular arithmetic operations.

10. The system of example 9, wherein the butterfly compute circuitry is further to support elementwise shifting right a polynomial and elementwise bit masking the shifted right polynomial in response to an instance of a single instruction of a second type.

11. The system of example 10, wherein the instance of a single instruction of a second type is to at least include one or more fields to indicate an operand that is to store shift amount, one or more fields to indicate a source address of a polynomial to shift and bit mask, one or more fields to indicate a destination address, and one or more fields for an operand for a bit mask.

12. The system of example 11, wherein the bit mask is encoded in an immediate.

13. The system of example 11, wherein the source address of a polynomial to shift and bit mask is in the register file.

14. The system of any of examples 9-13, wherein the butterfly compute circuitry is further to support a construction of a monomial from a polynomial in response to an instance of a single instruction of a third type.

15. The system of any of examples 9-14, wherein the modular arithmetic operations at least include modular addition, modular subtraction, and modular multiplication.

16. A method comprising:

decoding instructions of a plurality of threads of a program, wherein each thread is to be handled by a different set of physical resources;
placing each decoded instruction into an instruction queue, of a plurality of instruction queues, dedicated to a particular set of the different sets of physical resources;
streaming instructions from each instruction queue dedicated to a particular set of the different sets of physical resources; and
independently executing the decoded instructions from each thread using its dedicated particular set of physical resources including butterfly compute circuitry, wherein at least one of the instructions is a polynomial integer multiplication instruction that is at least to include one or more fields for a register file address for a first source operand of the integer multiplication, one or more fields for a register file address for a second source operand of the integer multiplication, and one more fields for a register file address for a result of the integer multiplication, wherein the butterfly compute circuitry is to additionally support modular arithmetic operations.

17. The method of example 16, wherein the sets of physical resources comprise a local memory to store instructions and/or data for a first thread; a scratchpad memory, coupled to the local memory, to store instructions and/or data for a second thread; and execution blocks to execute one or more mathematic and/or logical instructions of the program, wherein each execution block is to include a plurality of register files and execution units, coupled to the scratchpad memory, to execute one or more mathematic, data movement, and/or logical instructions for a third thread.

18. The method of example 16, wherein the butterfly compute circuitry is further to support an instruction for an elementwise right shift of a polynomial and elementwise bit masking the shifted right polynomial.

19. The method of example 18, wherein the instruction for the elementwise right shift of a polynomial and elementwise bit masking of the shifted right polynomial includes one or more fields to indicate an operand that is to store shift amount, one or more fields to indicate a source address of a polynomial to shift and bit mask, one or more fields to indicate a destination address, and one or more fields for an operand for a bit mask.

20. The method of any of examples 16-19, wherein the modular arithmetic operations at least include modular addition, modular subtraction, and modular multiplication.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

**1.** An apparatus comprising:

a register file to store polynomial data; and
butterfly compute circuitry coupled to the register file, the butterfly compute circuitry to support a polynomial integer multiplication in response to an instance of a single instruction of a first type, wherein the instance of the single instruction is at least to include one or more fields for a register file address for a first source operand of the integer multiplication, one or more fields for a register file address for a second source operand of the integer multiplication, and one more fields for a register file address for a result of the integer multiplication, wherein the butterfly compute circuitry is to additionally support modular arithmetic operations.

**2.** The apparatus of claim 1, wherein the butterfly compute circuitry is further to support elementwise shifting right a polynomial and elementwise bit masking the shifted right polynomial in response to an instance of a single instruction of a second type.

**3.** The apparatus of claim 2, wherein the instance of a single instruction of a second type is to at least include one or more fields to indicate an operand that is to store shift amount, one or more fields to indicate a source address of a polynomial to shift and bit mask, one or more fields to indicate a destination address, and one or more fields for an operand for a bit mask.

**4.** The apparatus of claim 3, wherein the bit mask is encoded in an immediate.

**5.** The apparatus of claim 3, wherein the source address of a polynomial to shift and bit mask is in the register file.

**6.** The apparatus of any of claims 1-5, wherein the butterfly compute circuitry is further to support a construction of a monomial from a polynomial in response to an instance of a single instruction of a third type.

**7.** The apparatus of any of claims 1-6, wherein the modular arithmetic operations at least include modular addition, modular subtraction, and modular multiplication.

**8.** The apparatus of any of claims 1-7, further comprising:

execution control resources to dispatch instructions and handle synchronization of data from local memory and scratchpad memory for execution blocks, wherein the execution control resources at least include a plurality of instruction queues to store instructions, the plurality of instruction queues to at least include:
a first instruction queue to store instructions for memory movement operations involving at least the local memory,
a second instruction queue to store instructions for memory movement operations involving at least the scratchpad memory, and
a third instruction queue to store mathematic, data movement, and/or logical instructions, wherein instructions of the first, second, and third instruction queues are to be dispatched as streams.

**9.** A method comprising:

decoding instructions of a plurality of threads of a program, wherein each thread is to be handled by a different set of physical resources;
placing each decoded instruction into an instruction queue, of a plurality of instruction queues, dedicated to a particular set of the different sets of physical resources;

streaming instructions from each instruction queue dedicated to a particular set of the different sets of physical resources; and
independently executing the decoded instructions from each thread using its dedicated particular set of physical resources including butterfly compute circuitry, wherein at least one of the instructions is a polynomial integer multiplication instruction that is at least to include one or more fields for a register file address for a first source operand of the integer multiplication, one or more fields for a register file address for a second source operand of the integer multiplication, and one more fields for a register file address for a result of the integer multiplication, wherein the butterfly compute circuitry is to additionally support modular arithmetic operations.

**10.** The method of claim 9, wherein the sets of physical resources comprise a local memory to store instructions and/or data for a first thread; a scratchpad memory, coupled to the local memory, to store instructions and/or data for a second thread; and execution blocks to execute one or more mathematic and/or logical instructions of the program, wherein each execution block is to include a plurality of register files and execution units, coupled to the scratchpad memory, to execute one or more mathematic, data movement, and/or logical instructions for a third thread.

**11.** The method of any of claims 9-10, wherein the butterfly compute circuitry is further to support an instruction for an elementwise right shift of a polynomial and elementwise bit masking the shifted right polynomial.

**12.** The method of any of claims 9-11, wherein the instruction for the elementwise right shift of a polynomial and elementwise bit masking of the shifted right polynomial includes one or more fields to indicate an operand that is to store shift amount, one or more fields to indicate a source address of a polynomial to shift and bit mask, one or more fields to indicate a destination address, and one or more fields for an operand for a bit mask.

**13.** The method of any of claims 9-12, wherein the modular arithmetic operations at least include modular addition, modular subtraction, and modular multiplication.

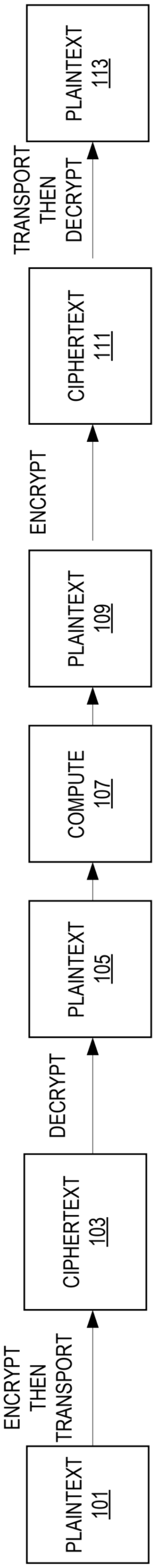
PLAINTEXT 101
ENCRYPT THEN TRANSPORT
CIPHERTEXT 103
DECRYPT
PLAINTEXT 105
COMPUTE 107
PLAINTEXT 109
ENCRYPT
CIPHERTEXT 111
TRANSPORT THEN DECRYPT
PLAINTEXT 113

FIG. 1

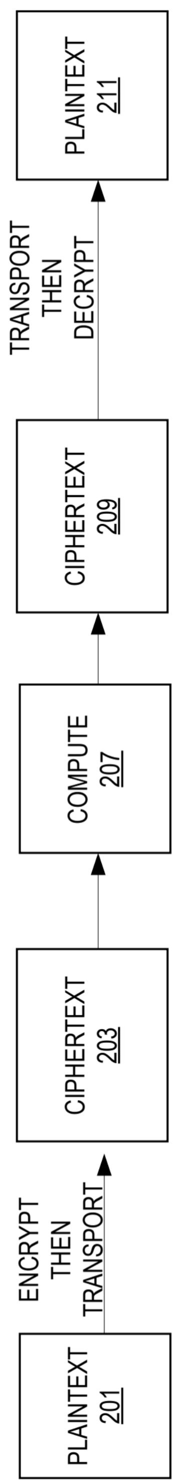
PLAINTEXT 201
ENCRYPT THEN TRANSPORT
CIPHERTEXT 203
COMPUTE 207
CIPHERTEXT 209
TRANSPORT THEN DECRYPT
PLAINTEXT 211

FIG. 2

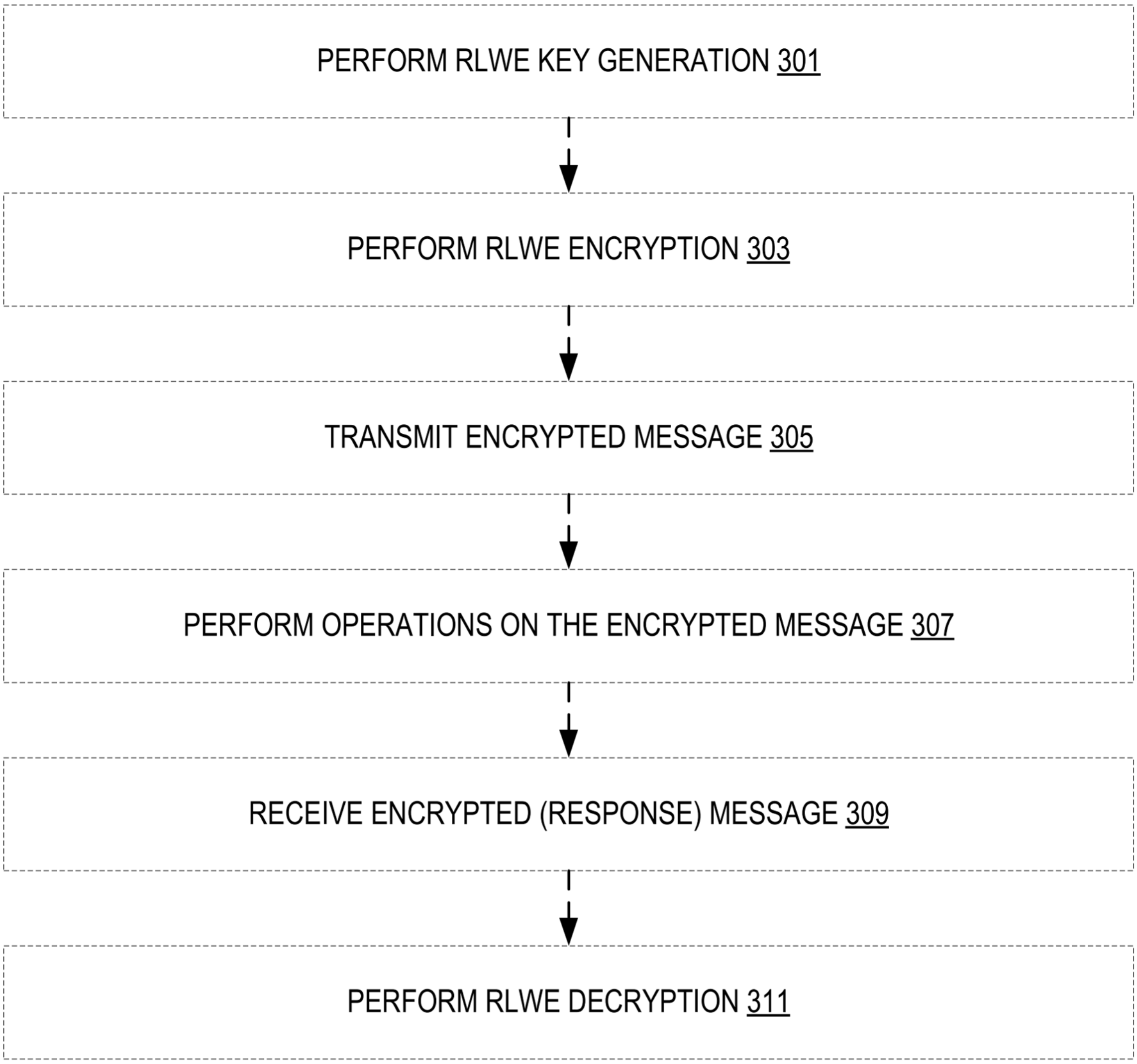
PERFORM RLWE KEY GENERATION 301
PERFORM RLWE ENCRYPTION 303
TRANSMIT ENCRYPTED MESSAGE 305
PERFORM OPERATIONS ON THE ENCRYPTED MESSAGE 307
RECEIVE ENCRYPTED (RESPONSE) MESSAGE 309
PERFORM RLWE DECRYPTION 311

FIG. 3

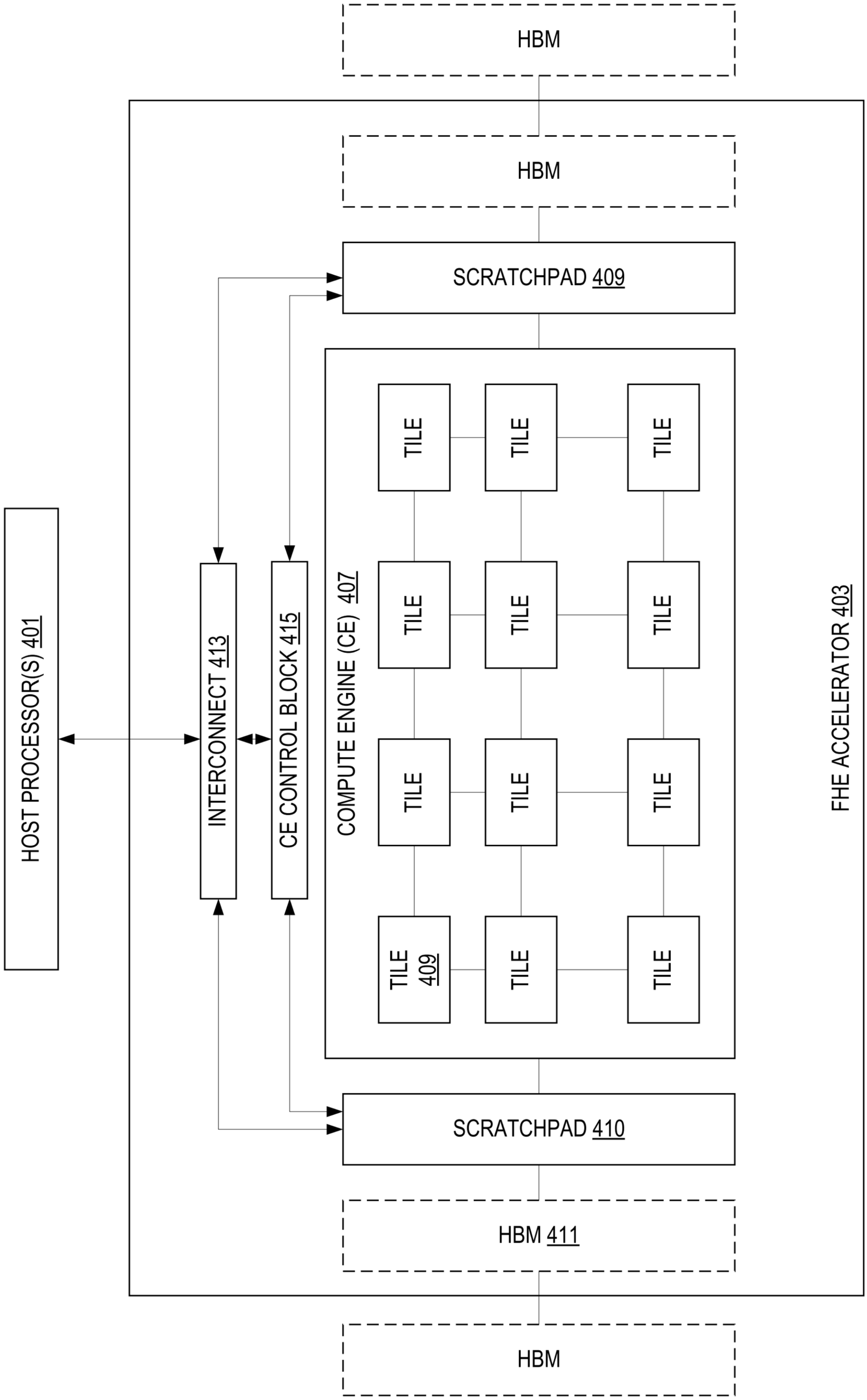
HBM
HBM
SCRATCHPAD 409
HOST PROCESSOR(S) 401
INTERCONNECT 413
CE CONTROL BLOCK 415
COMPUTE ENGINE (CE) 407
TILE
TILE 409
FHE ACCELERATOR 403
SCRATCHPAD 410
HBM 411
HBM

FIG. 4

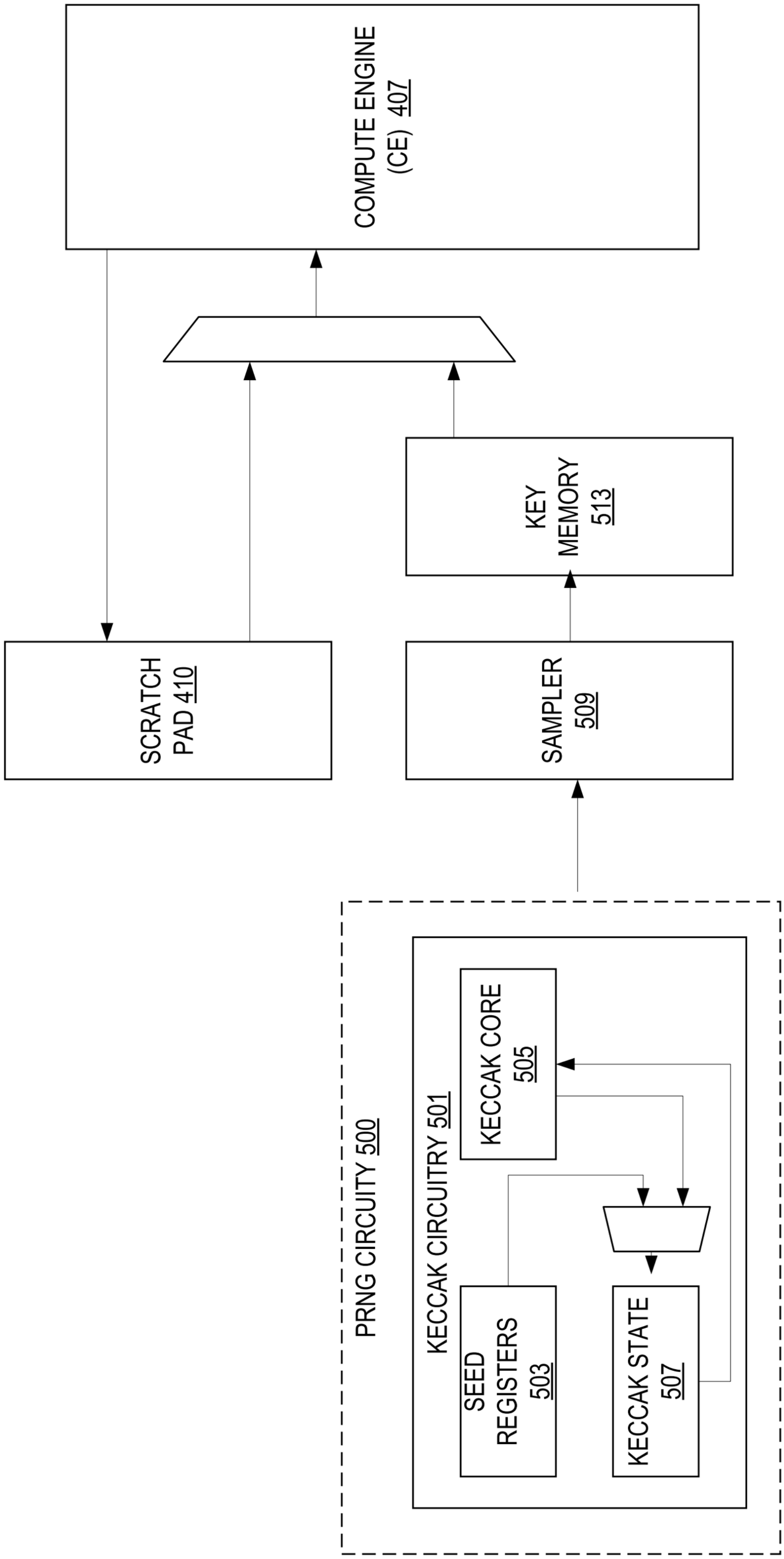
COMPUTE ENGINE
(CE) 407
SCRATCH
PAD 410
KEY
MEMORY
513
SAMPLER
509
PRNG CIRCUITRY 500
KECCAK CIRCUITRY 501
SEED
REGISTERS
503
KECCAK CORE
505
KECCAK STATE
507

FIG. 5

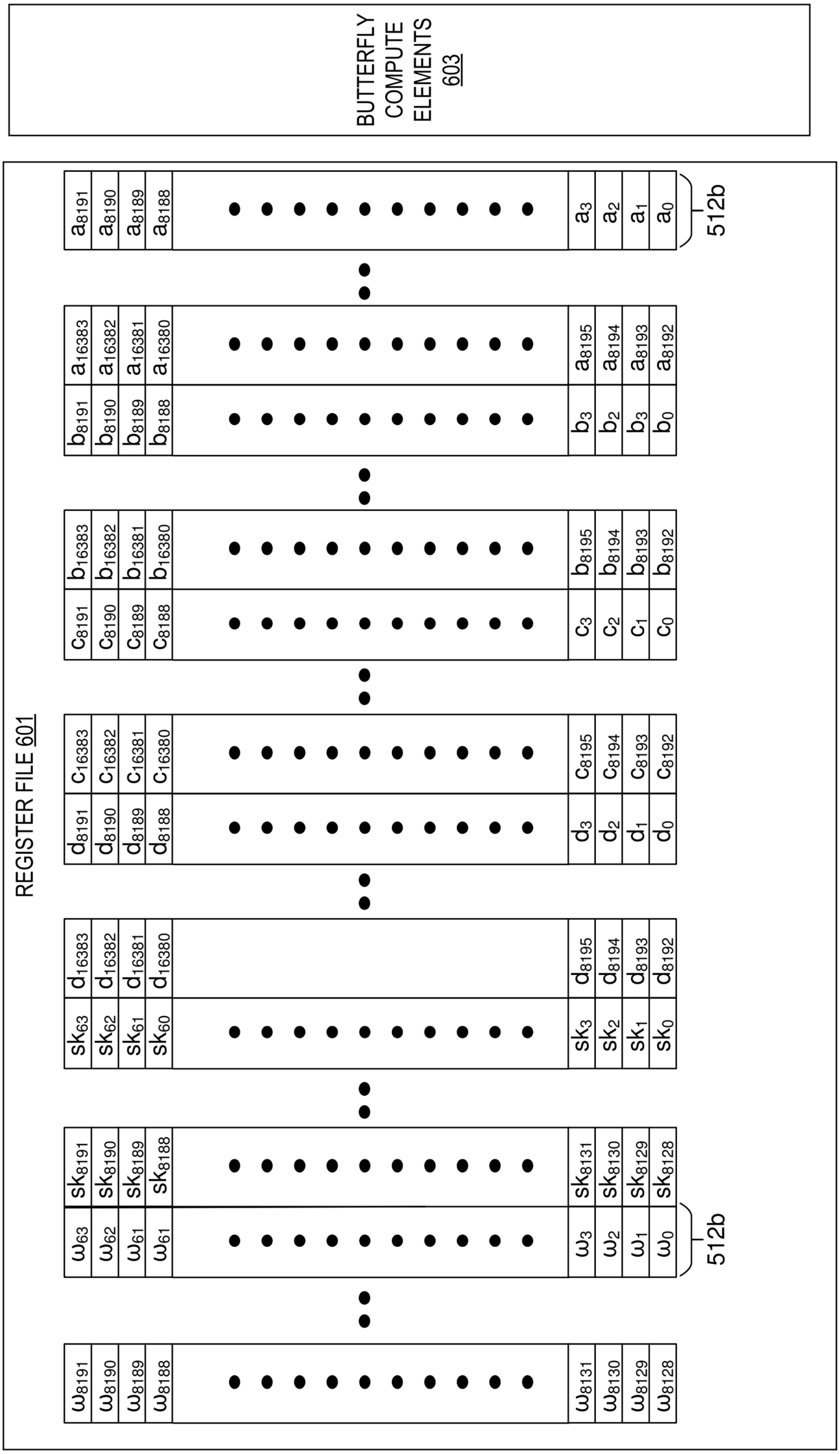
BUTTERFLY COMPUTE ELEMENTS 603
REGISTER FILE 601
512b
512b

FIG. 6

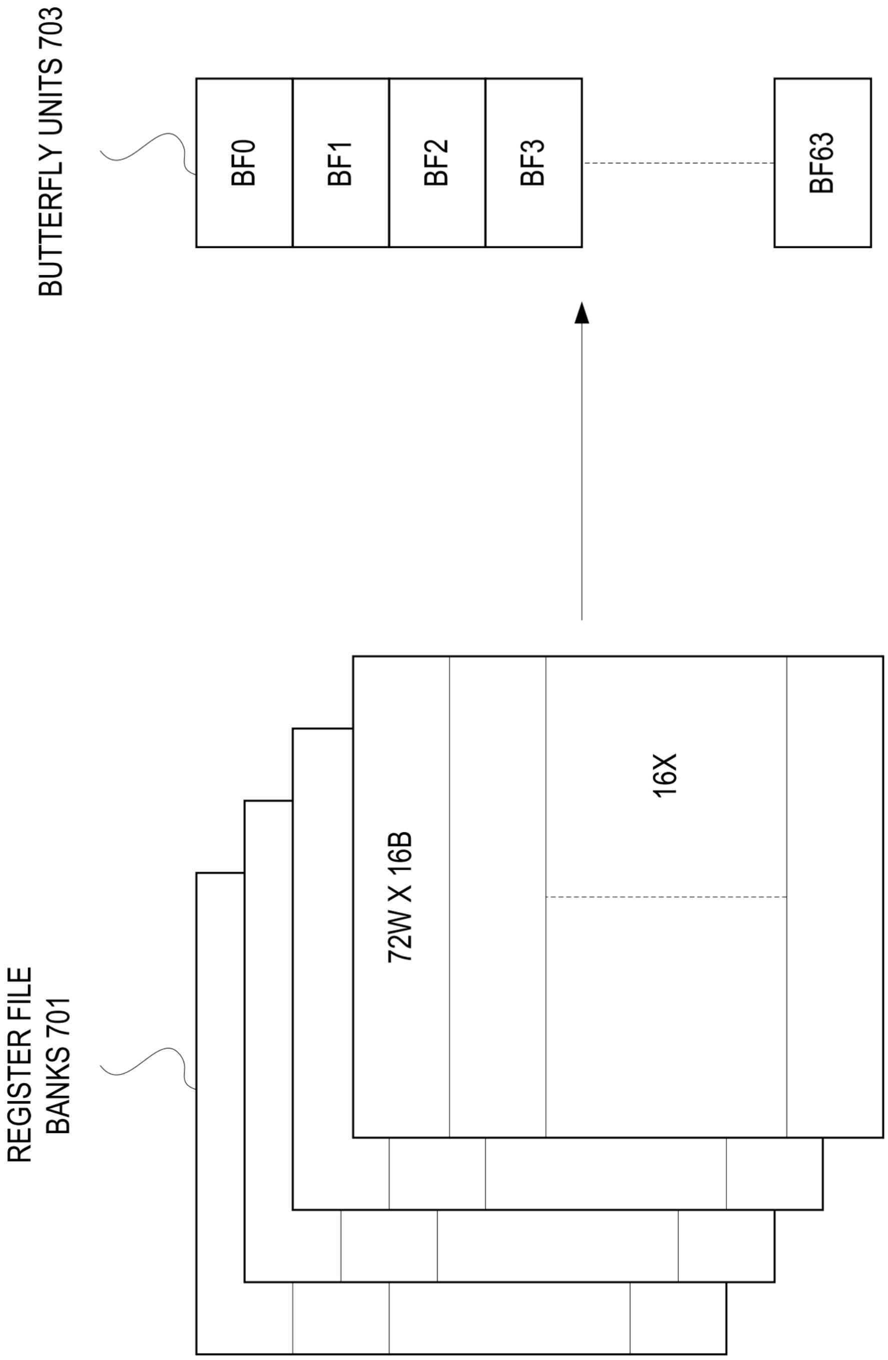
BUTTERFLY UNITS 703
BF0
BF1
BF2
BF3
BF63
REGISTER FILE BANKS 701
72W X 16B
16X

FIG. 7

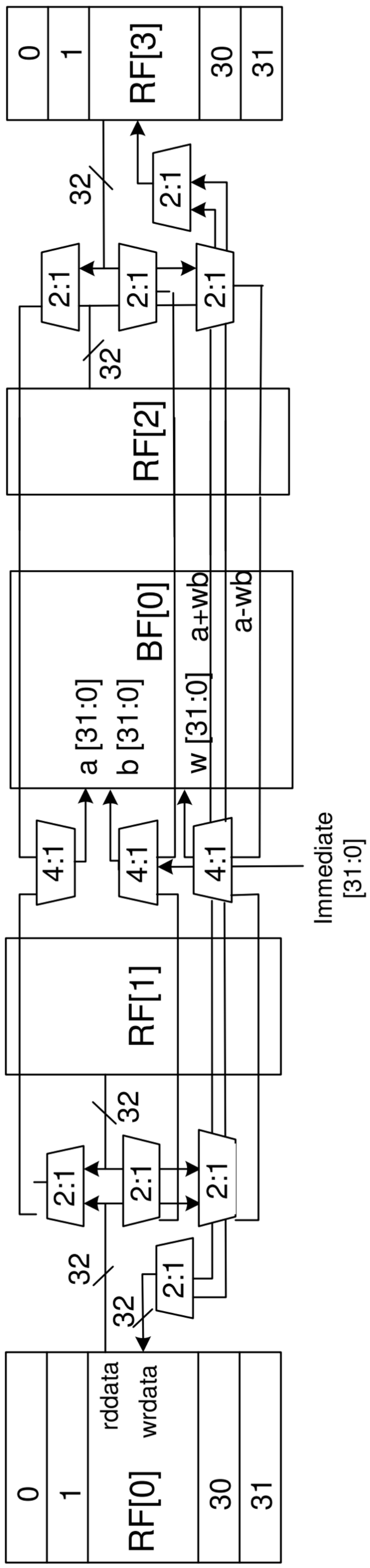

RF[3]
0
1
30
31
32
2:1
RF[2]
BF[0]
a [31:0]
b [31:0]
w [31:0]
a+wb
a-wb
4:1
Immediate
[31:0]
RF[1]
RF[0]
rddata
wrdata


FIG. 8

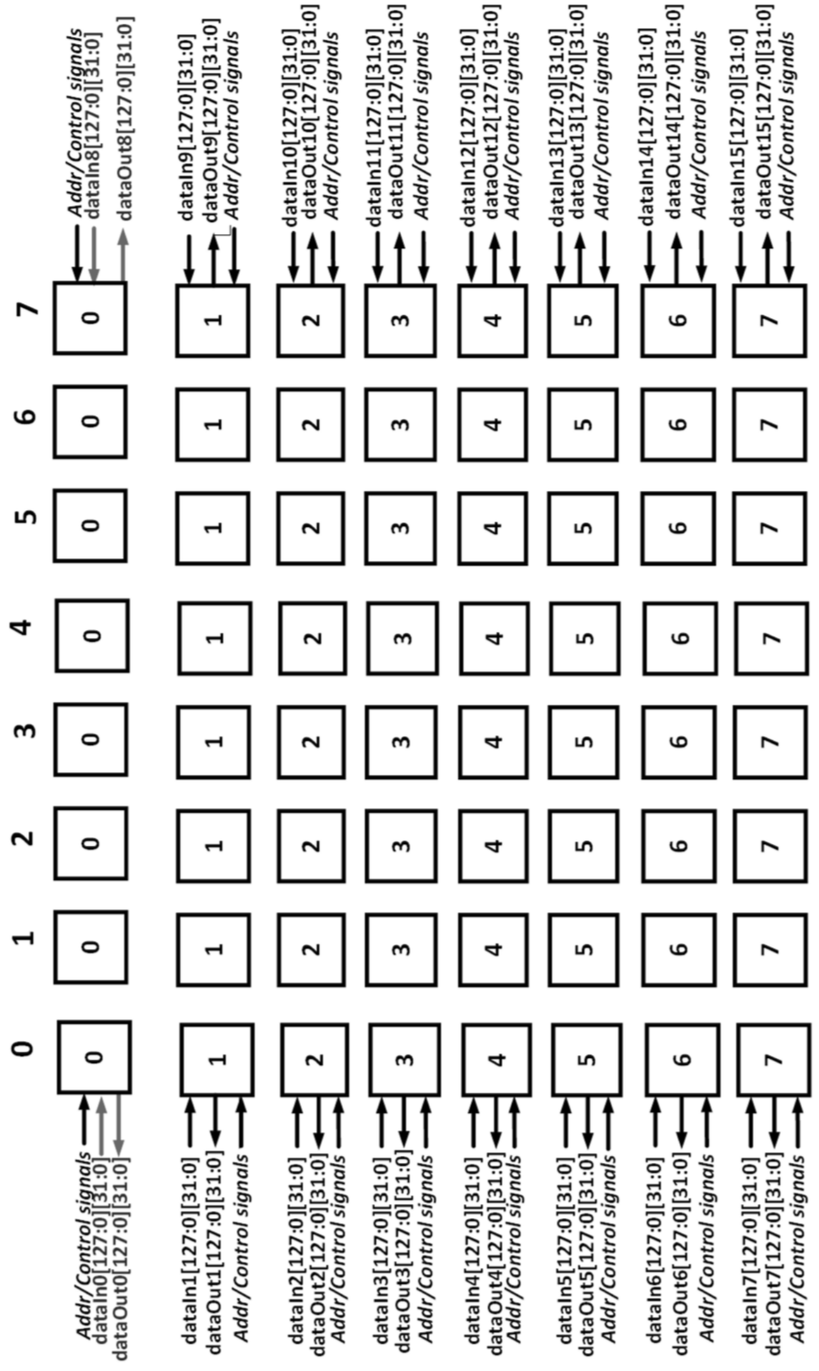
0
1
2
3
4
5
6
7
Addr/Control signals
dataIn0[127:0][31:0]
dataOut0[127:0][31:0]
dataIn1[127:0][31:0]
dataOut1[127:0][31:0]
dataIn2[127:0][31:0]
dataOut2[127:0][31:0]
dataIn3[127:0][31:0]
dataOut3[127:0][31:0]
dataIn4[127:0][31:0]
dataOut4[127:0][31:0]
dataIn5[127:0][31:0]
dataOut5[127:0][31:0]
dataIn6[127:0][31:0]
dataOut6[127:0][31:0]
dataIn7[127:0][31:0]
dataOut7[127:0][31:0]
dataIn8[127:0][31:0]
dataOut8[127:0][31:0]
dataIn9[127:0][31:0]
dataOut9[127:0][31:0]
dataIn10[127:0][31:0]
dataOut10[127:0][31:0]
dataIn11[127:0][31:0]
dataOut11[127:0][31:0]
dataIn12[127:0][31:0]
dataOut12[127:0][31:0]
dataIn13[127:0][31:0]
dataOut13[127:0][31:0]
dataIn14[127:0][31:0]
dataOut14[127:0][31:0]
dataIn15[127:0][31:0]
dataOut15[127:0][31:0]

FIG. 9(A)

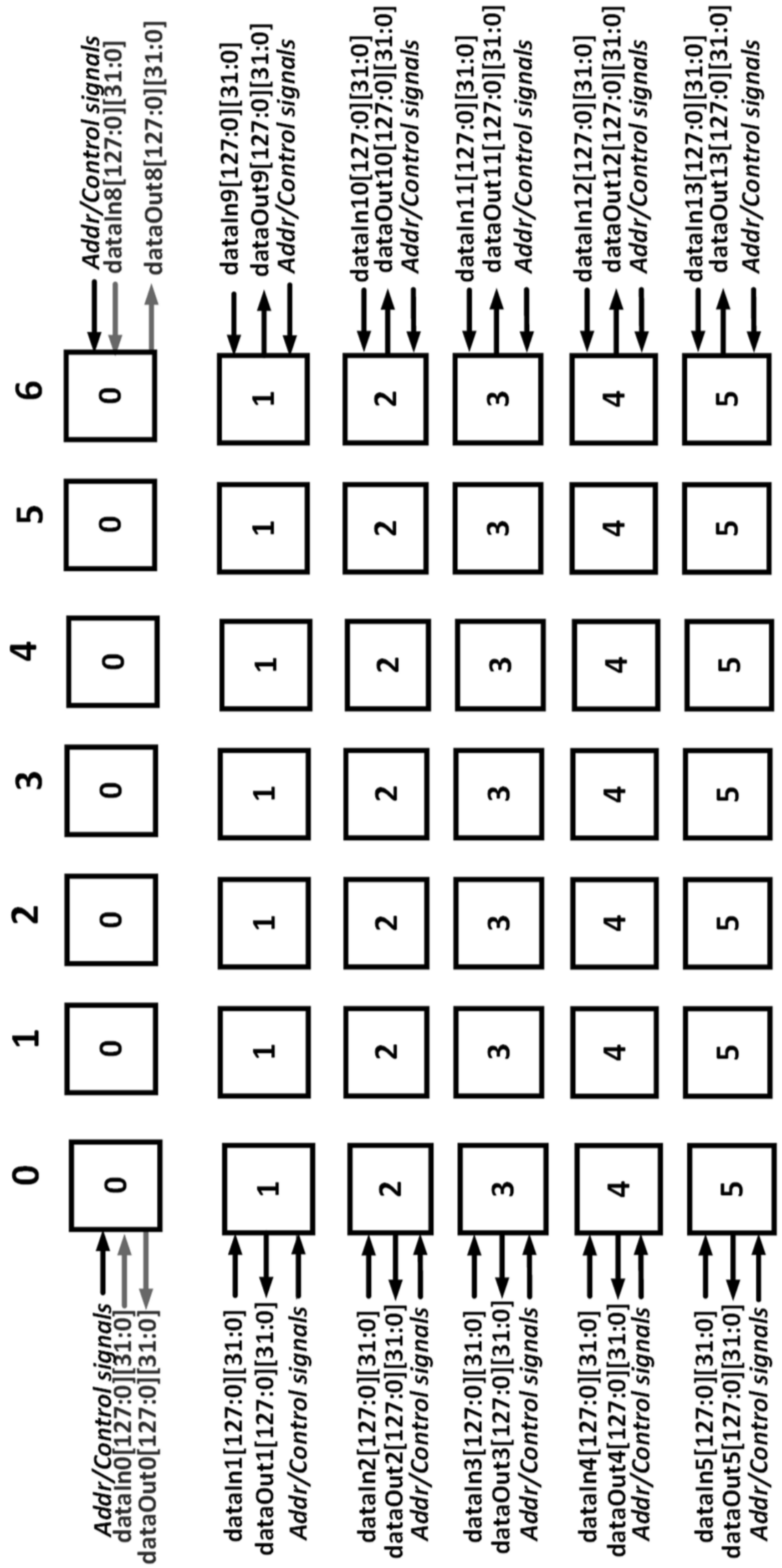
0
1
2
3
4
5
6
Addr/Control signals
dataIn0[127:0][31:0]
dataOut0[127:0][31:0]
dataIn1[127:0][31:0]
dataOut1[127:0][31:0]
dataIn2[127:0][31:0]
dataOut2[127:0][31:0]
dataIn3[127:0][31:0]
dataOut3[127:0][31:0]
dataIn4[127:0][31:0]
dataOut4[127:0][31:0]
dataIn5[127:0][31:0]
dataOut5[127:0][31:0]
dataIn8[127:0][31:0]
dataOut8[127:0][31:0]
dataIn9[127:0][31:0]
dataOut9[127:0][31:0]
dataIn10[127:0][31:0]
dataOut10[127:0][31:0]
dataIn11[127:0][31:0]
dataOut11[127:0][31:0]
dataIn12[127:0][31:0]
dataOut12[127:0][31:0]
dataIn13[127:0][31:0]
dataOut13[127:0][31:0]

FIG. 9(B)

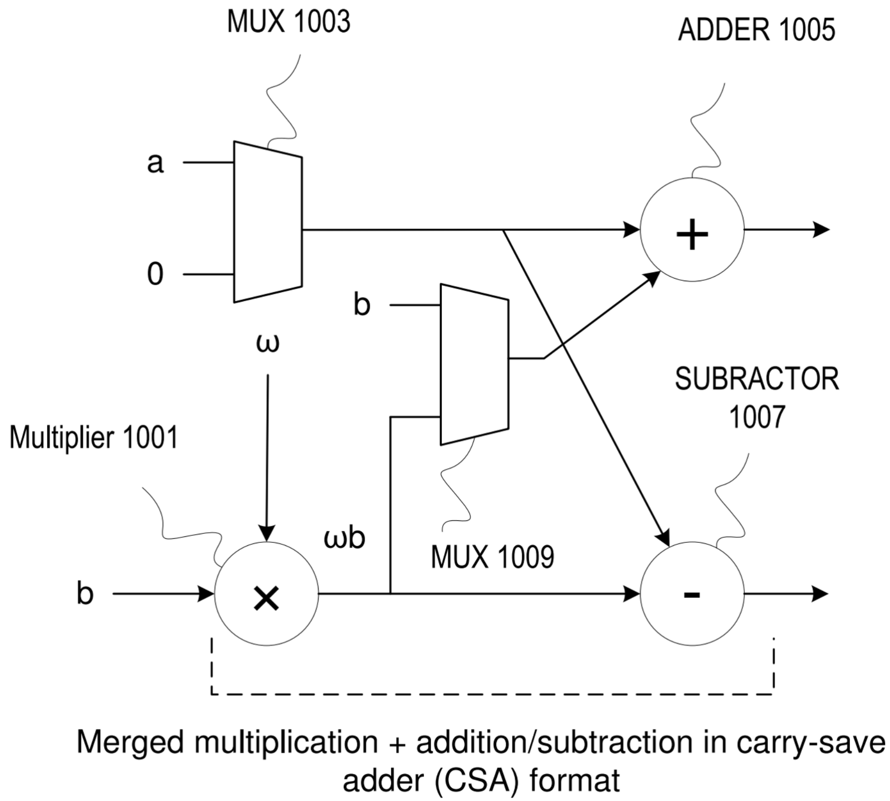


| DIT | DIF (instr.) |
|---|---|
| a+ωb (HW) | a+b (add) |
| a-ωb (HW) | ω(a-b) (add and mult) |

**FIG. 10(A)**

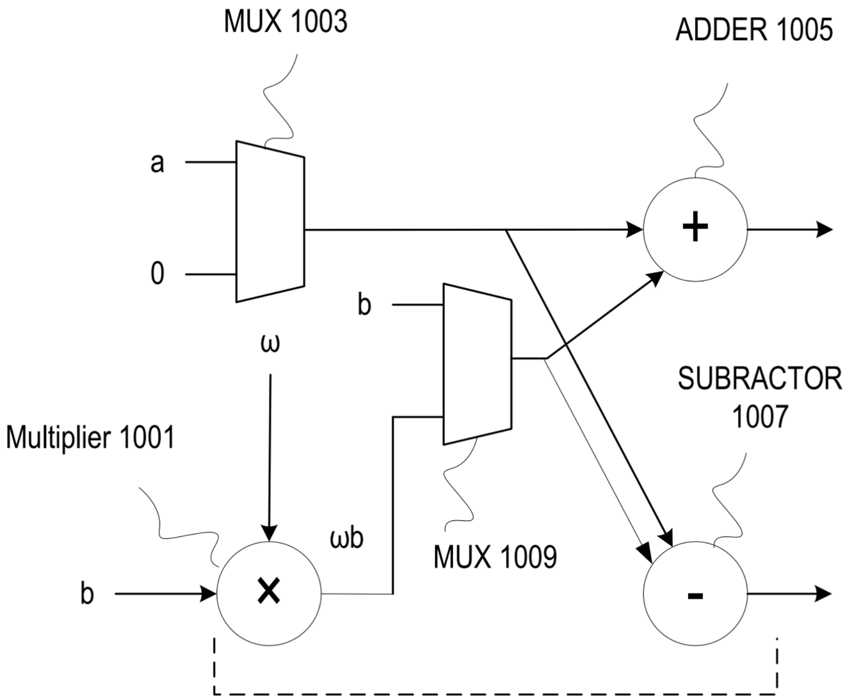


Merged multiplication + addition/subtraction in carry-save adder (CSA) format

| DIT | DIF (instr.) |
|---|---|
| a+ωb (HW) | a+b (add) |
| a-ωb (HW) | ω(a-b) (add and mult) |

FIG. 10(B)

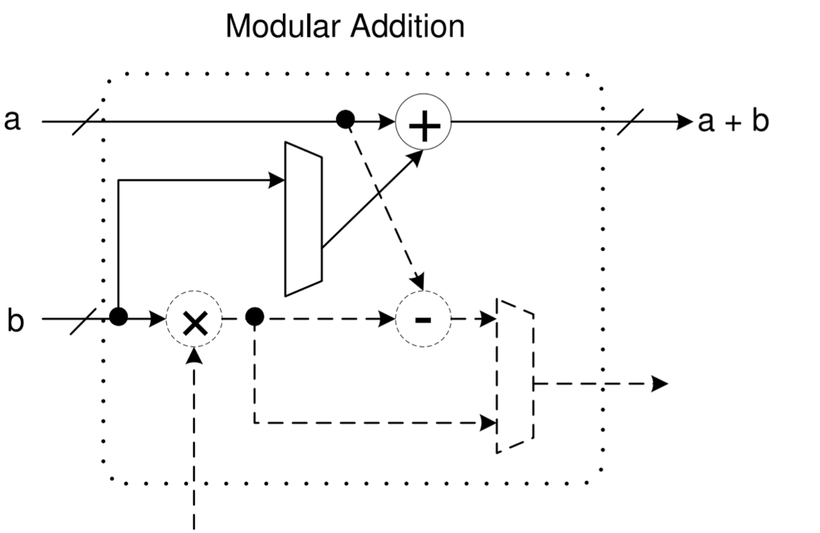


FIG. 11(A)

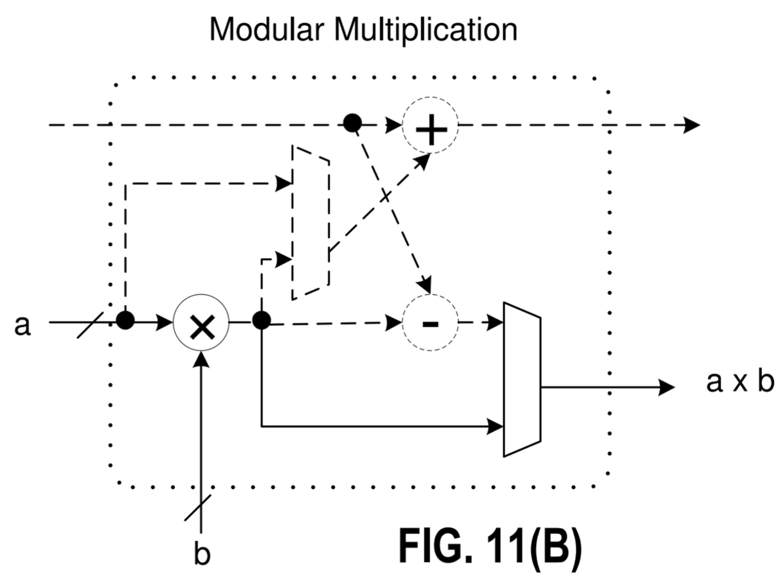


FIG. 11(B)

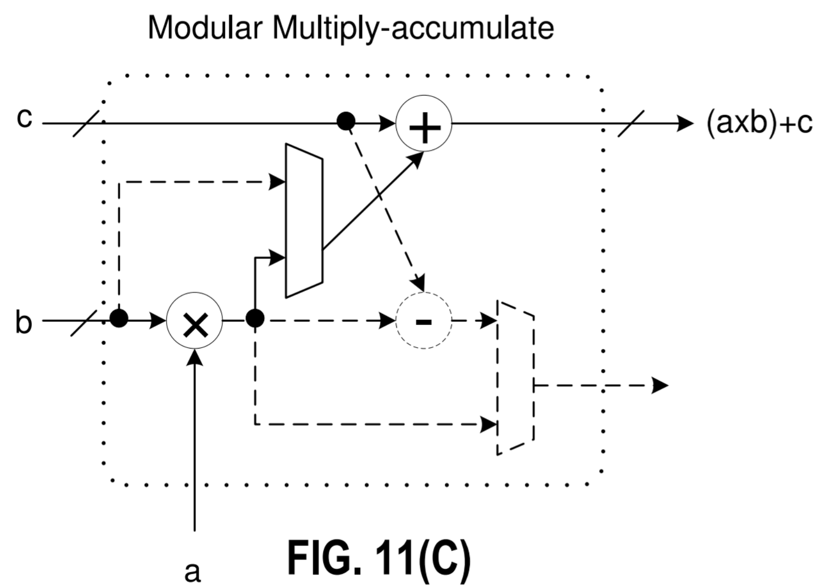


FIG. 11(C)

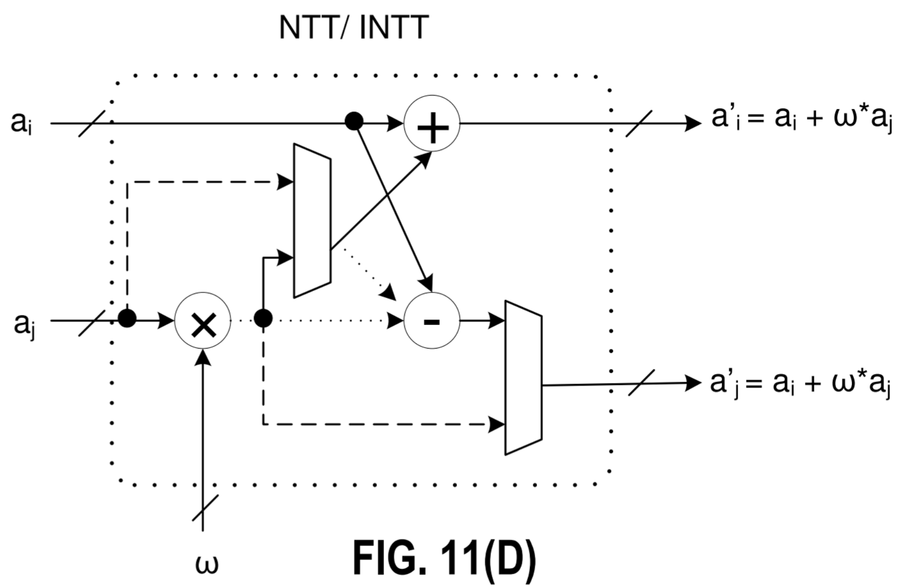


FIG. 11(D)

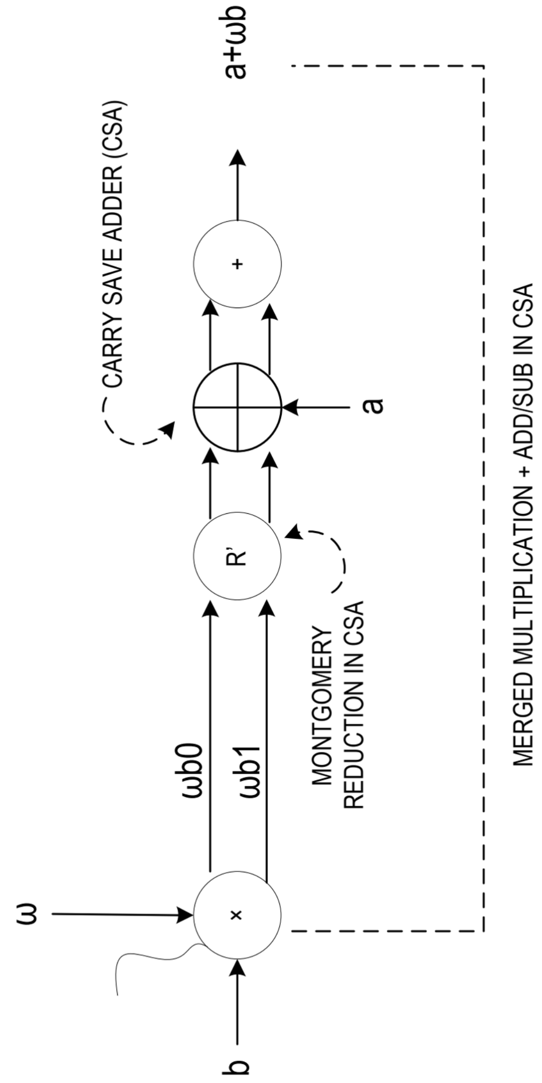
a+ωb
CARRY SAVE ADDER (CSA)
+
a
R'
ωb0
ωb1
MONTGOMERY
REDUCTION IN CSA
ω
×
b
MERGED MULTIPLICATION + ADD/SUB IN CSA

FIG. 12

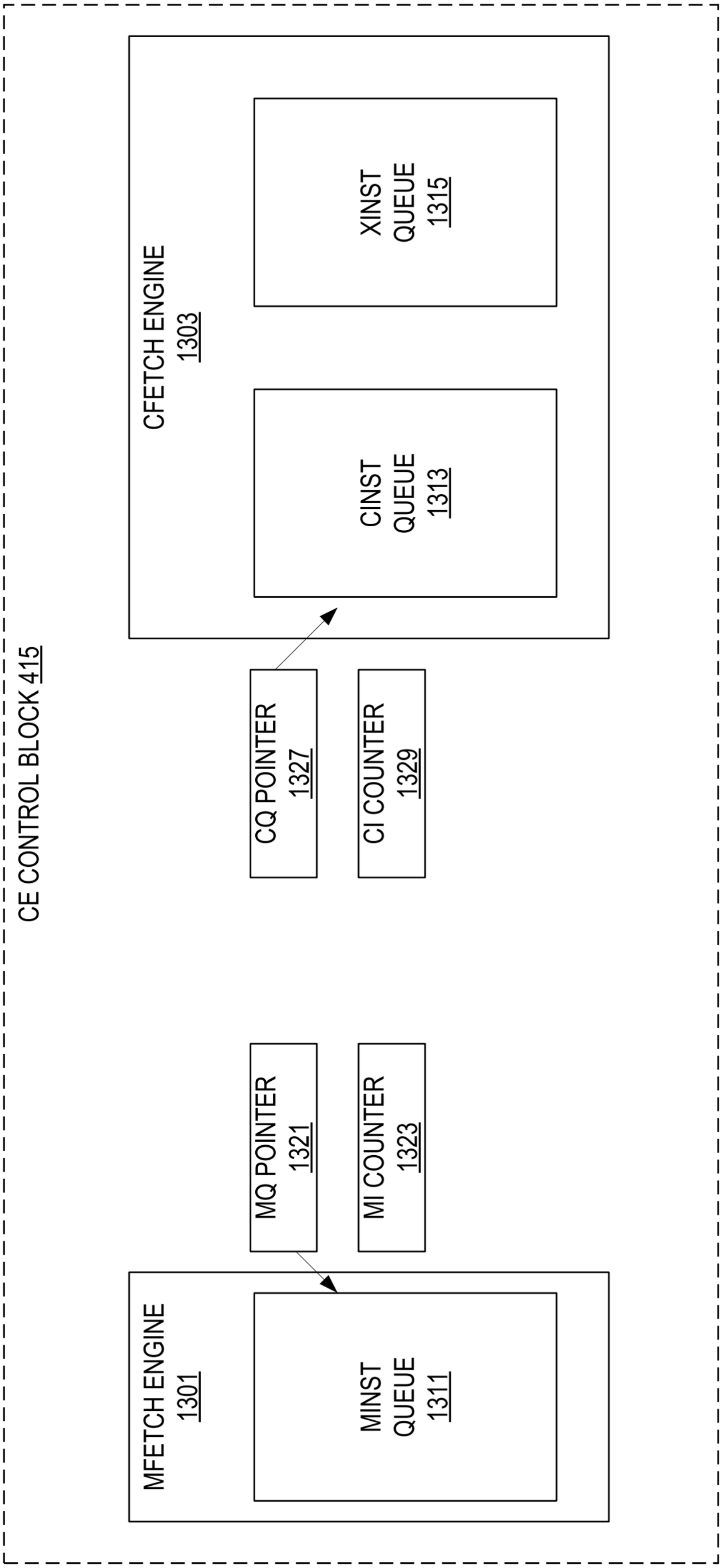
CE CONTROL BLOCK 415
CFETCH ENGINE
1303
XINST
QUEUE
1315
CINST
QUEUE
1313
CQ POINTER
1327
CI COUNTER
1329
MQ POINTER
1321
MI COUNTER
1323
MFETCH ENGINE
1301
MINST
QUEUE
1311

FIG. 13

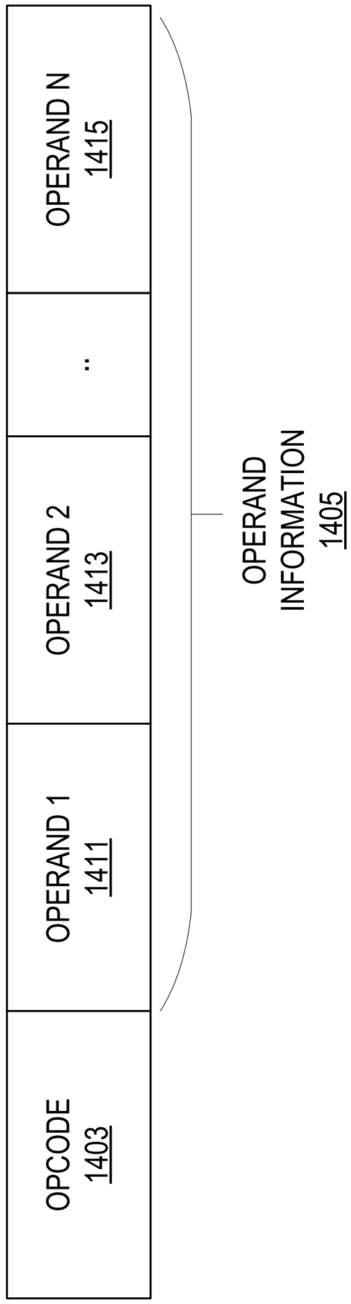
OPCODE
1403
OPERAND 1
1411
OPERAND 2
1413
..
OPERAND N
1415
OPERAND
INFORMATION
1405

FIG. 14

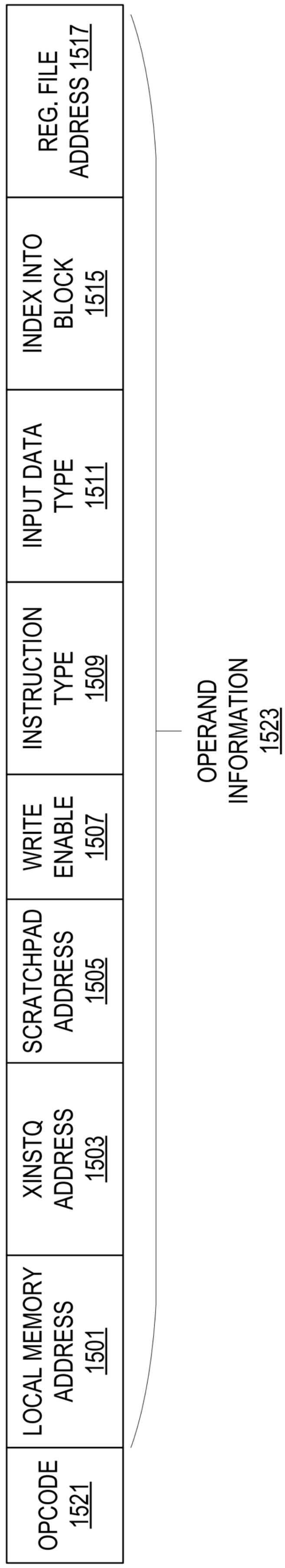
OPCODE 1521
LOCAL MEMORY ADDRESS 1501
XINSTQ ADDRESS 1503
SCRATCHPAD ADDRESS 1505
WRITE ENABLE 1507
INSTRUCTION TYPE 1509
INPUT DATA TYPE 1511
INDEX INTO BLOCK 1515
REG. FILE ADDRESS 1517
OPERAND INFORMATION 1523

FIG. 15

| instruction | description |
|---|---|
| ifetch | Fetch 16 instructions from the XinstQ and send it to the CE instruction queue |
| bload_meta | Load metadata from scratchpad to register file, then broadcast the data to all the tiles |
| bload_one | Load metadata one from scratchpad to register file, then broadcast the data to all the tiles |
| cload | Load a single polynomial residue from scratchpad memory into the RF memory |
| nload | Load NTT routing mapping data |
| cstore | Fetch a single polynomial residue from a data buffer and store back to scratchpad memory |
| xinstfetch | Fetch 32KB of instructions from the HBM and send it to the XinstQ |
| cnop | Add desired latency in cfetch flow |
| csyncm | CinstQ waiting for Mfetch (MinstQ) to reach a particular instruction |
| exit | Exit a program |
| cleanup | Cleanup the memory states |
| kg_start_stop | Starts (stops) the key generation state machine if it is in a stopped (an active) state |
| kg_load | Loads key material from the key material buffer into the CE, similar to a cload instruction |
| kg_seed | loads seed material from the spad into the key generation logic |

**FIG. 16**

| Encoding | [63:42] | [41:30] | [29:18] | [17] | [16:14] | [13:11] | [10:9] | [8:0] |
|---|---|---|---|---|---|---|---|---|
| Fields | lm_addr[21:0] | xq_addr[11:0] | sp_addr[11:0] | wr_en[0] | cinst_type[2:0] | din_mode[2:0] | din_index[1:0] | rf_addr[8:0] |
| cload | NA | 0xFF | 0xFFF | 1 | NA | 0x0: data | NA | 0x1FF |
| ifetch | NA | 0xFFF | NA | 1 | NA | 0x1: instruction | NA | NA |
| bload_meta | NA | NA | 0xFFF | 1 | NA | 0x2: metadata | 0x0, 0x1, 0x2, 0x3 | 0x3F |
| bload_mone | NA | NA | 0xFFF | 1 | NA | 0x3: metadata one | 0x0, 0x1, 0x2, 0x3 | NA |
| nload | NA | NA | 0xFFF | 1 | NA | 0x4: routing mapping data | NA | 0x0, 0x1, ..., 0x6 |
| cstore | NA | 0xFF | 0xFFF | 0 | 0x1 | 0x7 | NA | NA |
| xinstfetch | 0x3FFFFF | 0xFFF | NA | 0 | 0x2 | 0x7 | NA | NA |
| cnop | NA | NA | 0x3FF | 0 | 0x3 | 0x7 | NA | NA |
| csyncm | 0xFFFFF | 0xFFF | NA | 0 | 0x4 | 0x7 | NA | NA |
| exit | NA | NA | NA | 0 | 0x6 | 0x7 | NA | NA |
| cleanup | NA | NA | NA | 0 | 0x7 | 0x7 | NA | NA |
| kg_start_stop | NA | NA | NA | 0 | 0x5 | 0x7 | NA | NA |
| kg_load | NA | NA | NA | 1 | 0x5 | 0x5: key generation material | NA | 0x1FF |
| kg_seed | NA | NA | 0xFFF | 1 | 0x5 | 0x6: key generation seed material | NA | NA |

FIG. 17

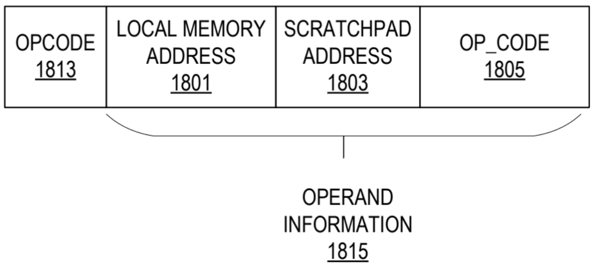
OPCODE
1813
LOCAL MEMORY
ADDRESS
1801
SCRATCHPAD
ADDRESS
1803
OP_CODE
1805
OPERAND
INFORMATION
1815

FIG. 18

| instruction | description |
|---|---|
| mload | Load a single polynomial residue from local memory to scratchpad memory |
| mstore | Store a single polynomial residue from scratchpad memory to local memory |
| msyncc | MIQ waiting for Cfetch (CIQ) to reach a particular instruction |

FIG. 19

| Encoding | [36:15] | [14:3] | [2:0] |
|---|---|---|---|
| Fields | lm_addr[21:0] | sp_addr[11:0] | op_code[2:0] |
| mload | 0x3FFFFF | 0xFFF | 0x0 |
| mstore | 0x3FFFFF | 0xFFF | 0x1 |
| msyncc | 0xFFFFF | 0xFFF | 0x2 |

FIG. 20

| Instruction # | Instruction | Destination | Source |
|---|---|---|---|
| 1 | Mload | 0 | 0x10000 |
| 2 | Mload | 1 | 0x20000 |
| 3 | Mload | 2 | 0x30000 |
| 4 | Mload | 3 | 0x40000 |
| 5 | Cload | R8 | 0 |
| 6 | Cload | R9 | 1 |
| 7 | Cload | R10 | 2 |
| 8 | Cload | R11 | 3 |
| 9 | Math | R12 | R8 |
| 10 | Math | R13 | R9 |
| 11 | Math | R14 | R10 |
| 12 | Math | R15 | R11 |
| 13 | Cstore | 4 | R12 |
| 14 | NOP | | |
| 15 | NOP | | |
| 16 | NOP | | |
| 17 | Cstore | 5 | R13 |
| 18 | NOP | | |
| 19 | NOP | | |
| 20 | NOP | | |
| 21 | Cstore | 6 | R14 |
| 22 | NOP | | |
| 23 | NOP | | |
| 24 | NOP | | |
| 25 | Cstore | 7 | R15 |
| 26 | Math | R8 | R1 |
| 27 | Math | R9 | R2 |
| 28 | Math | R10 | R3 |
| 29 | Math | R11 | R4 |
| 30 | Cload | R12 | 0 |
| 31 | Cload | R13 | 1 |
| 32 | Cload | R14 | 2 |
| 33 | Cload | R15 | 3 |
| 34 | Mload | 0 | 0x50000 |
| 35 | Mload | 1 | 0x60000 |
| 36 | Mload | 2 | 0x70000 |
| 37 | Mload | 3 | 0x80000 |

FIG. 21

| MFECTH | | | | CFETCH | | | | | EXECUTE | | | | | |
|---|---|---|---|---|---|---|---|---|---|---|---|---|---|---|
| Instruction # | Instruction | Destination | Source | Cycle | Instruction # | Instruction | Destination | Source | Cycle | Instruction # | Instruction | Destination | Source | |
| 1 | Mload | 0 | 0x10000 | | | | | | | | | | | |
| 2 | Mload | 1 | 0x20000 | | | | | | | | | | | |
| 3 | Mload | 2 | 0x30000 | | | | | | | | | | | |
| 4 | Mload | 3 | 0x40000 | | | | | | | | | | | |
| | | | | 641 | 5 | | | | | | | | | |
| | | | | 642 | 6 | Cload | R8 | 0 | | | | | 0 | |
| | | | | 646 | 7 | Cload | R9 | 1 | | | | | 1 | |
| | | | | 650 | 8 | Cload | R10 | 2 | | | | | 2 | |
| | | | | 654 | 9 | Cload | R11 | 3 | | | | | 3 | |
| | | | | 658 | | Ifetch | | | | | | | | |
| | | | | | | | | | 663 | 10 | Math | R12 | R8 | |
| | | | | | | | | | 664 | 11 | Math | R13 | R9 | |
| | | | | | | | | | 665 | 12 | Math | R14 | R10 | |
| | | | | | | | | | 666 | 13 | Math | R15 | R11 | |
| | | | | 667 | 14 | Cstore | 4 | R12 | 667 | 14 | Cstore | 4 | R12 | |
| | | | | | | | | | 668 | 15 | NOP | | | |
| | | | | | | | | | 669 | 16 | NOP | | | |
| | | | | | | | | | 670 | 17 | NOP | | | |
| | | | | 671 | 18 | Cstore | 5 | R13 | 671 | 18 | Cstore | 5 | R13 | |
| | | | | | | | | | 672 | 19 | NOP | | | |
| | | | | | | | | | 673 | 20 | NOP | | | |
| | | | | | | | | | 674 | 21 | NOP | | | |
| | | | | 675 | 22 | Cstore | 6 | R14 | 675 | 22 | Cstore | 6 | R14 | |
| | | | | | | | | | 676 | 23 | NOP | | | |
| | | | | | | | | | 677 | 24 | NOP | | | |
| | | | | | | | | | 678 | 25 | NOP | | | |
| | | | | 679 | 26 | Cstore | 7 | R15 | 679 | 26 | Cstore | 7 | R15 | |
| | | | | | | | | | 680 | 27 | Math | R8 | R1 | |
| | | | | | | | | | 681 | 28 | Math | R9 | R2 | |
| | | | | | | | | | 682 | 29 | Math | R10 | R3 | |
| | | | | | | | | | 683 | 30 | Math | R11 | R4 | |
| | | | | 684 | 31 | Cload | R12 | 0 | | | | | | |
| | | | | 688 | 32 | Cload | R13 | 1 | | | | | | |
| | | | | 692 | 33 | Cload | R14 | 2 | | | | | | |
| | | | | 696 | 34 | Cload | R15 | 3 | | | | | | |
| 35 | MsyncC | | 34 | | | | | | | | | | | |
| 36 | Mload | 0 | 0x50000 | | | | | | | | | | | |
| 37 | Mload | 1 | 0x60000 | | | | | | | | | | | |
| 38 | Mload | 2 | 0x70000 | | | | | | | | | | | |
| 39 | Mload | 3 | 0x80000 | | | | | | | | | | | |

FIG. 22

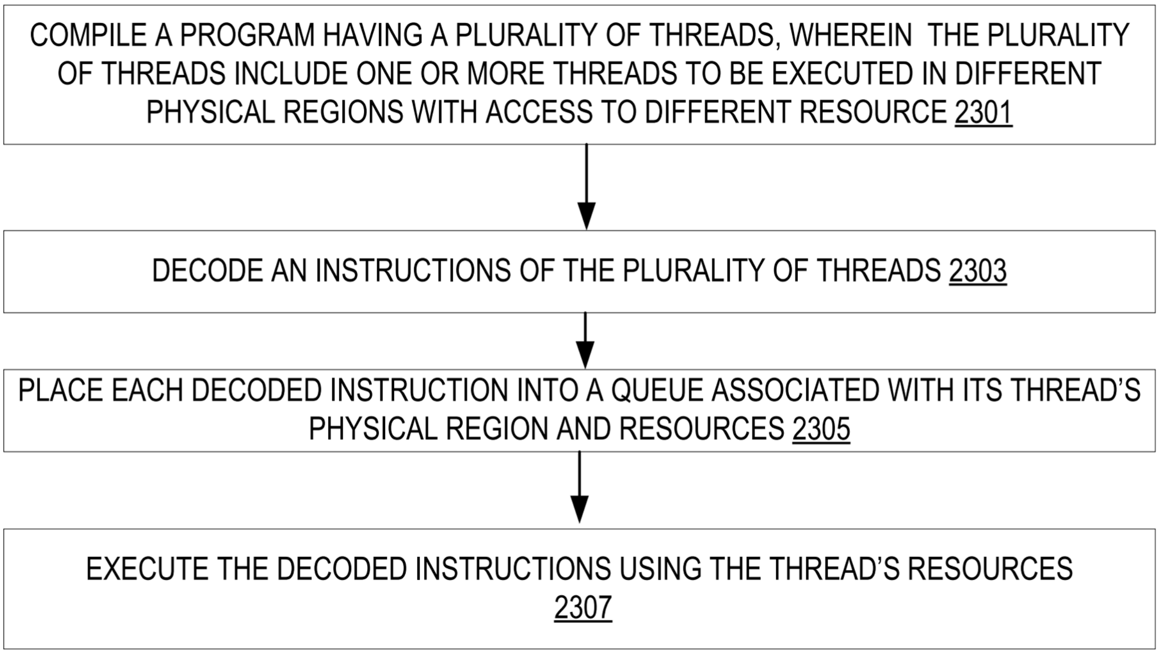
COMPILE A PROGRAM HAVING A PLURALITY OF THREADS, WHEREIN THE PLURALITY OF THREADS INCLUDE ONE OR MORE THREADS TO BE EXECUTED IN DIFFERENT PHYSICAL REGIONS WITH ACCESS TO DIFFERENT RESOURCE 2301
DECODE AN INSTRUCTIONS OF THE PLURALITY OF THREADS 2303
PLACE EACH DECODED INSTRUCTION INTO A QUEUE ASSOCIATED WITH ITS THREAD'S PHYSICAL REGION AND RESOURCES 2305
EXECUTE THE DECODED INSTRUCTIONS USING THE THREAD'S RESOURCES 2307

FIG. 23

| Instruction | Operand 1 | Operand 2 | Operand 3 | Operand 4 | Operand 5 | operand 6 |
| --- | --- | --- | --- | --- | --- | --- |
| xstore | src | | | | | |
| move | source | dest | | | | |
| rshuffle | src_0 | dest_0 | src_1 | dest_1 | wait_cyc | data_type |

FIG. 24

| Instruction | Operand 1 | Operand 2 | Operand 3 | Operand 4 |
|---|---|---|---|---|
| padd | res | a | c | b |
| psub | res | a | c | b |

| | | |
|---|---|---|
| **Name** | padd | |
| **Description** | Add two polynomials in the register file and store the result at a new address | |
| **DependsOn** | Instruction Encodings | |
| **Mnemonic** | padd | |
| **Opcode** | 4 | |
| **Function** | 0 | |
| **Operand** | **Type** | **Description** |
| opcode | opcode | Common opcode field |
| func | func | Memory function opcode |
| res | res_idx | Which residue info to use for modular reduction |
| a | rf_addr | Memory address of the left operand a |
| c | rf_addr | Destination address of result c = a + b |
| b | rf_addr | Memory address of the right operand b |

FIG. 25

| Instruction | Operand 1 | Operand 2 | Operand 3 | Operand 4 |
|---|---|---|---|---|
| padd | res | a | c | b |
| psub | res | a | c | b |

| | | |
|---|---|---|
| **Name** | psub | |
| **Description** | Subtract two polynomials in the register file and store the result at a new address | |
| **DependsOn** | Instruction Encodings | |
| **Mnemonic** | psub | |
| **Opcode** | 8 | |
| **Function** | 0 | |
| **Operand** | **Type** | **Description** |
| opcode | opcode | Common opcode field |
| func | func | Memory function opcode |
| res | res_idx | Which residue info to use for modular reduction |
| a | rf_addr | Memory address of the left operand a |
| c | rf_addr | Destination address of result c = a - b |
| b | rf_addr | Memory address of the right operand b |

FIG. 26

| Instruction | Operand 1 | Operand 2 | Operand 3 | Operand 4 |
|---|---|---|---|---|
| pmul | res | a | c | b |
| pmuli | res | a | c | imm |

| | | |
|---|---|---|
| **Name** | pmul | |
| **Description** | Entry-wise multiplication of two polynomials in the RF and store the result at a new address | |
| **DependsOn** | Instruction Encodings | |
| **Mnemonic** | pmul | |
| **Opcode** | 5 | |
| **Function** | 0 | |
| **Operand** | **Type** | **Description** |
| opcode | opcode | Common opcode field |
| func | func | Memory function opcode |
| res | res_idx | Which residue info to use for modular reduction |
| a | rf_addr | Memory address of the left operand |
| c | rf_addr | Destination address of the result c = a * b |
| b | rf_addr | Memory address of the right operand |

FIG. 27

| Instruction | Operand 1 | Operand 2 | Operand 3 | Operand 4 |
|---|---|---|---|---|
| pmul | res | a | c | b |
| pmuli | res | a | c | imm |

| | | |
|---|---|---|
| **Name** | pmuli | |
| **Description** | Scale a polynomial in the RF by an immediate and store the result at a new address | |
| **DependsOn** | Instruction Encodings | |
| **Mnemonic** | pmuli | |
| **Opcode** | 5 | |
| **Function** | 1 | |
| **Operand** | **Type** | **Description** |
| opcode | opcode | Common opcode field |
| func | func | Memory function opcode |
| res | res_idx | Which residue info to use for modular reduction |
| a | rf_addr | Memory address of the polynomial operand |
| c | rf_addr | Destination address of the result c = a * b |
| imm | imm32 | immediate value encoded in the instruction |

FIG. 28

| Instruction | Operand 1 | Operand 2 | Operand 3 | Operand 4 |
|---|---|---|---|---|
| pmac | res | a | c | b |
| pmaci | res | a | c | imm |

| | | |
|---|---|---|
| **Name** | pmac | |
| **Description** | Multiply two polynomials entry-wise (both stored at RF) and add the result into an accumulator polynomial | |
| **DependsOn** | Instruction Encodings | |
| **Mnemonic** | pmac | |
| **Opcode** | 6 | |
| **Function** | 0 | |
| **Operand** | **Type** | **Description** |
| opcode | opcode | Common opcode field |
| func | func | Memory function opcode |
| res | res_idx | Which residue info to use for modular reduction |
| a | rf_addr | Memory address of the left multiplicand |
| c | rf_addr | Memory address of the accumulator (result) polynomial |
| b | rf_addr | Memory address of the right multiplicand |

FIG. 29

| Instruction | Operand 1 | Operand 2 | Operand 3 | Operand 4 |
|---|---|---|---|---|
| pmac | res | a | c | b |
| pmaci | res | a | c | imm |

| | | |
|---|---|---|
| **Name** | pmaci | |
| **Description** | Multiply a polynomial with an immediate and add the result into an accumulator polynomial | |
| **DependsOn** | Instruction Encodings | |
| **Mnemonic** | pmaci | |
| **Opcode** | 6 | |
| **Function** | 1 | |
| **Operand** | **Type** | **Description** |
| opcode | opcode | Common opcode field |
| func | func | Memory function opcode |
| res | res_idx | Which residue info to use for modular reduction |
| a | rf_addr | Memory address of the input polynomial |
| c | rf_addr | Memory address of the accumulator (result) polynomial |
| imm | imm32 | immediate value |

FIG. 30

| Instruction | Operand 1 | Operand 2 | Operand 3 | Operand 4 | Operand 5 | operand 6 | operand 7 |
|---|---|---|---|---|---|---|---|
| pntt | res | src_bot | dest_bot | src_top | dest_bot | src_tw | stage |
| twntt | res | src_tw | dest_tw | tw_meta | block | stage | |
| pintt | res | src_bot | dest_bot | src_top | dest_bot | src_tw | stage |
| twintt | res | src_tw | dest_tw | tw_meta | block | stage | |

| | | |
|---|---|---|
| **Name** | pntt | |
| **Description** | Perform one-stage of NTT on an input positional polynomial | |
| **DependsOn** | Instruction Encodings | |
| **Mnemonic** | pntt | |
| **Opcode** | 7 | |
| **Function** | 0 | |
| **Operand** | **Type** | **Description** |
| opcode | opcode | Common opcode field |
| func | func | Memory function opcode |
| res | res_idx | Which residue info to use for modular reduction |
| src_top | rf_addr | Memory address of the top part of the input polynomial |
| dest_top | rf_addr | Memory address of the top part of the result |
| src_bot | rf_addr | Memory address of the bottom part of the input polynomial |
| dest_bot | rf_addr | Memory address of the bottom part of the result |
| src_tw | rf_addr | Memory address of the original twiddles |
| store_local | store_local | Indicate if result gets written to current tile RF or its destination memory |
| unused | unused_ntt | XX bits, hardcoded as 0 |
| stage | stage | stage number of the current ntt/intt instruction |

FIG. 31

| Instruction | Operand 1 | Operand 2 | Operand 3 | Operand 4 | Operand 5 | operand 6 | operand 7 |
|---|---|---|---|---|---|---|---|
| pntt | res | src_bot | dest_bot | src_top | dest_bot | src_tw | stage |
| twntt | res | src_tw | dest_tw | tw_meta | block | stage | |
| pintt | res | src_bot | dest_bot | src_top | dest_bot | src_tw | stage |
| twintt | res | src_tw | dest_tw | tw_meta | block | stage | |

| | | |
|---|---|---|
| **Name** | pintt | |
| **Description** | Perform one-stage of inverse NTT | |
| **DependsOn** | Instruction Encodings | |
| **Mnemonic** | pintt | |
| **Opcode** | 15 | |
| **Function** | 0 | |
| **Operand** | **Type** | **Description** |
| opcode | opcode | Common opcode field |
| func | func | Memory function opcode |
| res | res_idx | Which residue info to use for modular reduction |
| src_top | rf_addr | Memory address of the top part of the input polynomial |
| dest_top | rf_addr | Memory address of the top part of the result |
| src_bot | rf_addr | Memory address of the bottom part of the input polynomial |
| dest_bot | rf_addr | Memory address of the bottom part of the result |
| src_tw | rf_addr | Memory address of the twiddles |
| unused_0 | unused_ntt | XX bits, hardcoded as 0 |
| unused_1 | unused_ntt | XX bits, hardcoded as 0 |
| stage | stage | stage number of the current ntt/intt instruction |

**FIG. 32**

| Instruction | Operand 1 | Operand 2 | Operand 3 | Operand 4 | Operand 5 | operand 6 | operand 7 |
|---|---|---|---|---|---|---|---|
| pntt | res | src_bot | dest_bot | src_top | dest_bot | src_tw | stage |
| twntt | res | src_tw | dest_tw | tw_meta | block | stage | |
| pintt | res | src_bot | dest_bot | src_top | dest_bot | src_tw | stage |
| twintt | res | src_tw | dest_tw | tw_meta | block | stage | |

| | | |
|---|---|---|
| **Name** | twntt | |
| **Description** | Compute twiddle factors for the next stage of ntt | |
| **DependsOn** | Instruction Encodings | |
| **Mnemonic** | twntt | |
| **Opcode** | 0 | |
| **Function** | 1 | |
| **Operand** | **Type** | **Description** |
| opcode | opcode | Common opcode field |
| func | func | Memory function opcode |
| res | res_idx | Which residue info to use for modular reduction |
| src_tw | rf_addr | Memory address of the original twiddles |
| dest_tw | rf_addr | Memory address of the newly computed twiddles |
| tw_meta | tw_meta_addr | Memory address and indexing information of the twiddle metadata |
| block | block | denote polynomial size and index of current 16k polynomial chunk |
| unused | unused_twntt | XX bits, hardcoded as 0 |
| stage | stage | stage number of the current ntt/intt instruction |

FIG. 33

| Instruction | Operand 1 | Operand 2 | Operand 3 | Operand 4 | Operand 5 | operand 6 | operand 7 |
|---|---|---|---|---|---|---|---|
| pntt | res | src_bot | dest_bot | src_top | dest_bot | src_tw | stage |
| twntt | res | src_tw | dest_tw | tw_meta | block | stage | |
| pintt | res | src_bot | dest_bot | src_top | dest_bot | src_tw | stage |
| twintt | res | src_tw | dest_tw | tw_meta | block | stage | |

| | | |
|---|---|---|
| **Name** | twintt | |
| **Description** | Compute twiddle factors for the next stage of intt | |
| **DependsOn** | Instruction Encodings | |
| **Mnemonic** | twintt | |
| **Opcode** | 1 | |
| **Function** | 1 | |
| **Operand** | **Type** | **Description** |
| opcode | opcode | Common opcode field |
| func | func | Memory function opcode |
| res | res_idx | Which residue info to use for modular reduction |
| src_tw | rf_addr | Memory address of the original twiddles |
| dest_tw | rf_addr | Memory address of the newly computed twiddles |
| tw_meta | tw_meta_addr | Memory address and indexing information of the twiddle metadata |
| block | block | denote polynomial size and index of current 16k polynomial chunk |
| unused | unused_twntt | XX bits, hardcoded as 0 |
| stage | stage | stage number of the current ntt/intt instruction |

FIG. 34

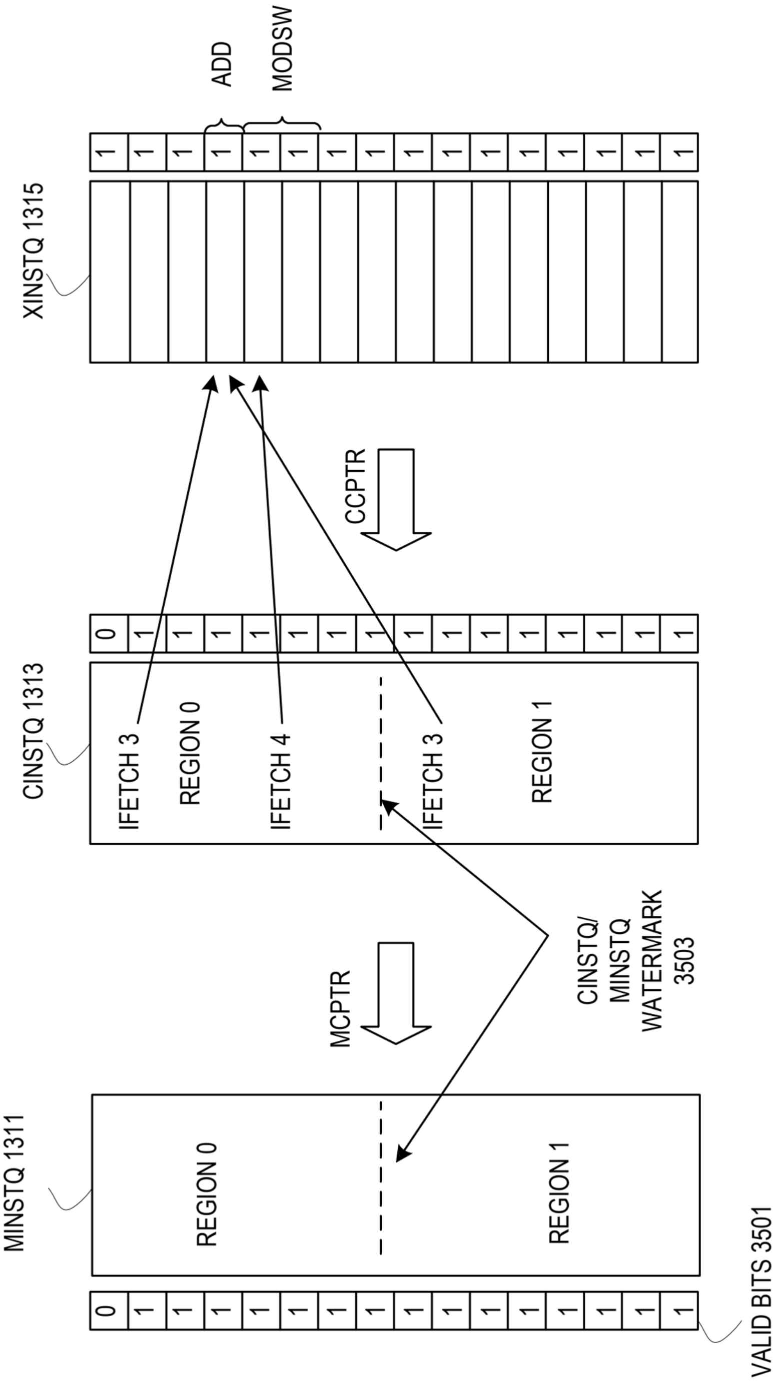
XINSTQ 1315
ADD
MODSW
CCPTR
CINSTQ 1313
IFETCH 3
REGION 0
IFETCH 4
IFETCH 3
REGION 1
MCPTR
CINSTQ/
MINSTQ
WATERMARK
3503
MINSTQ 1311
REGION 0
REGION 1
VALID BITS 3501

FIG. 35

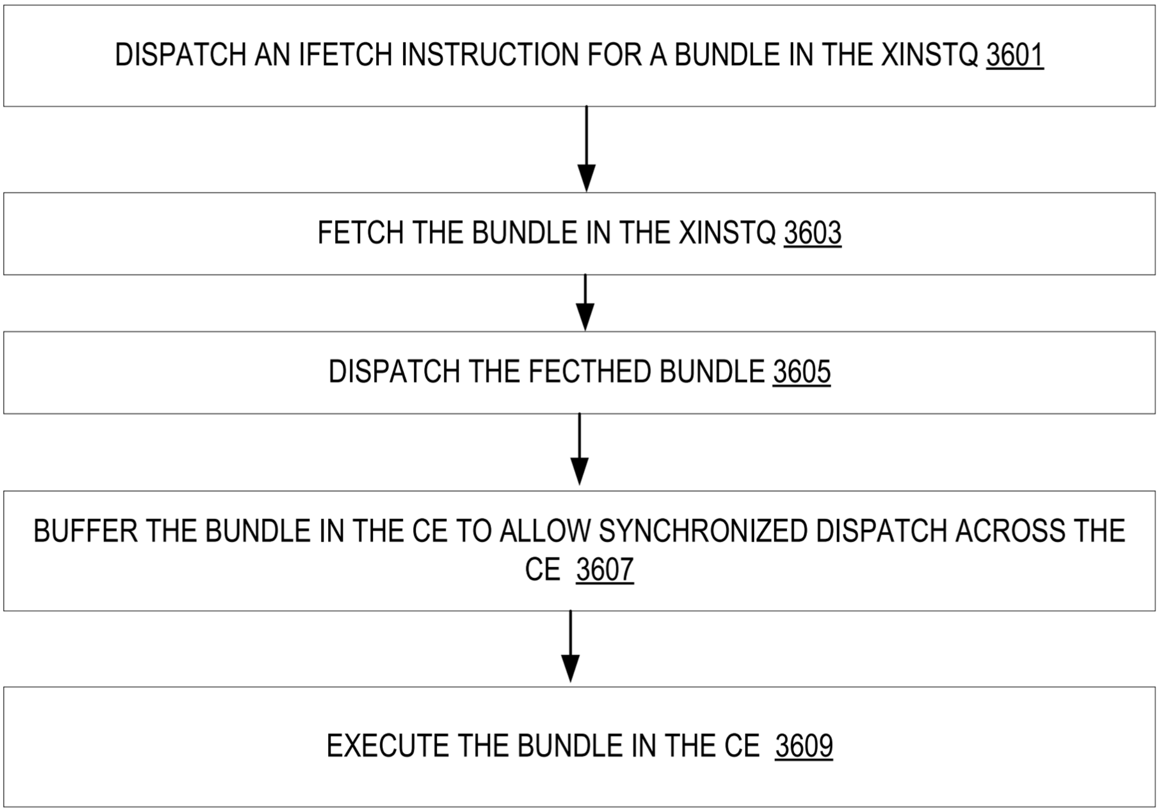
DISPATCH AN IFETCH INSTRUCTION FOR A BUNDLE IN THE XINSTQ 3601
FETCH THE BUNDLE IN THE XINSTQ 3603
DISPATCH THE FECTHED BUNDLE 3605
BUFFER THE BUNDLE IN THE CE TO ALLOW SYNCHRONIZED DISPATCH ACROSS THE CE 3607
EXECUTE THE BUNDLE IN THE CE 3609

FIG. 36

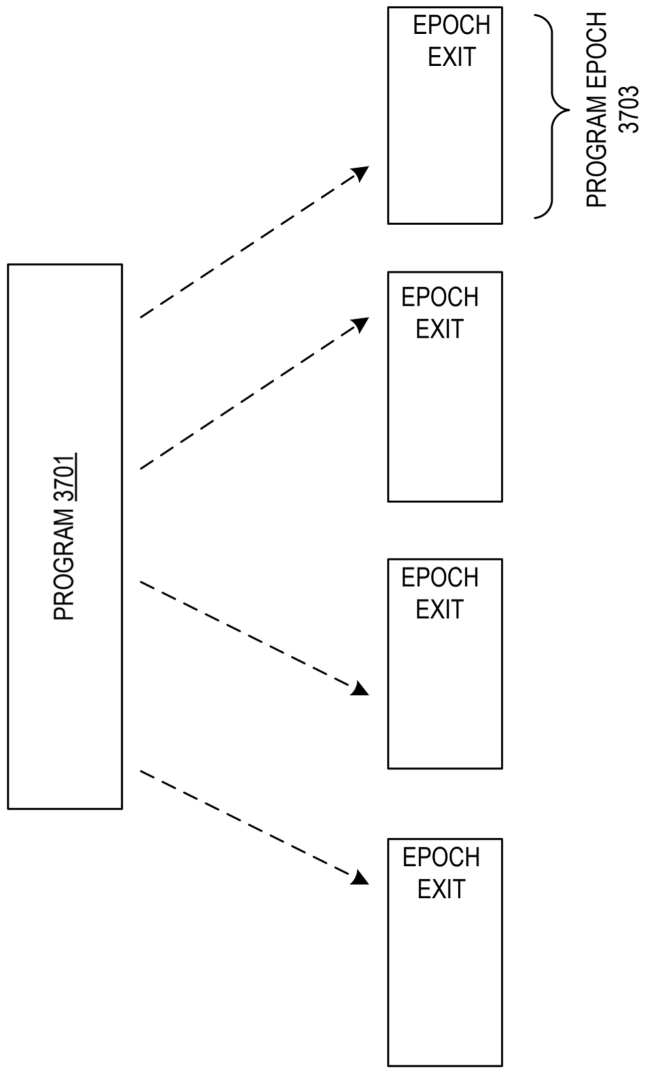
PROGRAM 3701
EPOCH EXIT
EPOCH EXIT
EPOCH EXIT
EPOCH EXIT
PROGRAM EPOCH 3703

FIG. 37

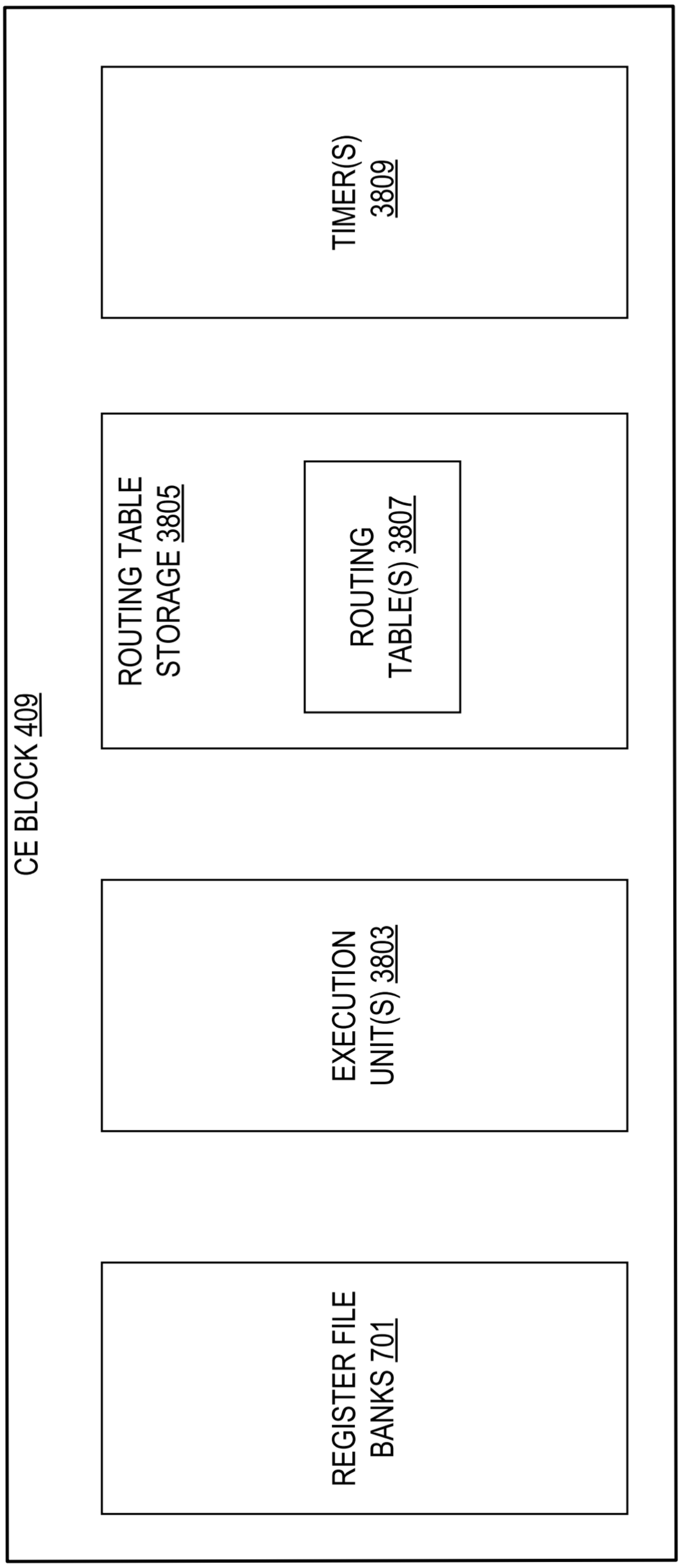
CE BLOCK 409
TIMER(S) 3809
ROUTING TABLE STORAGE 3805
ROUTING TABLE(S) 3807
EXECUTION UNIT(S) 3803
REGISTER FILE BANKS 701

FIG. 38

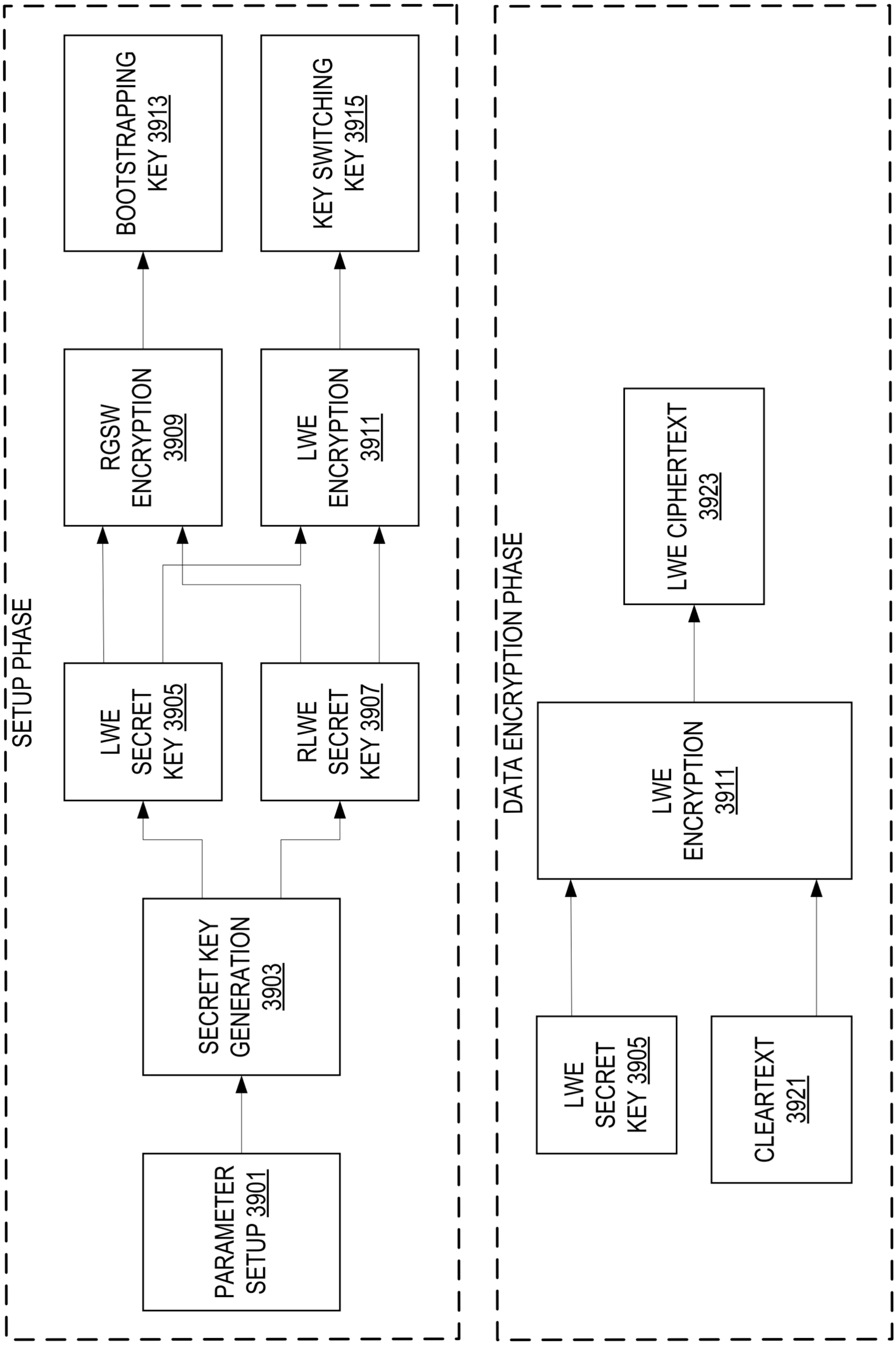
SETUP PHASE
PARAMETER SETUP 3901
SECRET KEY GENERATION 3903
LWE SECRET KEY 3905
RLWE SECRET KEY 3907
RGSW ENCRYPTION 3909
LWE ENCRYPTION 3911
BOOTSTRAPPING KEY 3913
KEY SWITCHING KEY 3915
DATA ENCRYPTION PHASE
LWE SECRET KEY 3905
CLEARTEXT 3921
LWE ENCRYPTION 3911
LWE CIPHERTEXT 3923

FIG. 39

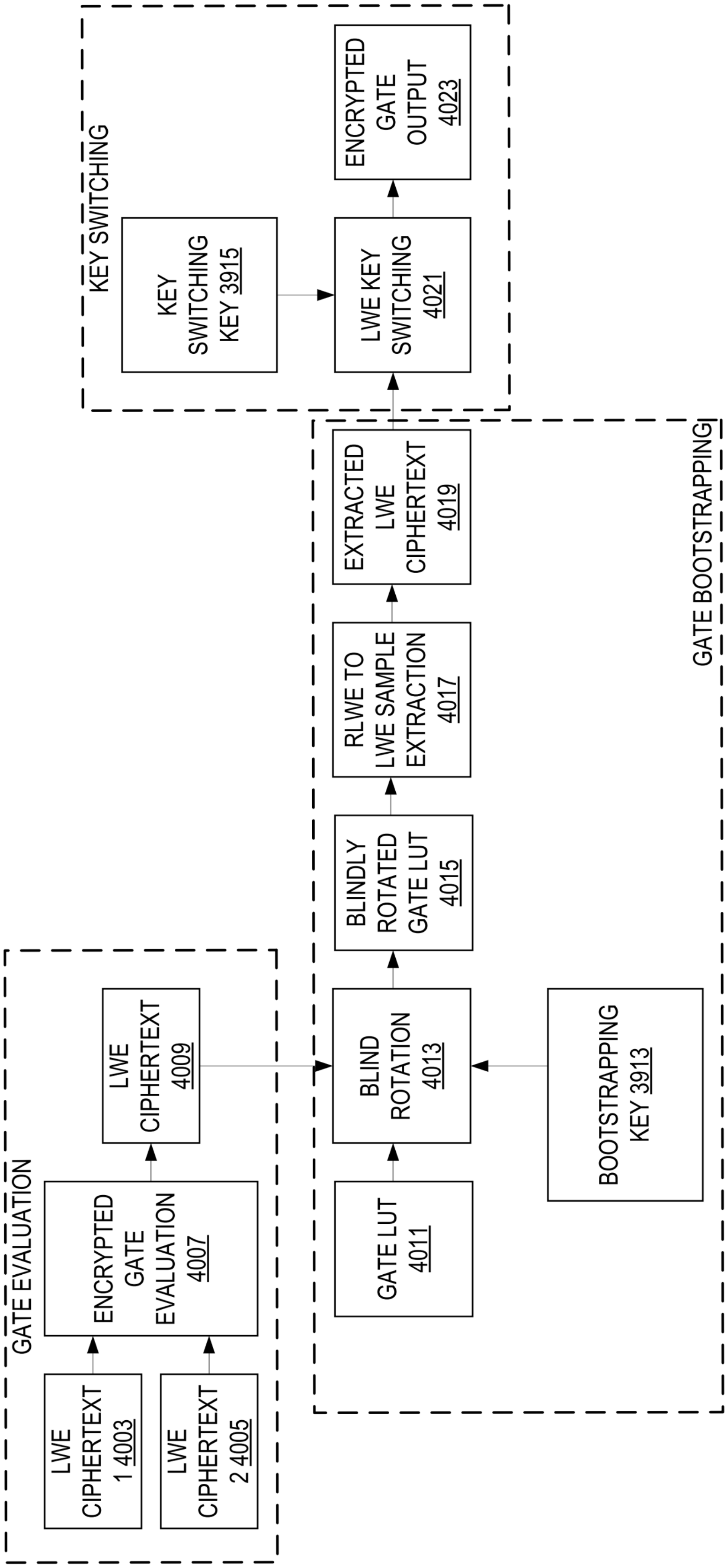
GATE EVALUATION
LWE CIPHERTEXT 1 4003
LWE CIPHERTEXT 2 4005
ENCRYPTED GATE EVALUATION 4007
LWE CIPHERTEXT 4009
GATE BOOTSTRAPPING
GATE LUT 4011
BOOTSTRAPPING KEY 3913
BLIND ROTATION 4013
BLINDLY ROTATED GATE LUT 4015
RLWE TO LWE SAMPLE EXTRACTION 4017
EXTRACTED LWE CIPHERTEXT 4019
KEY SWITCHING
KEY SWITCHING KEY 3915
LWE KEY SWITCHING 4021
ENCRYPTED GATE OUTPUT 4023

FIG. 40

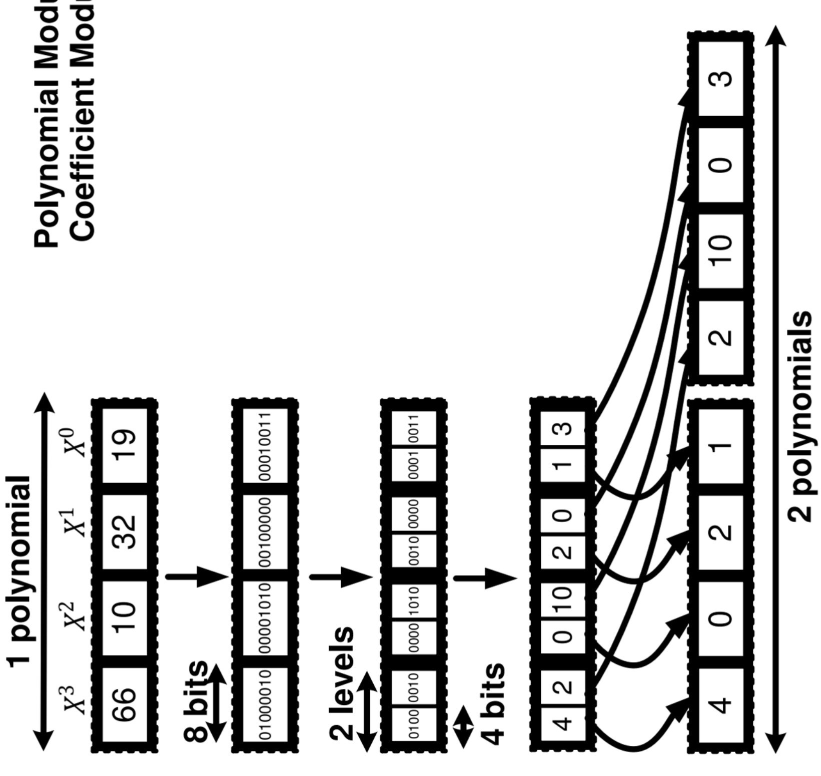


FIG. 41(A)

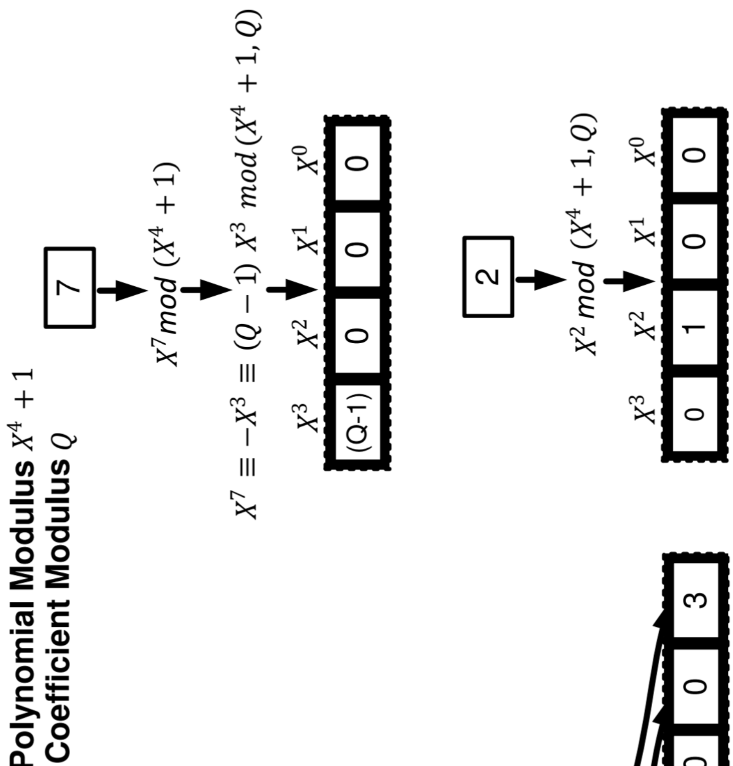


FIG. 41(B)

**Polynomial Construction**

| Instruction | Operand 1 | Operand 2 | Operand 3 | Operand 4 | Operand 5 | Operand 6 |
|---|---|---|---|---|---|---|
| **pconstruct** | **res** | **dest_top** | **dst_tile_num** | **dst_bf_num** | **is_chunk** | **sign** |

***Table:*** **pconstruct**

| **Name** | **pconstruct** | |
|---|---|---|
| **Description** | Constructing a monomial (a polynomial with only one non-zero coefficient) based on the instruction fields that specify whether the current chunk of the polynomial should have a non-zero value (based on **is_chunk**), whether the current tile is specified (based on **dst_tile_num**), whether the current butterfly is specified (based on **dst_bf_num**), and whether the value of the non-zero coefficient should be +1 or -1 (based on **sign**).and storing it at a new address (based on **dest_top**). | |
| **DependsOn** | Instruction Encodings | |
| **Mnemonic** | **pconstruct** | |
| **Opcode** | 32 | |
| **Operand** | **Type** | **Description** |
| opcode | opcode | Common opcode field |
| res | res_idx | Which residue info to use for modular reduction |
| dest_top | rf_addr | Destination address of the result |
| dst_tile_num | tileid | Which tile should have the non-zero coefficient (each tile in the compute engine has a unique tileid) |
| dst_bf_num | bfid | Which butterfly should compute the non-zero coefficient (each butterfly within a tile has a unique bfid) |
| is_chunk | Boolean | Whether the current polynomial chunk (each polynomial is constructed in a chunk-by-chunk fashion, e.g., operates on an 8K-dimensional chunk at once) has a non-zero coefficient |
| sign | Boolean | Whether the non-zero coefficient is +1 or -1 |

**FIG. 42**

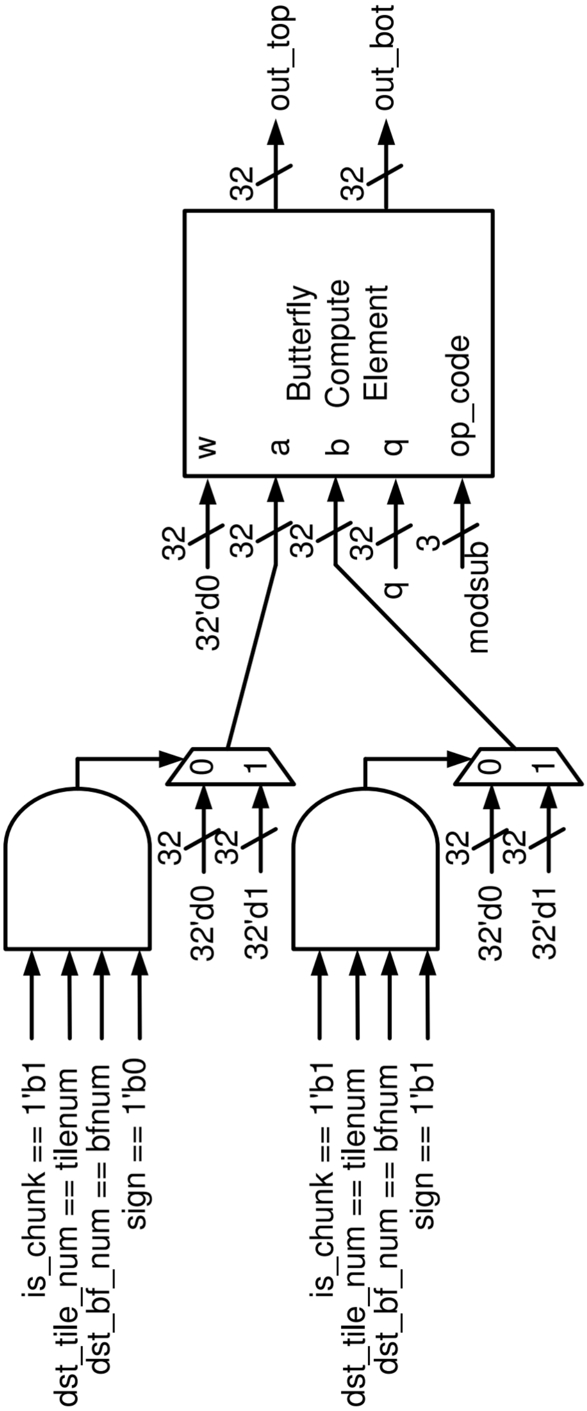
is_chunk == 1'b1
dst_tile_num == tilenum
dst_bf_num == bfnum
sign == 1'b0
32'd0
32'd1
is_chunk == 1'b1
dst_tile_num == tilenum
dst_bf_num == bfnum
sign == 1'b1
32'd0
32'd1
0
1
0
1
32
32
32
32
32'd0
q
modsub
32
32
32
32
3
w
a
b
q
op_code
Butterfly
Compute
Element
32
32
out_top
out_bot

FIG. 43

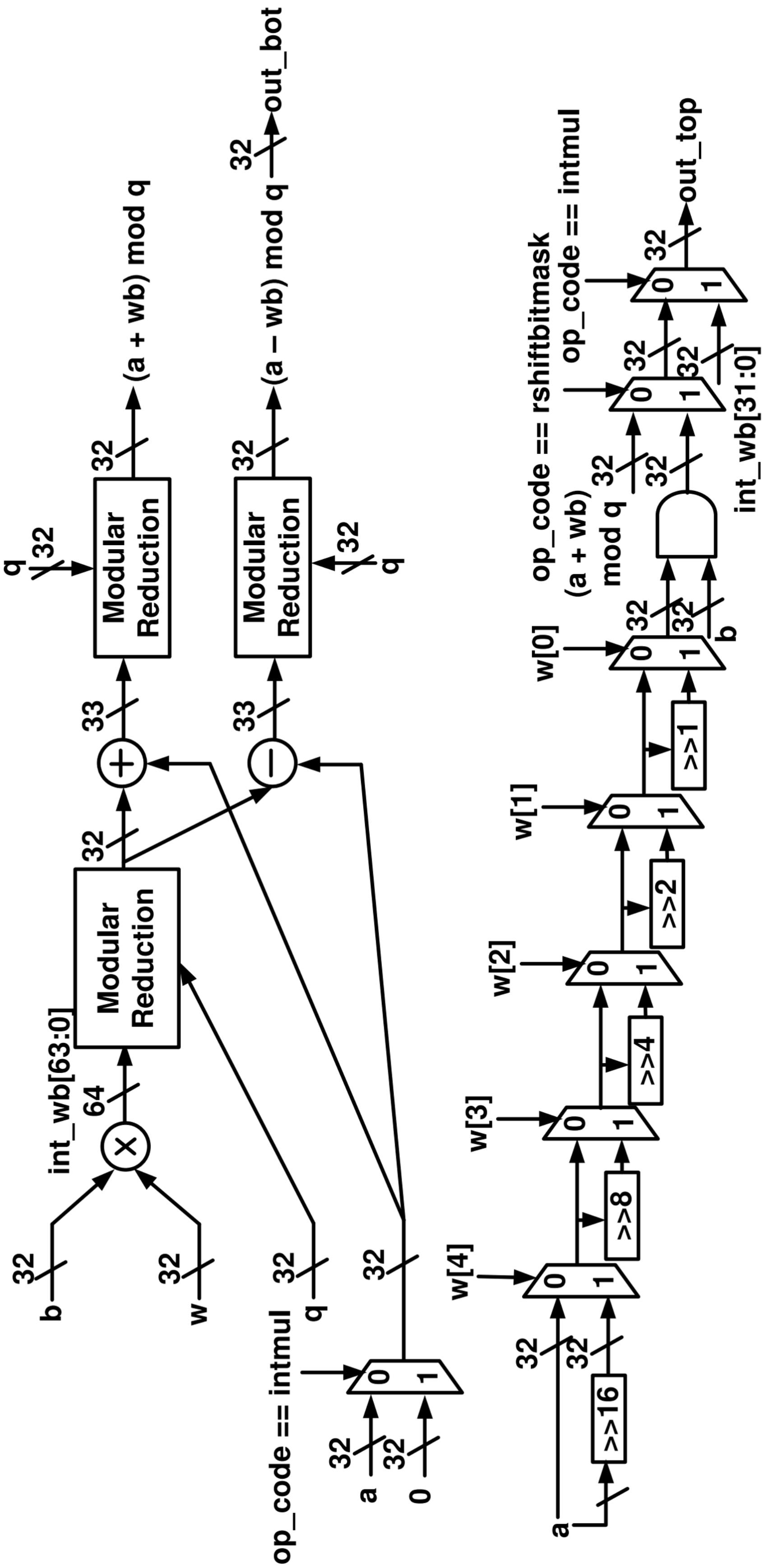
b
w
q
a
0
op_code == intmul
int_wb[63:0]
64
Modular Reduction
Modular Reduction
Modular Reduction
q
32
33
(a + wb) mod q
(a – wb) mod q
out_bot
a
>>16
>>8
>>4
>>2
>>1
w[4]
w[3]
w[2]
w[1]
w[0]
b
(a + wb) mod q
int_wb[31:0]
op_code == rshiftbitmask
op_code == intmul
out_top
0
1

FIG. 44

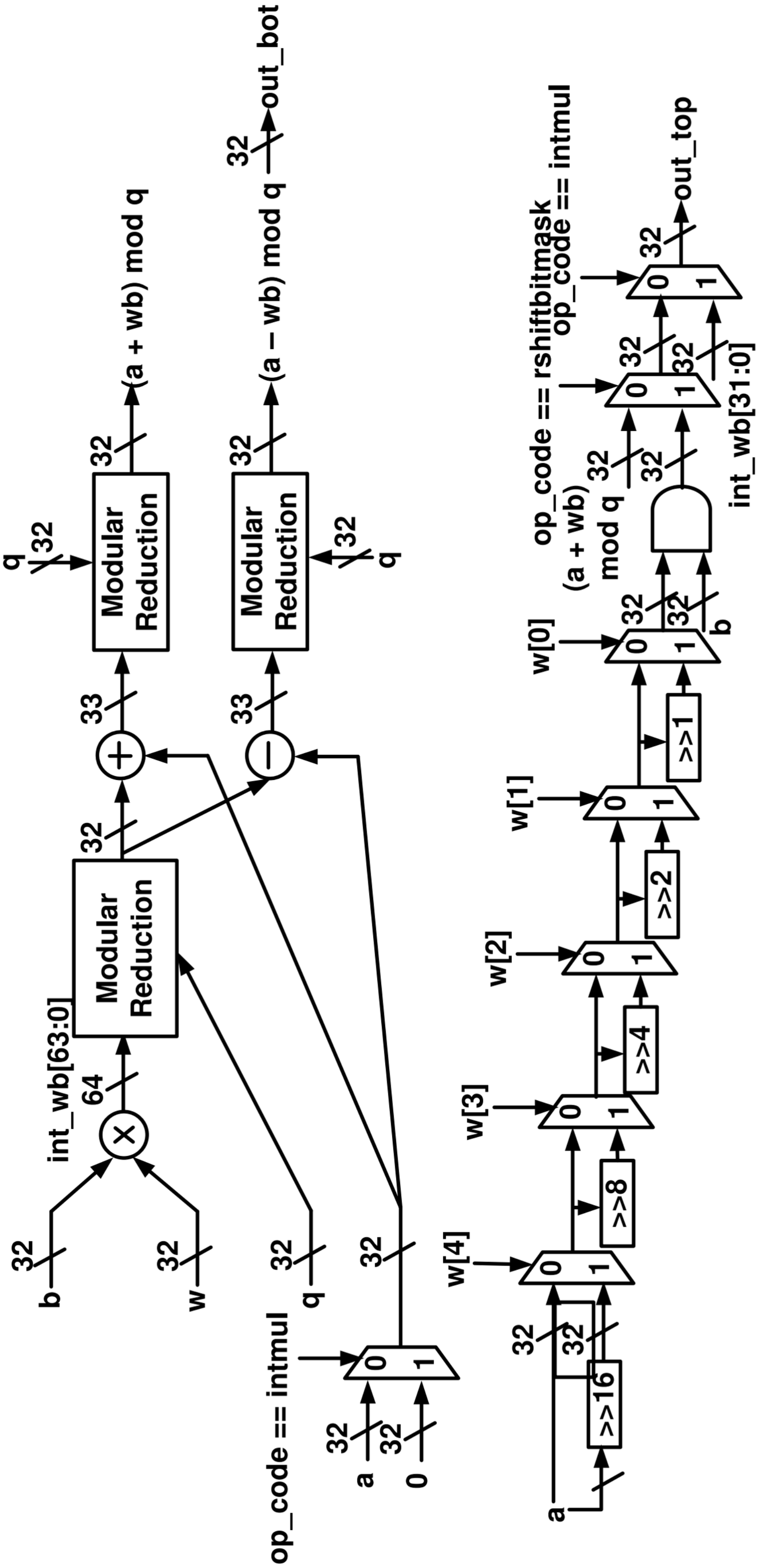
b
32
w
32
int_wb[63:0]
64
Modular Reduction
q
32
Modular Reduction
q
32
33
(a + wb) mod q
Modular Reduction
q
32
33
(a – wb) mod q
out_bot
op_code == intmul
a
0
0
1
op_code == rshiftbitmask
op_code == intmul
(a + wb) mod q
w[0]
w[1]
w[2]
w[3]
w[4]
>>1
>>2
>>4
>>8
>>16
b
int_wb[31:0]
out_top

FIG. 45

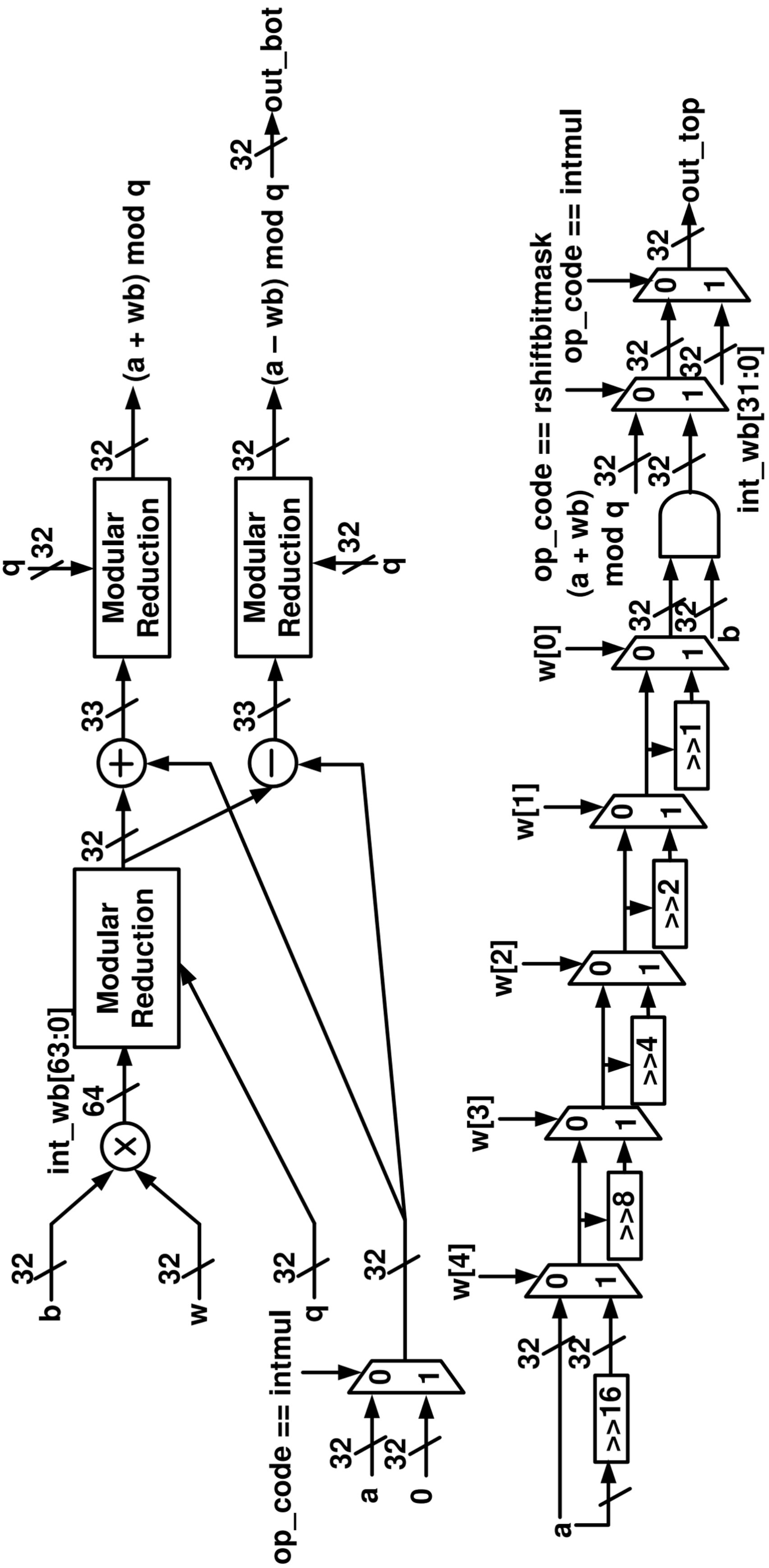
b
w
q
a
0
op_code == intmul
int_wb[63:0]
Modular Reduction
(a + wb) mod q
(a – wb) mod q
out_bot
w[0]
w[1]
w[2]
w[3]
w[4]
>>16
>>8
>>4
>>2
>>1
op_code == rshiftbitmask
op_code == intmul
(a + wb) mod q
int_wb[31:0]
out_top

FIG. 46

**Polynomial Integer Multiplication (entry-wise)**

| Instruction | Operand 1 | Operand 2 | Operand 3 |
|---|---|---|---|
| **pintmul** | **a** | **c** | **b** |

***Table:* pintmul**

| | | |
|---|---|---|
| **Name** | **pintmul** | |
| **Description** | Entry-wise integer multiplication of two polynomials modulo $2^{32}$ in the RF and storing of the result at a new address | |
| **DependsOn** | Instruction Encodings | |
| **Mnemonic** | **pintmul** | |
| **Opcode** | 36 | |
| **Operand** | **Type** | **Description** |
| opcode | opcode | Common opcode field |
| a | rf_addr | Memory address of the left operand |
| c | rf_addr | Destination address of the result |
| b | rf_addr | Memory address of the right operand |

FIG. 47

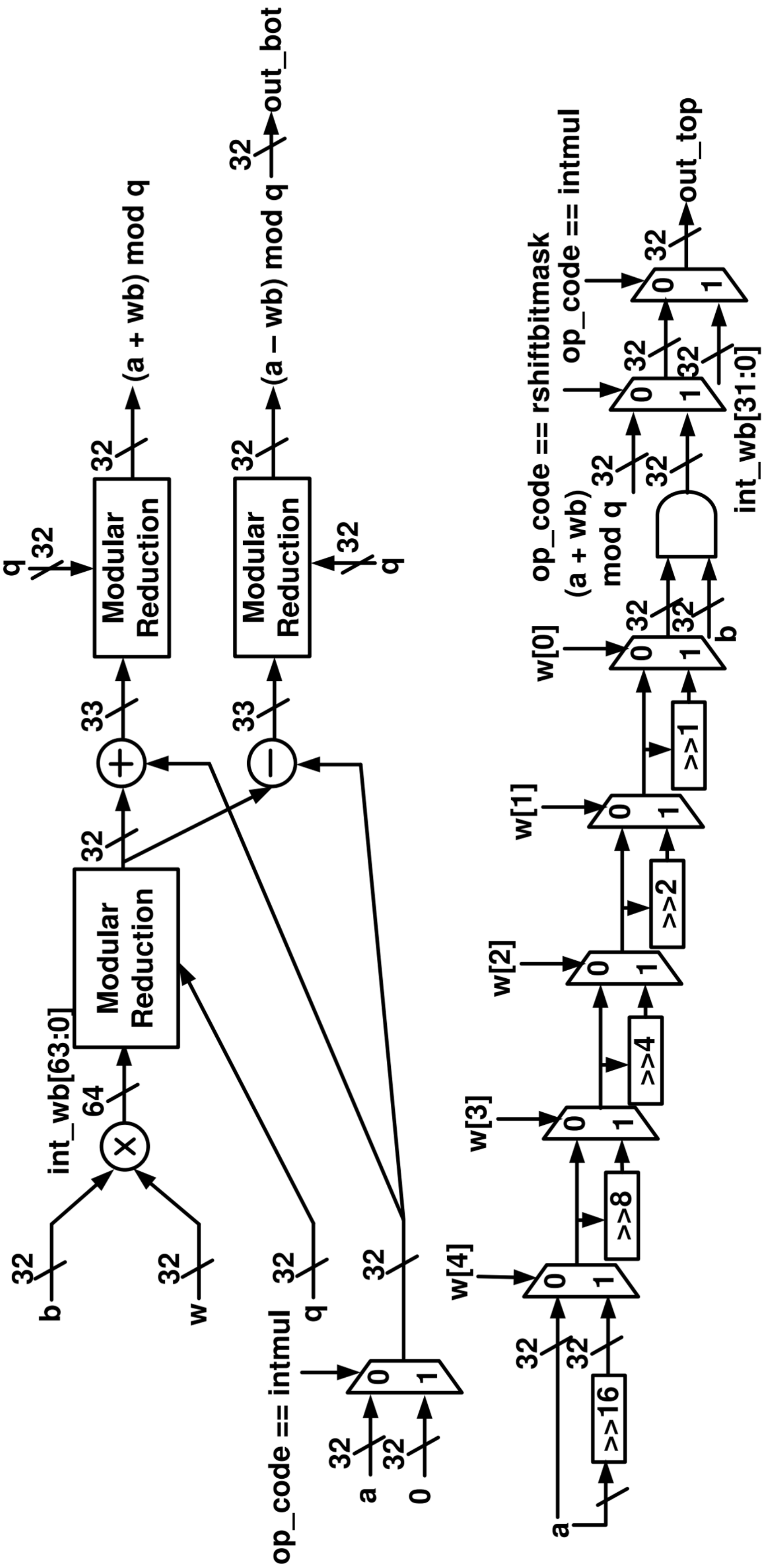
b
w
32
int_wb[63:0]
64
Modular Reduction
q
32
33
Modular Reduction
(a + wb) mod q
(a – wb) mod q
out_bot
op_code == intmul
a
0
0
1
w[4]
w[3]
w[2]
w[1]
w[0]
>>16
>>8
>>4
>>2
>>1
(a + wb)
mod q
op_code == rshiftbitmask
op_code == intmul
int_wb[31:0]
out_top

FIG. 48

**Polynomial Right-Shifting and Bit-Masking (entry-wise)**

| Instruction | Operand 1 | Operand 2 | Operand 3 | Operand 4 |
|---|---|---|---|---|
| **prshiftbitmask** | **w_shift** | **a** | **c** | **imm** |

*Table:* **prshiftbitmask**

| | | |
|---|---|---|
| **Name** | **prshiftbitmask** | |
| **Description** | Entry-wise right-shifting and bit-masking of a polynomial in the RF and storing of the result at a new address | |
| **DependsOn** | Instruction Encodings | |
| **Mnemonic** | **prshiftbitmask** | |
| **Opcode** | 33 | |
| **Operand** | **Type** | **Description** |
| opcode | opcode | Common opcode field |
| w_shift | shiftamount | A 5-bit value indicating the amount of right shift (by 0 to up to 31 bits) |
| a | rf_addr | Source address of the polynomial |
| c | rf_addr | Destination address of the result |
| imm | imm32 | 32-bit immediate value encoding the mask value |

**FIG. 49**

**Storing 1Kbit Polynomial Chunk in a Shadow Register**

| **Instruction** | **Operand 1** |
|---|---|
| **mstorecapture** | **Chunk_Sel_1K** |

***Table:* mstorecapture**

| **Name** | **mstorecapture** | |
|---|---|---|
| **Description** | Storing a 1Kbit polynomial chunk from a 4Kbit register at the interface unit | |
| **DependsOn** | Instruction Encodings | |
| **Mnemonic** | **mstorecapture** | |
| **Opcode** | 20 | |
| **Operand** | **Type** | **Description** |
| opcode | opcode | Common opcode field |
| Chunk_Sel_1K | chunkid | A 2-bit value indicating which 1Kbit chunk of a 4Kbit mstore register (mstore register stores a 4Kbit data sent from scratchpad to the interface) |

**FIG. 50**

**Generating pconstruct Instructions**

| Instruction | Operand 1 | Operand 2 | Operand 3 | Operand 4 |
|---|---|---|---|---|
| **pconstgen** | **mod_index** | **dst_addr0** | **dst_addr1** | **IsBitRev** |

***Table:* mstorecapture**

| | | |
|---|---|---|
| **Name** | **pconstgen** | |
| **Description** | Creating an xinst bundle containing 2 polynomial construction (pconstruct) instructions and 14 nop instructions (which will create two chunks of the polynomial upon execution at the compute engine) | |
| **DependsOn** | Instruction Encodings | |
| **Mnemonic** | **pconstgen** | |
| **Opcode** | 21 | |
| **Operand** | **Type** | **Description** |
| opcode | opcode | Common opcode field |
| mod_idx | res_idx | Which residue info to use for modular reduction in **pconstruct** instructions |
| dst_addr0 | rf_addr | Destination address of the result of the first **pconstruct** instruction |
| dst_addr1 | rf_addr | Destination address of the result of the second **pconstruct** instruction |
| IsBitRev | Boolean | Whether the polynomial to be generated should be in bit reversal permutation order |

FIG. 51

| **MNEMONIC** | **63** | **62:41** | **40** | **39** | **38:35** | **34:30** | **29:21** | **20:12** | **11** | **10:6** | **5:0** |
|---|---|---|---|---|---|---|---|---|---|---|---|
| PCONSTRUCT | UNUSED | | SIGN | IS_CHUNK | DST_BF_NUM | DST_TILE_NUM | DEST_TOP (RF_addr) | UNUSED | RES (RES_IDX) | | OPCODE |
| PRSHIFTBITMASK | UNUSED | IMM (IMM32) | | | | | C (RF_addr) | A (RF_addr) | UNUSED | W_SHIFT | OPCODE |
| PINTMUL | UNUSED | | | | B (RF_addr) | | C (RF_addr) | A (RF_addr) | UNUSED | | OPCODE |

| **MNEMONIC** | **63:33** | **32** | **31:23** | **22:14** | **13:8** | **7:6** | **5:0** |
|---|---|---|---|---|---|---|---|
| MSTORECAPTURE | UNUSED | | | | | CHUNK_SEL_1K | OPCODE |
| PCONSTRUCTGEN | UNUSED | ISBITREV | DST_ADDR1 | DST_ADDR0 | MOD_INDEX | UNUSED | OPCODE |

FIG. 52

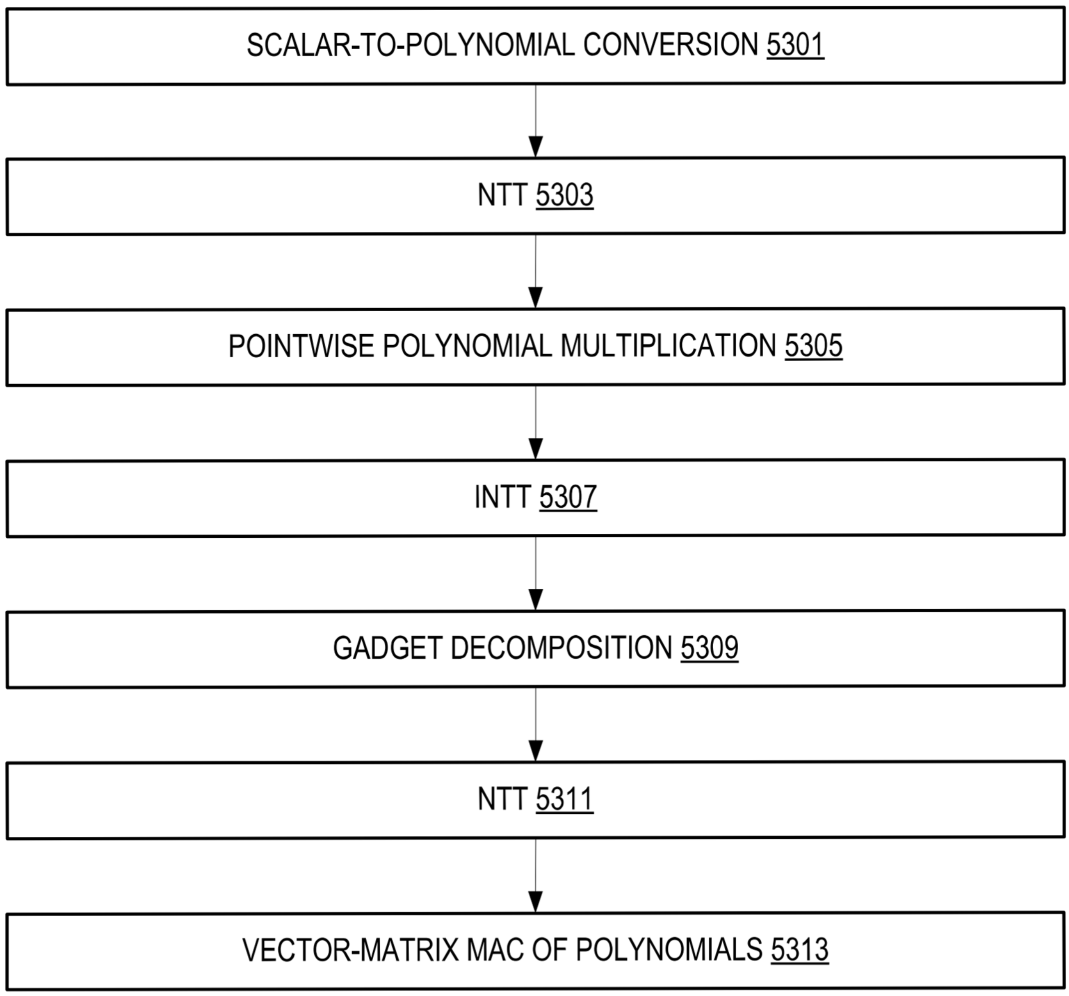
SCALAR-TO-POLYNOMIAL CONVERSION 5301
NTT 5303
POINTWISE POLYNOMIAL MULTIPLICATION 5305
INTT 5307
GADGET DECOMPOSITION 5309
NTT 5311
VECTOR-MATRIX MAC OF POLYNOMIALS 5313

FIG. 53

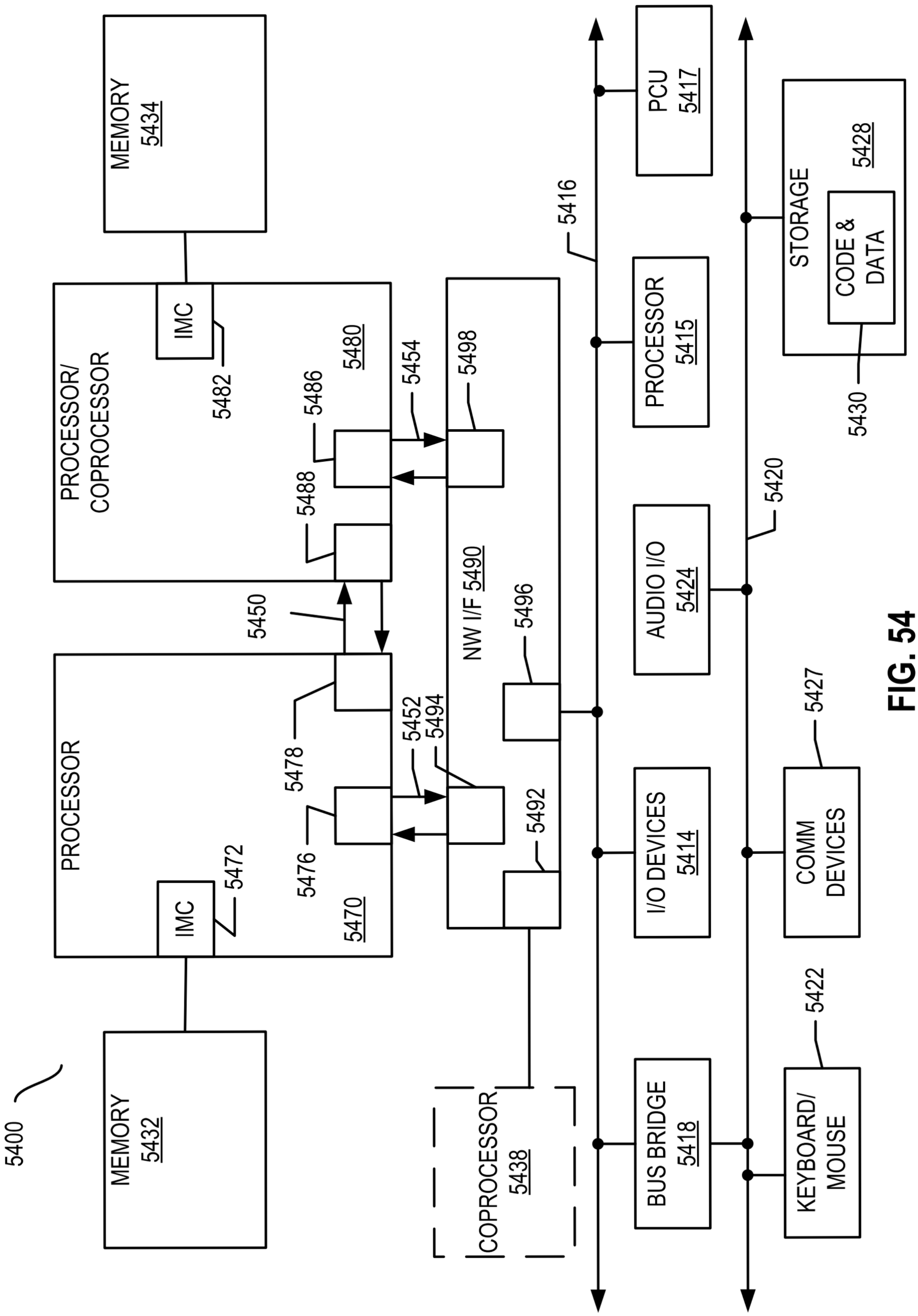
5400
MEMORY
5432
PROCESSOR
IMC
5472
5476
5478
5470
5450
PROCESSOR/
COPROCESSOR
IMC
5482
5486
5488
5480
MEMORY
5434
5454
5498
5452
5494
NW I/F 5490
5496
5492
COPROCESSOR
5438
5416
PCU
5417
PROCESSOR
5415
AUDIO I/O
5424
I/O DEVICES
5414
BUS BRIDGE
5418
5420
STORAGE
5428
CODE &
DATA
5430
5427
COMM
DEVICES
5422
KEYBOARD/
MOUSE

FIG. 54

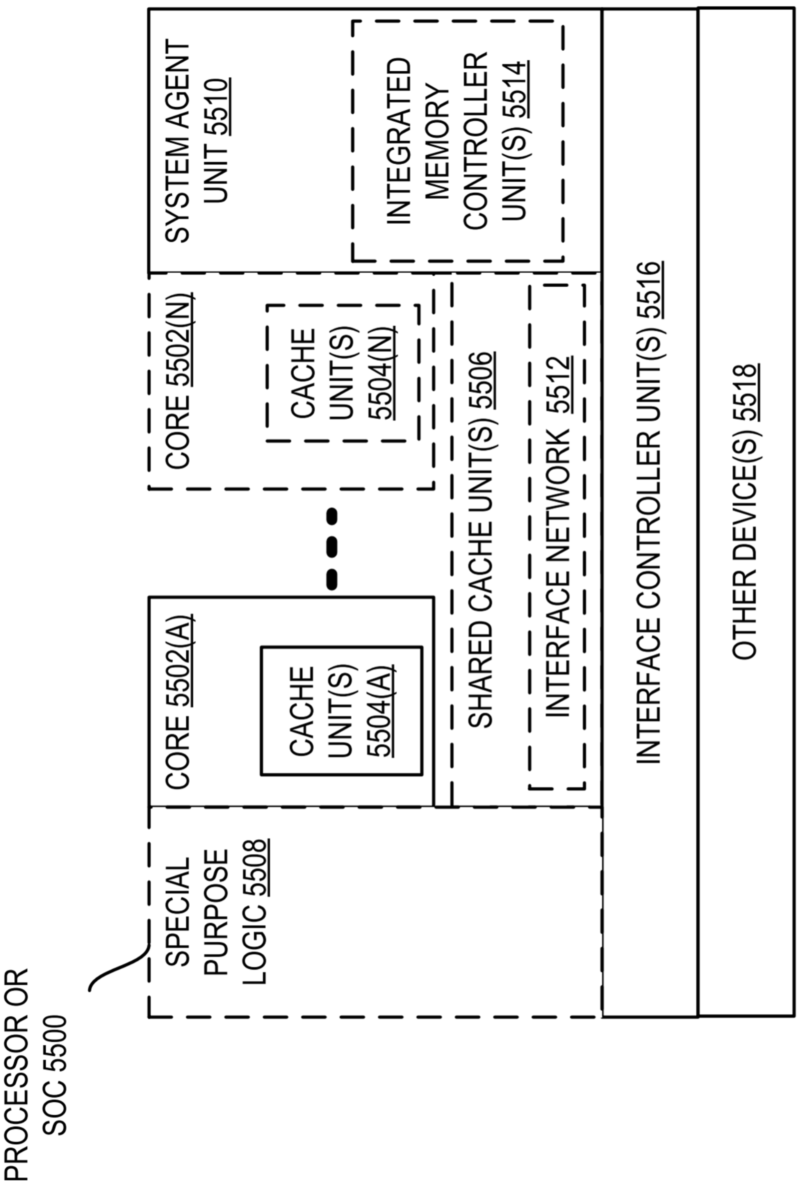
PROCESSOR OR SOC 5500
SPECIAL PURPOSE LOGIC 5508
CORE 5502(A)
CACHE UNIT(S) 5504(A)
CORE 5502(N)
CACHE UNIT(S) 5504(N)
SHARED CACHE UNIT(S) 5506
INTERFACE NETWORK 5512
SYSTEM AGENT UNIT 5510
INTEGRATED MEMORY CONTROLLER UNIT(S) 5514
INTERFACE CONTROLLER UNIT(S) 5516
OTHER DEVICE(S) 5518

FIG. 55

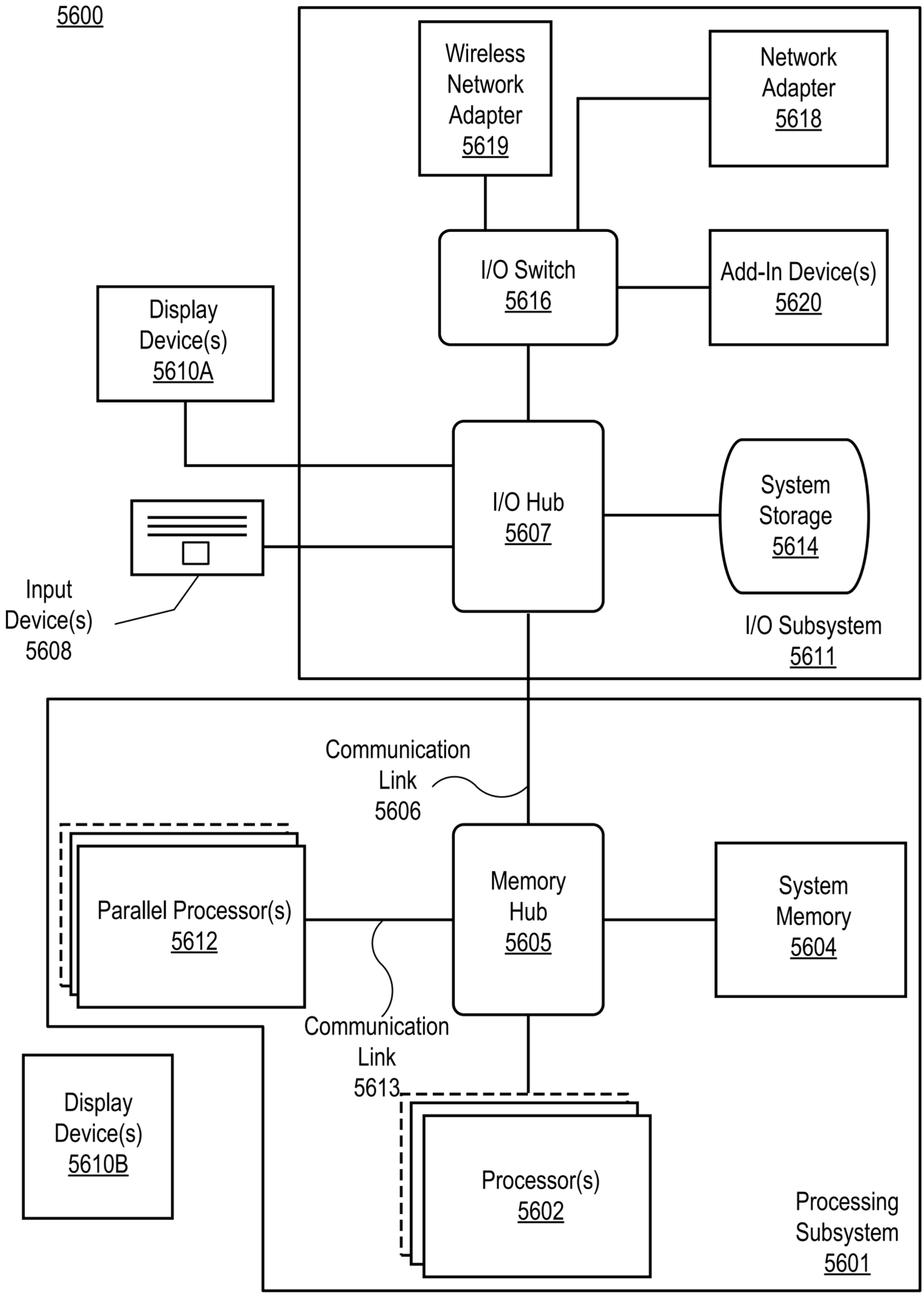
5600
Wireless Network Adapter 5619
Network Adapter 5618
I/O Switch 5616
Add-In Device(s) 5620
Display Device(s) 5610A
I/O Hub 5607
System Storage 5614
Input Device(s) 5608
I/O Subsystem 5611
Communication Link 5606
Parallel Processor(s) 5612
Memory Hub 5605
System Memory 5604
Communication Link 5613
Display Device(s) 5610B
Processor(s) 5602
Processing Subsystem 5601

FIG. 56

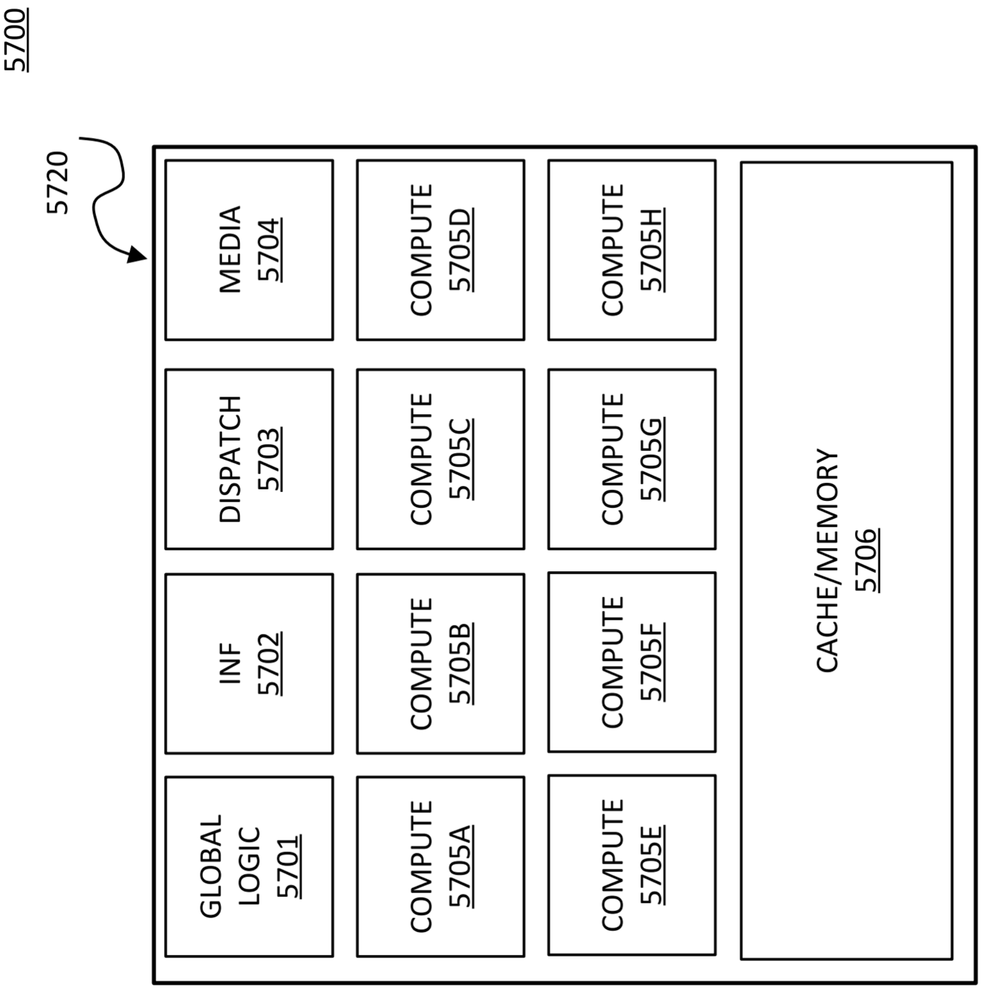
5700
5720
GLOBAL LOGIC 5701
INF 5702
DISPATCH 5703
MEDIA 5704
COMPUTE 5705A
COMPUTE 5705B
COMPUTE 5705C
COMPUTE 5705D
COMPUTE 5705E
COMPUTE 5705F
COMPUTE 5705G
COMPUTE 5705H
CACHE/MEMORY 5706

FIG. 57

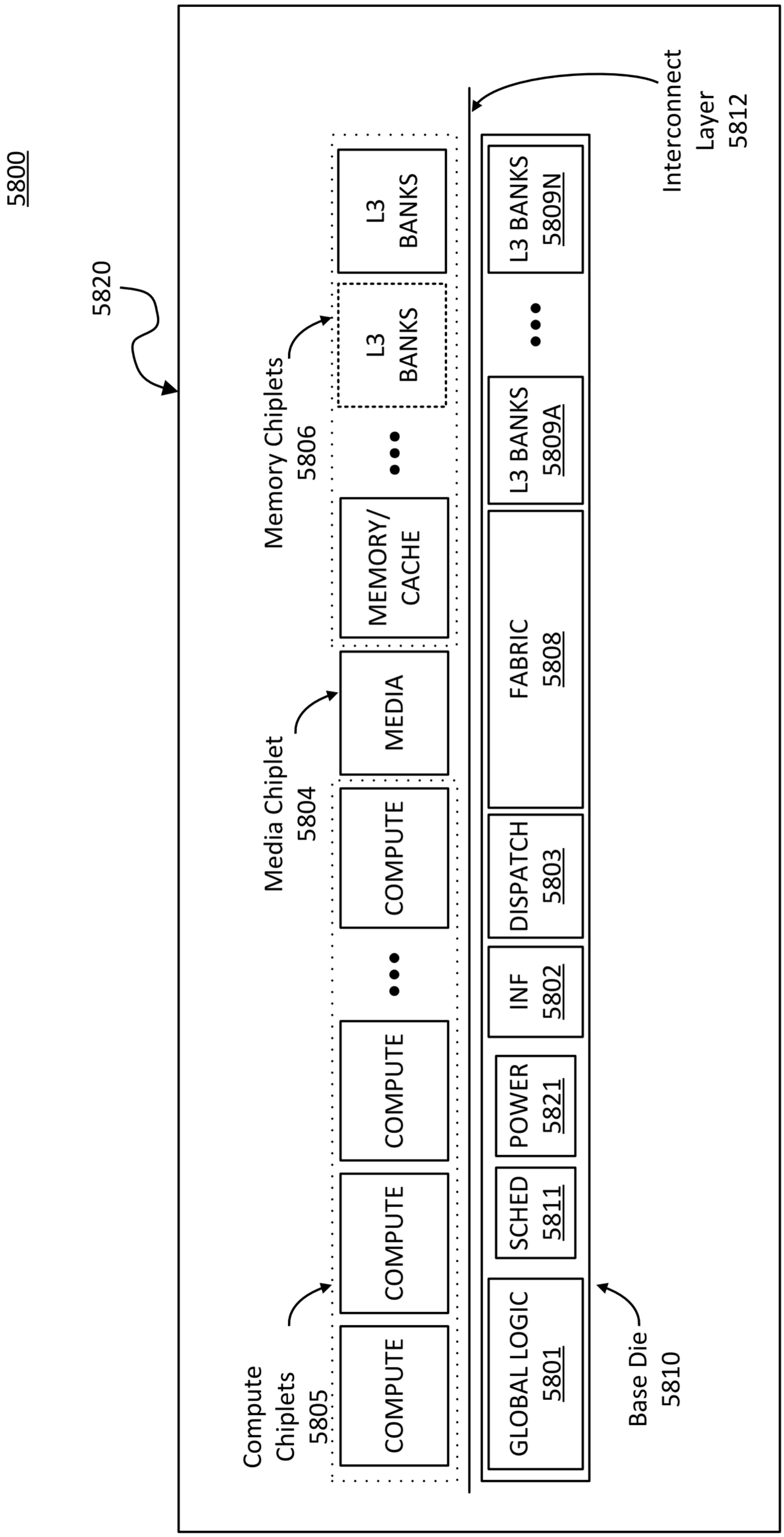
5800
5820
Compute Chiplets 5805
COMPUTE
COMPUTE
COMPUTE
COMPUTE
Media Chiplet 5804
MEDIA
Memory Chiplets 5806
MEMORY/ CACHE
L3 BANKS
L3 BANKS
Interconnect Layer 5812
GLOBAL LOGIC 5801
SCHED 5811
POWER 5821
INF 5802
DISPATCH 5803
FABRIC 5808
L3 BANKS 5809A
L3 BANKS 5809N
Base Die 5810

FIG. 58A

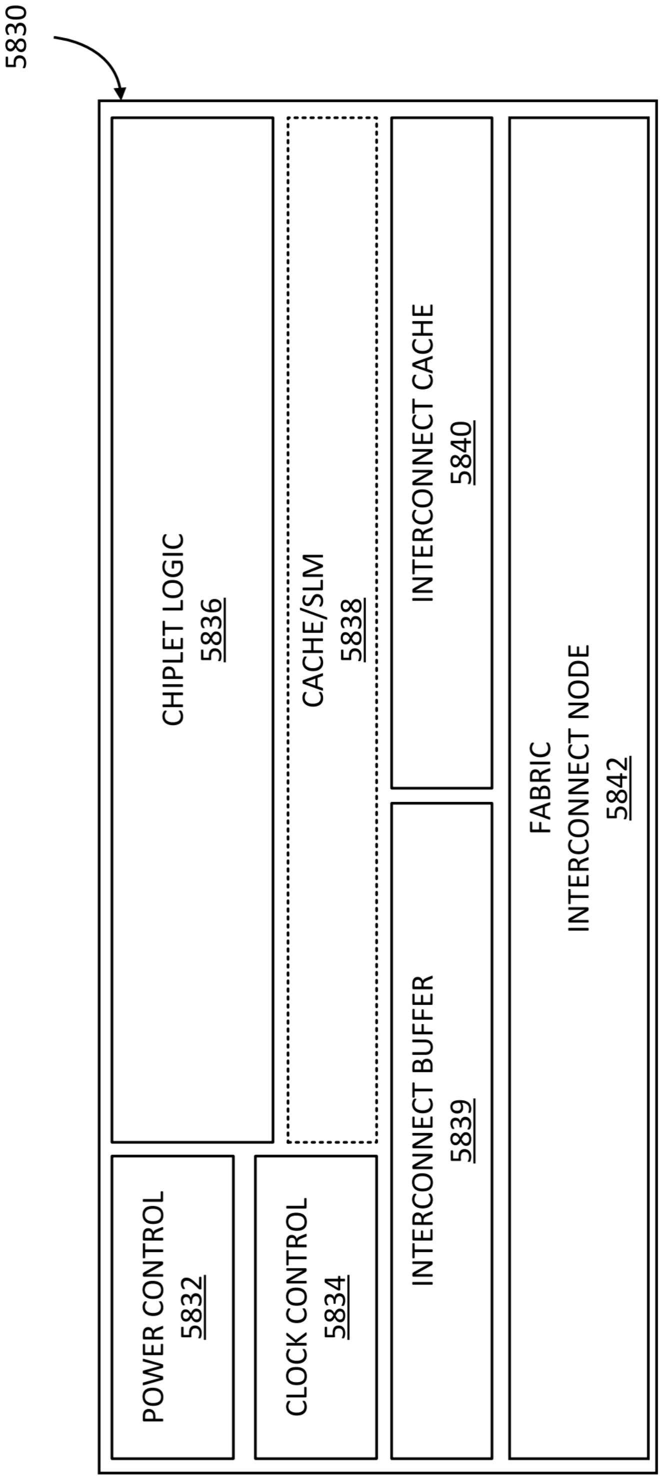
5830
POWER CONTROL
5832
CLOCK CONTROL
5834
CHIPLET LOGIC
5836
CACHE/SLM
5838
INTERCONNECT BUFFER
5839
INTERCONNECT CACHE
5840
FABRIC
INTERCONNECT NODE
5842

FIG. 58B

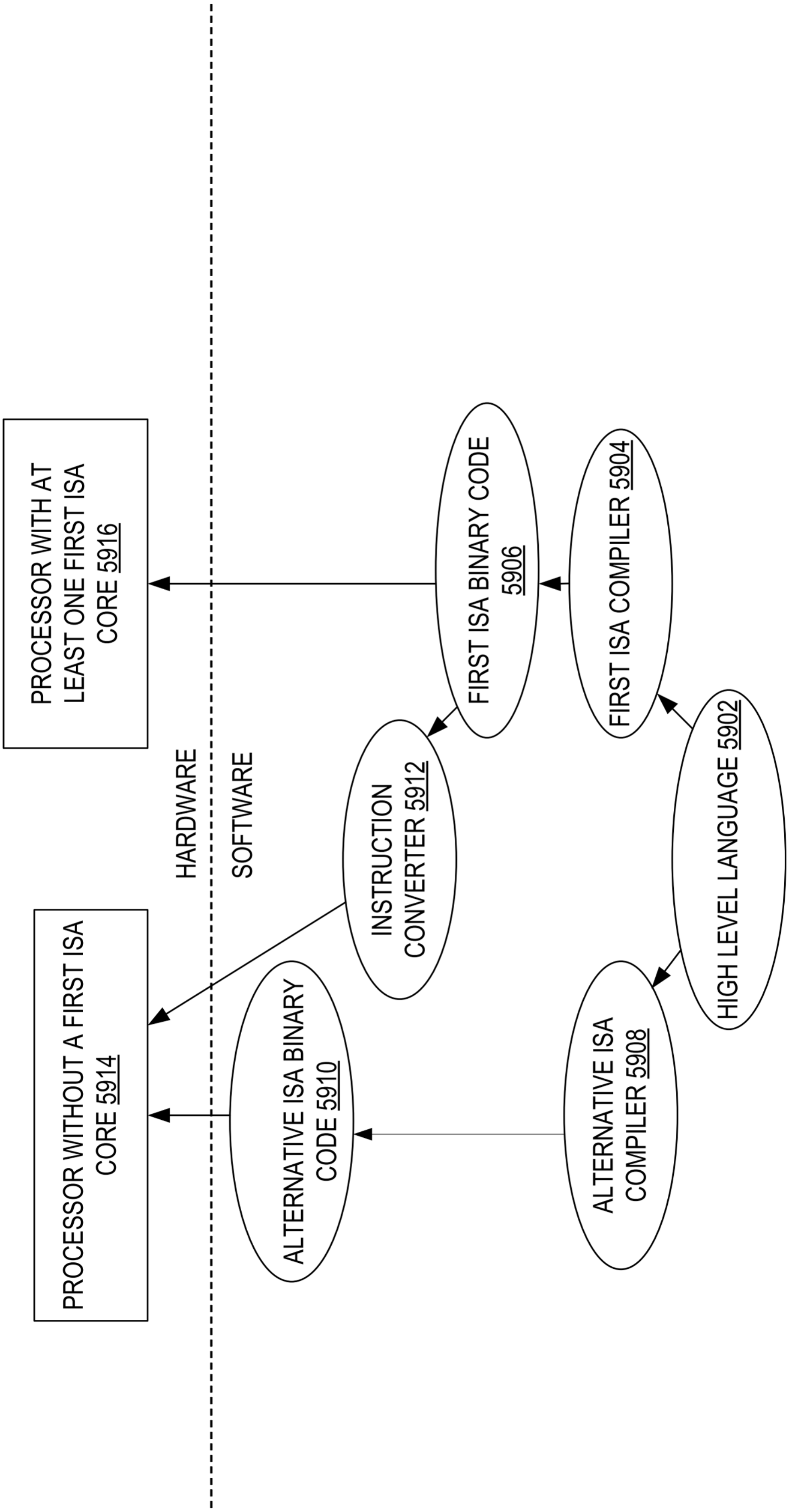
PROCESSOR WITH AT LEAST ONE FIRST ISA CORE 5916
PROCESSOR WITHOUT A FIRST ISA CORE 5914
HARDWARE
SOFTWARE
FIRST ISA BINARY CODE 5906
INSTRUCTION CONVERTER 5912
ALTERNATIVE ISA BINARY CODE 5910
FIRST ISA COMPILER 5904
HIGH LEVEL LANGUAGE 5902
ALTERNATIVE ISA COMPILER 5908

FIG. 59

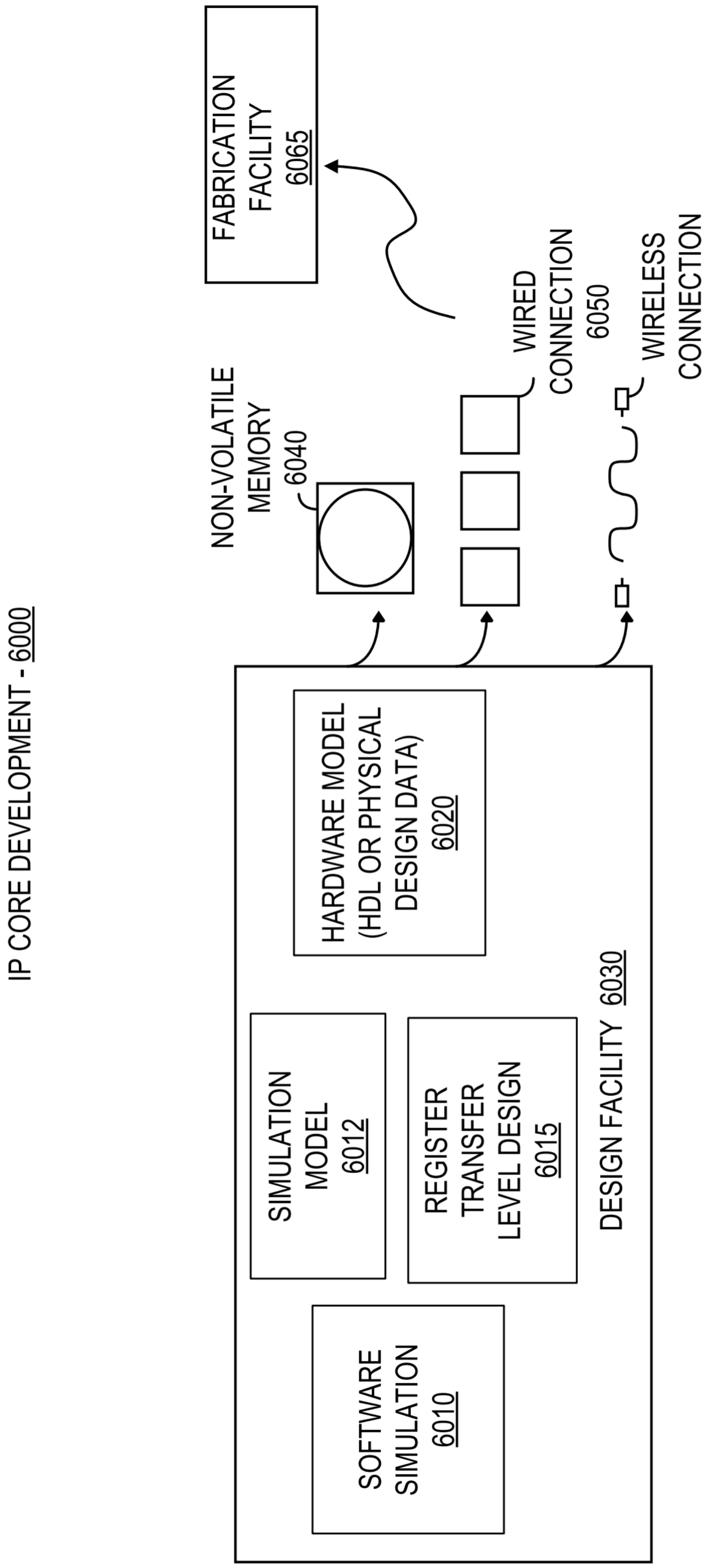
IP CORE DEVELOPMENT - 6000
SOFTWARE SIMULATION 6010
SIMULATION MODEL 6012
REGISTER TRANSFER LEVEL DESIGN 6015
HARDWARE MODEL (HDL OR PHYSICAL DESIGN DATA) 6020
DESIGN FACILITY 6030
NON-VOLATILE MEMORY 6040
WIRED CONNECTION 6050
WIRELESS CONNECTION 6060
FABRICATION FACILITY 6065

FIG. 60